(19) **Europäisches Patentamt**
**European Patent Office**
**Office européen des brevets**

(11) **EP 4 534 590 A1**

(12) **EUROPEAN PATENT APPLICATION**
published in accordance with Art. 153(4) EPC

(43) Date of publication:
**09.04.2025   Bulletin 2025/15**

(21) Application number: **23815920.6**

(22) Date of filing: **25.05.2023**

(51) International Patent Classification (IPC):
**C08J 9/32** (2006.01)      **C08L 21/00** (2006.01)

(52) Cooperative Patent Classification (CPC):
**C08J 9/32; C08L 21/00**

(86) International application number:
**PCT/JP2023/019464**

(87) International publication number:
**WO 2023/234162 (07.12.2023 Gazette 2023/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **30.05.2022   JP 2022087499**

(71) Applicant: **Zeon Corporation
Tokyo 100-8246 (JP)**

(72) Inventors:
- **WATANABE, Masashi
  Tokyo 100-8246 (JP)**
- **KATADA, Arinobu
  Tokyo 100-8246 (JP)**

(74) Representative: **Kraus & Lederer PartGmbB
Thomas-Wimmer-Ring 15
80539 München (DE)**

(54) **ELASTOMER COMPOSITION CONTAINING HOLLOW PARTICLES, AND METHOD FOR PRODUCING SAME**

(57)    Provided are a hollow particle-containing elastomer composition in which high dimensional stability is retained in the molding step, and properties/functions of the hollow particles are less likely to deteriorate; and a method for production thereof in which the hollow particles are less likely to collapse in the kneading step, the residual void ratio is stable, and properties/functions of the hollow particles are less likely to deteriorate. The provided elastomer composition comprises a base material and hollow particles comprising a specific resin, and has a storage elastic modulus G' at 60°C of 2.5 MPa or less; and also has a residual void ratio of 80% or more which is measured by a predetermined method using a sheet-shaped test piece. The provided method comprises steps of: preparing a raw material mixture which comprises a base material and hollow particles and has a storage elastic modulus G' at 60°C of 2.5 MPa or less; preliminarily kneading the raw material mixture by a closed-type kneader at a temperature at which the storage elastic modulus G' becomes 2.5 MPa or less; finishing kneading the raw material mixture at a temperature at which the storage elastic modulus G' becomes 2.5 MPa or less.

EP 4 534 590 A1

## Description

Technical Field

The disclosure relates to an elastomer composition containing hollow particles, and a method for producing the elastomer composition.

Background Art

Elastomer products are used in various applications in a wide range of fields, such as a shock absorber, a fluid barrier packing and a tube, with a focus on the rubber-like elasticity or flexibility of elastomer materials as typified by rubber. In general, an elastomer composition is prepared by mixing a base material elastomer with necessary components depending on the intended use, and the elastomer composition obtained is kneaded in a melted state, then the base material elastomer is crosslinked while the elastomer composition is molded by a method such as extrusion molding and compression molding, thereby obtaining elastomer products in various kinds of forms, such as mechanical parts, coating films and chip materials for filling.

As a method for reducing the weight of elastomer products, the following method is known: a base material elastomer is mixed with a foaming agent, and the mixture is foamed by heating in a molding step, thereby obtaining a foamed elastomer molded body. For the purpose of providing a rubber composition for vulcanization molding which is capable of being manufactured into a rubber product having good dimensional stability, good surface texture and effectively light weight, Patent Document 1 discloses, as a means to achieve the purpose, a rubber composition for vulcanization molding comprising a base rubber and hollow particles mixed therewith, wherein the base rubber has a specific Mooney viscosity at 100°C and the hollow particles are composed of a thermoplastic resin shell and a thermally vaporizable blowing agent (foaming agent) encapsulated in the resin shell and have a reserved expansion ratio ranging from 20% to 80%.

However, in the method for producing the foamed elastomer molded body by mixing the base material elastomer with the foaming agent, it is difficult to control the size of the pores formed by foaming, and the thus-obtained elastomer product has poor dimensional stability, accordingly. The method of Patent Document 1 aims at obtaining a foamed elastomer molded body with good dimensional stability as a technical object; however, further improvement in dimensional stability is required.

As a method for imparting properties or functions such as weight reduction, heat insulation and opacification by introducing many fine pores in a molded body, it is known to use a molding material obtained by incorporating hollow particles in a base material resin (Patent Documents 2 and 3). In the molding material obtained by incorporating the hollow particles in the base material resin, the hollows of the hollow particles make the pores in the molding material. Accordingly, there is no need to control the size of pores formed by foaming.

Citation List

Patent Documents

    Patent Document 1: Japanese Patent No. 6116787
    Patent Document 2: International Publication No. WO2020/261926
    Patent Document 3: International Publication No. WO2021/112110

Summary

Technical Problem

A molding material obtained by incorporating hollow particles in a base material elastomer, is required to be a material in which the hollow particles are less likely to collapse during molding; the molding material retains high dimensional stability; and the properties or functions imparted by the hollow particles are less likely to deteriorate.

To produce the molding material obtained by incorporating the hollow particles in the base material elastomer, it is required that the hollow particles are less likely to collapse during kneading of a raw material mixture containing the base material elastomer and the hollow particles. Especially, in the case of mixing the base material elastomer and the hollow particles, high-shear kneading such as roll kneading is carried out as finishing kneading. Accordingly, compared to the case of mixing and kneading hollow particles and a base material resin other than an elastomer, high shear force is generated, and the hollow particles are likely to collapse during kneading.

The present disclosure was achieved in light of the above circumstances. An object of the present disclosure is to provide a hollow particle-containing elastomer composition in which the hollow particles are less likely to collapse in a molding step; high dimensional stability is retained; and the properties or functions imparted by the hollow particles are less likely to deteriorate.

Another object of the present disclosure is to provide a method for producing a hollow particle-containing elastomer composition, in which the hollow particles are less likely to collapse in the step of kneading a raw material mixture containing a base material elastomer and the hollow particles; the residual void ratio after kneading is stable; and the properties or functions imparted by the hollow particles are not deteriorated by kneading.

Solution to Problem

According to the present disclosure, there is provide a hollow particle-containing elastomer composition comprising at least a base material elastomer and hollow particles,

wherein the hollow particles have a shell and a hollow portion surrounded by the shell, the shell comprising a resin which is a polymer containing 50 parts by mass or more of a crosslinkable monomer unit in 100 parts by mass of all monomer units;

wherein the hollow particle-containing elastomer composition has a storage elastic modulus G' at 60°C of 2.5 MPa or less, which is obtained by dynamic viscoelasticity measurement; and

wherein the hollow particle-containing elastomer composition has a residual void ratio of 80% or more, which is obtained by forming a sheet-shaped molded body using the composition and measuring the residual void ratio in accordance with the following method:

[method for measuring the residual void ratio of the hollow particle-containing elastomer molded body] a sheet-shaped, hollow particle-containing elastomer molded body is produced by press-molding the hollow particle-containing elastomer composition at a pressure of 1 MPa or less by a hot press machine at 120°C; a specific gravity of the obtained elastomer molded body is measured; and the residual void ratio of the hollow particles in the elastomer molded body is calculated by the following formula (D):

$$\text{residual void ratio (\%)} = \{(c-a)/(c-b)\} \times 100 \quad \text{Formula (D)}$$

a: the specific gravity of the sheet-shaped molded body after the pressing
b: the specific gravity (a calculated value) of the molded body with the premise that the voids were maintained
c: the specific gravity (a calculated value) of the molded body with the premise that all the hollow particles collapsed.

According to the present disclosure, there is also provided a method for producing a hollow particle-containing elastomer composition comprising at least a base material elastomer and hollow particles,
the method comprising:

preparing a raw material mixture containing at least a base material elastomer and hollow particles and having a storage elastic modulus G' at 60°C of 2.5 MPa or less, the hollow particles having a shell and a hollow portion surrounded by the shell, the shell comprising a resin which is a polymer containing 50 parts by mass or more of a crosslinkable monomer unit in 100 parts by mass of all monomer units, and the storage elastic modulus being obtained by dynamic viscoelasticity measurement that is carried out after a homogenization treatment of blended components,
preliminarily kneading the raw material mixture by a closed-type kneader at a temperature at which the storage elastic modulus G', which is obtained by the dynamic viscoelasticity measurement carried out after the homogenization treatment, becomes 2.5 MPa or less, and
kneading the raw material mixture at a temperature at which the storage elastic modulus G', which is obtained by the dynamic viscoelasticity measurement carried out after the homogenization treatment, becomes 2.5 MPa or less, just after the preliminarily kneading or after the raw material mixture is preliminarily heated at a temperature at which the storage elastic modulus G', which is obtained by the dynamic viscoelasticity measurement carried out after the homogenization treatment, becomes 2.5 MPa or less.

Advantageous Effects of Invention

The hollow particle-containing elastomer composition of the present disclosure contains the hollow particles such that the strength is increased by the shell that is made of a resin containing a polymer having a high content of a crosslinkable monomer unit, and the strength is not decreased even in a high temperature environment by virtue of the crosslinking structure. Accordingly, the hollow particles are less likely to collapse in the molding step; high dimensional stability is retained; and the properties or functions imparted by the hollow particles are less likely to deteriorate.

Due to the above reasons, according to the hollow particle-containing elastomer composition of the present disclosure, a hollow particle-containing molded body having high dimensional stability and excellent properties or functions is obtained.

Also, in the method for producing the hollow particle-containing elastomer composition of the present disclosure, such hollow particles are used, that the strength is increased by the shell that is made of a resin containing a polymer having a high content of a crosslinkable monomer unit, and the strength is not decreased even in a high temperature environment by virtue of the crosslinking structure; the storage elastic modulus G' at 60°C of the raw material mixture containing the base material elastomer and the hollow particles, is adjusted to 2.5 MPa or less; and the preliminarily kneading and the finishing kneading are carried out at a temperature at which the storage elastic modulus G' of the raw material mixture becomes 2.5 MPa or less. Accordingly, a load applied to the hollow particles in the interior of the raw material mixture during kneading, such as internal pressure and shear force, is kept low.

Accordingly, by the production method of the present disclosure, a hollow particle-containing elastomer composition having excellent properties or functions is obtained, since the hollow particles are less likely to collapse in the kneading step; the residual void ratio is stable; and the properties or functions imparted by the hollow particles are less likely to deteriorate.

Brief Description of Drawings

[FIG. 1] A diagram illustrating an example of the method for producing the hollow particles used in the present disclosure.
[FIG. 2] A schematic diagram showing an embodiment of a suspension in a suspension step.

Description of Embodiments

In the case of using and molding the hollow particle-containing elastomer composition, there is a possibility that the hollow particles collapse due to molding pressure or heating.

Also, there is a possibility that the hollow particles collapse when kneading the raw material mixture containing the base material elastomer and the hollow particles for the production of the hollow particle-containing elastomer composition. Especially in the case of mixing the base material elastomer and the hollow particles, compared to the case of mixing the hollow particles and a base material resin other than an elastomer, high shear force is generated, and the hollow particles are likely to collapse during kneading, accordingly.

Especially in the case of using hollow particles having a high void ratio, the hollow particles are more likely to collapse since the shell of the hollow particles is generally thin or the particle diameter is generally large.

The investigator of the present disclosure found the following. In the case where the storage elastic modulus G' at 60°C of the elastomer composition is 2.5 MPa or less, which is obtained by incorporating, in the base material elastomer, the hollow particles having the shell that is made of the resin containing the polymer containing a certain amount or more of the crosslinkable monomer unit, the hollow particles are less likely to collapse when using and molding the elastomer composition; therefore, the void ratio of the hollow particles present in the interior of the obtained elastomer molded body can be retained, and the properties or functions imparted by the hollow particles are less likely to deteriorate.

In addition, the investigator of the present disclosure found the following. In the case where the storage elastic modulus G' at 60°C is 2.5 MPa or less, which is measured after the homogenization treatment of the raw material mixture obtained by incorporating, in the base material elastomer, the hollow particles having the shell that is made of the resin containing the polymer containing a certain amount or more of the crosslinkable monomer unit, the void ratio of the hollow particles present in the interior of the elastomer composition obtained by kneading the raw material mixture can be retained, and the properties or functions imparted by the hollow particles are less likely to deteriorate.

The present disclosure was achieved in light of the above findings.

The hollow particle-containing elastomer composition of the present disclosure comprises at least a base material elastomer and hollow particles,

wherein the hollow particles have a shell and a hollow portion surrounded by the shell, the shell comprising a resin which is a polymer containing 50 parts by mass or more of a crosslinkable monomer unit in 100 parts by mass of all monomer units;

wherein the hollow particle-containing elastomer composition has a storage elastic modulus G' at 60°C of 2.5 MPa or less, which is obtained by dynamic viscoelasticity measurement; and

wherein the hollow particle-containing elastomer composition has a residual void ratio of 80% or more, which is obtained by forming a sheet-shaped molded body using the composition and measuring the residual void ratio in accordance with the following method:

[method for measuring the residual void ratio of the hollow particle-containing elastomer molded body] a sheet-shaped, hollow particle-containing elastomer molded body is produced by press-molding the hollow particle-containing elastomer composition at a pressure of 1 MPa or less by a hot press machine at 120°C; the specific gravity of the obtained elastomer molded body is measured; and the residual void ratio of the hollow particles in the elastomer molded body is calculated by the following formula (D):

$$\text{residual void ratio (\%)} = \{(c-a)/(c-b)\} \times 100 \quad \text{Formula (D)}$$

a: the specific gravity of the sheet-shaped molded body after the pressing
b: the specific gravity (a calculated value) of the molded body with the premise that the voids were maintained
c: the specific gravity (a calculated value) of the molded body with the premise that all the hollow particles collapsed.

The method for producing a hollow particle-containing elastomer composition according to the present disclosure comprises:

preparing a raw material mixture containing at least a base material elastomer and hollow particles and having a storage elastic modulus G' at 60°C of 2.5 MPa or less, the hollow particles having a shell and a hollow portion surrounded by the shell, the shell comprising a resin which is a polymer containing 50 parts by mass or more of a crosslinkable monomer unit in 100 parts by mass of all monomer units, and the storage elastic modulus being obtained by dynamic viscoelasticity measurement that is carried out after a homogenization treatment of blended components, preliminarily kneading the raw material mixture by a closed-type kneader at a temperature at which the storage elastic modulus G', which is obtained by the dynamic viscoelasticity measurement carried out after the homogenization treatment, becomes 2.5 MPa or less, and

kneading the raw material mixture at a temperature at which the storage elastic modulus G', which is obtained by the dynamic viscoelasticity measurement carried out after the homogenization treatment, becomes 2.5 MPa or less, just after the preliminarily kneading or after the raw material mixture is preliminarily heated at a temperature at which the storage elastic modulus G', which is obtained by the dynamic viscoelasticity measurement carried out after the homogenization treatment, becomes 2.5 MPa or less.

Hereinafter, the hollow particle-containing elastomer composition of the present disclosure, the method for producing the hollow particle-containing elastomer composition, and the method for producing the elastomer molded body will be described.

In the present disclosure, "to" which shows a numerical range is used to mean that the numerical values described before and after "to" are included as a lower limit value and an upper limit value.

Also in the present disclosure, (meth)acrylate means each of acrylate and methacrylate; (meth)acryl means each of acryl and methacryl; and (meth)acryloyl means each of acryloyl and methacryloyl.

Also in the present disclosure, the polymerizable monomer is a compound containing an addition-polymerizable functional group (in the present disclosure, it may be simply referred to as "polymerizable functional group"). In the present disclosure, as the polymerizable monomer, a compound containing an ethylenically unsaturated bond as the addition-polymerizable functional group, is generally used.

In the present disclosure, a polymerizable monomer which has only one polymerizable functional group is referred to as a non-crosslinkable monomer, and a polymerizable monomer which has two or more polymerizable functional groups is referred to as a crosslinkable monomer. The crosslinkable monomer is a polymerizable monomer which forms crosslinkage in resin by polymerization reaction.

[Hollow particle-containing elastomer composition]

The hollow particle-containing elastomer composition of the present disclosure is a molding material for producing an elastomer molded body such as coating films, chip materials for filling, elastomer parts, and other elastomer parts integrally formed with another material, by a melt molding method such as extrusion molding and compression molding.

By incorporating the hollow particles in the hollow particle-containing elastomer composition of the present disclosure, various properties can be imparted to the elastomer molded body, such as lightweight, heat insulation, low permittivity, light reflection/scattering, and retention of a functional substance such as an antibacterial agent. Accordingly, as the applications of the elastomer molded body produced by use of the elastomer composition, examples include, but are not limited to, a material such as a light reflective material, a heat insulation material, a sound insulation material and a low dielectric material, which are used in various kinds of fields such as the automotive field, the electronics field, the electric field, the architecture field, the aviation field and the space field; an over-coating or under-coating material required to have heat insulation properties, shock-absorbing properties (cushioning properties), light reflectivity, antibacterial properties and so on; a shock-absorbing material (cushioning material) for footwears such as sports shoes and sandals; components of household appliances; components of bicycles; stationery supplies; tools; hollow particle-containing filaments of 3D printers; and floating buoyant materials made of syntactic foam.

The hollow particle-containing elastomer composition of the present disclosure does not contain a foaming agent for making the elastomer molded body a porous molded body, and it uses the hollow particles already molded in a hollow shape. Accordingly, a change in the size of the elastomer molded body which is due to foaming of a foaming agent, does not occur.

Also, the hollow particle-containing elastomer composition of the present disclosure contains the hollow particles such that the strength is increased by the shell that is made of a resin containing a polymer having a high content of a crosslinkable monomer unit, and the strength is not decreased even in a high temperature environment by virtue of the crosslinking structure. Accordingly, the hollow particles are less likely to collapse in the molding step; high dimensional stability is retained; and the properties or functions imparted by the hollow particles are less likely to deteriorate.

Due to the above reasons, according to the hollow particle-containing elastomer composition of the present disclosure, a hollow particle-containing molded body having high dimensional stability and excellent properties or functions is obtained.

[Storage elastic modulus]

In the present disclosure, from the viewpoint of reducing the collapse of the hollow particles in the interior of the elastomer composition when kneading the hollow particle-containing elastomer composition, the storage elastic modulus at 60°C of the hollow particle-containing elastomer composition, which is obtained by the dynamic viscoelasticity measurement, is 2.5 MPa or less, and preferably 1.7 MPa or less.

The lower limit of the storage elastic modulus G' is not particularly limited. From the viewpoint of retaining the hardness of the molded body obtained from the elastomer composition, the lower limit is preferably 0.5 MPa or more, and more preferably 0.8 MPa or more.

The storage elastic modulus at 60°C of the hollow particle-containing elastomer composition can be determined from the temperature dependent curve of the storage elastic modulus obtained by the dynamic viscoelasticity measurement of the hollow particle-containing elastomer composition. In the present disclosure, a general method that is applied to the dynamic viscoelasticity measurement of resin can be appropriately implemented, such as the following method.

[Dynamic viscoelasticity measurement method]

The dynamic viscoelastic measurement is carried out using a measuring apparatus such as HAAKE MARS III (product name, manufactured by Thermo Fisher Scientific) or a rotating flat plate rheometer (product name: ARES-G2, manufactured by: TA Instruments Inc.) and using a parallel plate or a cross-hatch plate under the following conditions.

<Measurement condition>

Frequency: 1 Hz
Geometry: Parallel plate or cross-hatch plate (20 mm $\varphi$)
Sample set: A test piece (2 mm to 4 mm thick) is fused to the 20 mm $\varphi$ plate set to a temperature of 170°C; the test piece is placed in a dynamic viscoelasticity measuring apparatus; and then while decreasing the temperature from 170°C to room temperature (e.g., 25°C) at 5°C/min, the storage elastic modulus G' (unit: MPa) of the test piece at from 150°C to room temperature is measured.
Temperature decrease rate: 5°C/min
Temperature range: 150°C to room temperature
Strain: 0.001
Gap: 1.5 mm

For example, the test piece can be produced as follows: using the hollow particle-containing elastomer composition of the present disclosure, a 2 mm thick sheet is produced by a press machine at 160°C, and the sheet is cut into the form of a 20 mm φ circle, thereby producing the test piece.

[Storage elastic modulus adjusting method]

The storage elastic modulus G' at 60°C of the hollow particle-containing elastomer composition measured by the dynamic viscoelasticity measurement, can be adjusted by changing one, two or more factors such as the amount of the plasticizer, the amount of the hollow particles, the particle diameter of the hollow particles, the composition of the surface of the hollow particles, the type or amount of organic or inorganic fine particles other than the hollow particles (such as silica and carbon) when added. Of these factors, especially, the amount of the plasticizer and that of the hollow particles can be a significant factor of the storage elastic modulus G'.

The storage elastic modulus G' of the hollow particle-containing elastomer composition can be decreased by increasing the amount of the plasticizer. The storage elastic modulus G' of the hollow particle-containing elastomer composition can be increased by decreasing the amount of the plasticizer. To adjust the storage elastic modulus G' of the hollow particle-containing elastomer composition obtained by the dynamic viscoelasticity measurement to 2.5 MPa or less, the amount of the plasticizer is appropriately increased or decreased generally within a range of from 35 parts by mass to 100 parts by mass, and preferably within a range of from 45 parts by mass to 90 parts by mass, with respect to 100 parts by mass of the base material elastomer.

Also, by increasing the amount of the hollow particles, the storage elastic modulus G' of the hollow particle-containing elastomer composition can be increased. By decreasing the amount of the hollow particles, the storage elastic modulus G' of the hollow particle-containing elastomer composition can be decreased. To adjust the storage elastic modulus G' of the hollow particle-containing elastomer composition obtained by the dynamic viscoelasticity measurement to 2.5 MPa or less, with considering the balance with the contribution to the objects of the hollow particles (such as weight reduction, heat insulation and cushioning properties), the amount of the hollow particles is generally and appropriately increased or decreased within a range of from 5 parts by mass to 80 parts by mass, with respect to 100 parts by mass of the base material elastomer.

[Base material elastomer]

An elastomer, that is, a polymer having rubber-like elasticity can be used as the base material. The elastomer is not particularly limited. As the elastomer, examples include, but are not limited to, a rubber and a thermoplastic elastomer.

As the rubber, for example, natural rubber, isoprene rubber, butadiene rubber (BR), styrene-butadiene rubber (SBR), chloroprene rubber, acrylonitrile-butadiene rubber, ethylene-α-olefin copolymer rubber, ethylene-α-olefin-non-conjugated diene copolymer rubber such as an ethylene-propylene-dien ter-polymer (EPDM), halogenated ethylene-α-olefin-non-conjugated diene copolymer rubber, sulfonated ethylene-α-olefin-non-conjugated diene copolymer rubber, maleated ethylene-α-olefin-non-conjugated diene copolymer rubber, butyl rubber, isobutylene-isoprene rubber, nitrile rubber, hydrogenated nitrile rubber, urethane rubber, silicone rubber, chloro-sulfonated polyethylene rubber, chlorinated polyethylene rubber, acrylic rubber, epichlorohydrin rubber, fluorine rubber, polysulfide rubber, propylene oxide rubber or the like can be used.

In general, a thermoplastic elastomer has properties such that it shows rubber-like elasticity at ordinary temperature (25°C) and it can be plasticized and molded at high temperature. As the thermoplastic elastomer, a thermoplastic elastic polymer that has been used as molding resin can be used, such as a urethane-based elastomer, a styrene-based elastomer, an olefin-based elastomer, an amide-based elastomer and an ester-based elastomer.

These base material elastomers can be used alone or in combination of two or more. The base material elastomer preferably contains at least one selected from the group consisting of ethylene-α-olefin-non-conjugated diene copolymer rubber, butadiene rubber, styrene-butadiene rubber, natural rubber, isoprene rubber, nitrile rubber, hydrogenated nitrile rubber, butyl rubber, fluorine rubber, silicone rubber, acrylonitrile-butadiene rubber, chloroprene rubber, acrylic rubber, chloro-sulfonated polyethylene rubber, chlorinated polyethylene rubber, urethane rubber, isobutylene-isoprene rubber, polysulfide rubber, propylene oxide rubber and epichlorohydrin rubber; the base material elastomer more preferably contains at least one selected from the group consisting of ethylene-α-olefin-non-conjugated diene copolymer rubber, butadiene rubber, styrene-butadiene rubber, natural rubber, isoprene rubber and acrylic rubber; the base material elastomer still more preferably contains at least one selected from the group consisting of ethylene-α-olefin-non-conjugated diene copolymer rubber, butadiene rubber and styrene-butadiene rubber; and the base material elastomer even more preferably contains ethylene-α-olefin-non-conjugated diene copolymer rubber.

The ethylene-α-olefin-non-conjugated diene copolymer rubber is a random copolymer of ethylene, an α-olefin and a non-conjugated diene. As the α-olefin, examples include, but are not limited to, propylene, 1-butene, 1-pentene, 3-methyl-1-pentene, 4-methyl-1-pentene, 1-hexene, 1-heptene, 1-octene, 1-nonene, 1-decene, 1-undecene and 1-dodecene. Of them, propylene, 1-hexene and 1-octene are preferred, and propylene is particularly preferred. These $\alpha$-olefins can be used alone or in combination of two or more kinds. The molar ratio of the ethylene and the $\alpha$-olefin (ethylene/$\alpha$-olefin) is not particularly limited. It is preferably from 40/60 to 95/5, more preferably from 50/50 to 85/15, and still more preferably from 60/40 to 80/20.

As the non-conjugated diene, examples include, but are not limited to, 1,4-hexadiene, 3-methyl-1,4-hexadiene, 1,7-octadiene, 1,9-decadiene, 5-ethylidene-2-norbornene, 5-isopropylidene-2-norbornene, 5-isobutenyl-2-norbornene, cyclopentadiene, dicyclopentadiene and norbornadiene. Of them, 5-ethylidene-2-norbornene and dicyclopentadiene are preferred. These non-conjugated dienes can be used alone or in combination of two or more kinds.

As the butadiene rubber (BR), examples include, but are not limited to, a low-cis BR, a high-cis BR and a high-trans BR. Also, a modified BR in which a nitrogen atom-containing functional group, a silicon atom-containing functional group, an oxygen atom-containing functional group or the like has been introduced, may be used as the butadiene rubber.

As the styrene-butadiene rubber (SBR), examples include, but are not limited to, a solution-polymerized SBR and an emulsion-polymerized SBR. Also, an acid-modified SBR may be used as the styrene-butadiene rubber. Commercially-available, acid-modified SBR products include, for example, Nipol LX206 (product name, manufactured by ZEON Corporation), Nipol LX209 (product name, manufactured by ZEON Corporation) BM-430B (product name, manufactured by ZEON Corporation) and BM-451B (product name, manufactured by ZEON Corporation).

In the case of using at least one selected from the group consisting of ethylene-$\alpha$-olefin-non-conjugated diene copolymer rubber, butadiene rubber and styrene-butadiene rubber as the at least a part of the base material elastomer, the mass percentage of the at least one rubber in the base material elastomer is preferably 50% by mass or more, more preferably 70% by mass or more, and still more preferably 90% by mass or more. The upper limit of the mass percentage of the at least one rubber in the base material elastomer is preferably 100% by mass.

The mass percentage of the ethylene-$\alpha$-olefin-non-conjugated diene copolymer rubber in the base material elastomer is preferably 50% by mass or more, more preferably 70% by mass or more, and still more preferably 90% by mass or more. The upper limit of the mass percentage of the ethylene-$\alpha$-olefin-non-conjugated diene copolymer rubber in the base material elastomer is preferably 100% by mass.

The iodine value of the base material elastomer is not particularly limited, and it is preferably from 5 g/100 g to 50 g/100 g, more preferably 10 g/100 g to 40 g/100 g, and still more preferably 15 g/100 g to 30 g/100 g. When the iodine value of the base material elastomer is in the above range, an elastomer composition having high crosslinking efficiency is obtained, and an elastomer composition that can provide a vulcanized elastomer product having excellent compression set resistance as well as excellent environmental degradation resistance, can be obtained.

When the base material elastomer contains an elastomer having a styrene monomer unit, such as styrene-butadiene rubber and a styrene-based thermoplastic elastomer, the stiffness of the elastomer composition of the present disclosure can be controlled by changing the content of the styrene monomer unit in the base material elastomer. However, when the content of the styrene monomer unit in the base material elastomer is too large, the stiffness also increases when melt-kneading the elastomer composition and the raw material mixture thereof, and it may be difficult to sufficiently decrease the storage elastic modulus G' at the time of melt-kneading. Accordingly, the content of the styrene monomer unit contained in the base material elastomer is preferably 0% by mass or more and 60% by mass or less, and more preferably 0% by mass or more and 50% by mass or less of the total mass of the base material elastomer.

From the viewpoint of improving the dimensional stability and surface texture of the molded body produced from the elastomer composition of the present disclosure, the Mooney viscosity (ML(1+4)100°C) of the base material elastomer, which is measured in accordance with JIS K6300, is preferably 20 or more and 75 or less, more preferably 20 or more and 60 or less, and still more preferably 20 or more and 55 or less.

In the above "ML(1+4)100°C" of the Mooney viscosity, "M" means Mooney unit: "L" means that a rotor shape is L; "1+4" means a preheating time of one minute and a rotor rotation time of 4 minutes; and "100°C" means a measurement temperature of 100°C.

[Hollow particles]

The hollow particles used in the present disclosure are particles comprising a resin-containing shell (outer shell) and a hollow portion surrounded by the shell.

In the present disclosure, the term "hollow portion" means a hollow space clearly distinguished from the shell of hollow particles formed from a resin material. The shell of the hollow particles may have a porous structure. In this case, the hollow portion has a size that is clearly distinguishable from many minute spaces uniformly dispersed in the porous structure. From the viewpoint of pressure resistance and so on, the hollow particles of the present disclosure preferably have a solid shell.

The hollow portion of the hollow particles can be determined by, for example, SEM observation of a cross section of the particles or TEM observation of the particles as they are.

The hollow portion of the hollow particles of the present disclosure may be filled with gas such as air, may be in a vacuum or depressurized state, or may contain a solvent.

The strength of the hollow particles used in the present disclosure is increased by the shell that is made of a resin containing a polymer having a high content of a crosslinkable monomer unit, and the strength is not decreased even in a high temperature environment by virtue of the crosslinking structure. Accordingly, the hollow particles of the present disclosure have excellent pressure resistance; they are less likely to collapse when mixed and kneaded with other materials and even when molded after mixing and kneading with other materials; and when they are added to a molded body, they exert various excellent effects such as a weight reduction, heat insulation, acoustic insulation, vibration damping and light scattering. As another application, the hollow particles of the present disclosure are suitably used as an additive for molded bodies, since they are very effective as an encapsulant that can enclose a useful substance such as a perfume, a medicine, an agricultural chemical and an ink component in the interior of the hollow portion by a means such as immersion treatment or depressurized or pressurized immersion treatment. Also, the hollow particles used in the present disclosure are less likely to collapse and the void ratio thereof is less likely to decrease even after they are subjected to a process in which a load (e.g., external pressure and shear force) is applied, such as kneading and injection molding. Accordingly, the hollow particles of the present disclosure are particularly suitably used as an additive for molded bodies that are obtained through a process in which a load is applied.

The void ratio of the hollow particles used in the present disclosure is preferably 50% or more, more preferably 60% or more, and still more preferably 65% or more. When the void ratio is equal to or more than the above-described lower limit, the hollow particles obtain excellent properties such as lightness in weight, heat resistance, heat insulation and dielectric property. The upper limit of the void ratio of the hollow particles is not particularly limited. From the viewpoint of suppressing a decrease in pressure resistance, it is preferably 90% or less, more preferably 85% or less, and still more preferably 80% or less.

The void ratio of the hollow particles can be calculated from the apparent density $D_1$ and true density $D_0$ of the hollow particles.

A method for measuring the apparent density $D_1$ of the hollow particles is as follows. First, approximately 30 $cm^3$ of the hollow particles are introduced into a measuring flask with a volume of 100 $cm^3$, and the mass of the introduced hollow particles is precisely weighed. Next, the measuring flask in which the hollow particles are introduced, is precisely filled with isopropanol up to a marked line indicating a volume of 100 $cm^3$, while care is taken so that air bubbles do not get in. The mass of the isopropanol added to the measuring flask is precisely weighed, and the apparent density $D_1$ ($g/cm^3$) of the hollow particles is calculated by the following formula (I).

Apparent density $D_1$ = [Mass of the hollow particles]/(100-[Mass of the isopropanol]/[Specific gravity of the isopropanol at the measuring temperature])                           Formula (I)

The apparent density $D_1$ is equivalent to the specific gravity of the whole hollow particle in the case where the hollow portion is regarded as a part of the hollow particle.

A method for measuring the true density $D_0$ of the hollow particles is as follows. The hollow particles are pulverized in advance; approximately 10 g of the pulverized hollow particles are introduced into a measuring flask with a volume of 100 $cm^3$; and the mass of the introduced pulverized particles is precisely weighed. After that, similarly to the measurement of the apparent density mentioned above, isopropanol is added to the measuring flask; the mass of the isopropanol is precisely weighed; and the true density $D_0$ ($g/cm^3$) of the hollow particles is calculated by the following formula (II).

True density $D_0$ = [Mass of the pulverized hollow particles]/(100-[Mass of the isopropanol]/[Specific gravity of the isopropanol at the measuring temperature])                           Formula (II)

The true density $D_0$ is equivalent to the specific gravity of the shell portion alone of the hollow particle. As is clear from the measurement method mentioned above, when calculating the true density $D_0$, the hollow portion is not regarded as a part of the hollow particle.

The void ratio (%) of the hollow particles is calculated by the following formula (III) from the apparent density $D_1$ and the true density $D_0$.

Void ratio (%) = 100-(Apparent density $D_1$/True density $D_0$)$\times$100                           Formula (III)

The collapse resistance of the hollow particles can be expressed by the residual void ratio measured by the following press test.

[Press test]

A mixture of a polypropylene resin and the hollow particles at a mass ratio of 90:10 (polypropylene resin : hollow particles) is melted and mixed at 200°C; the mixture is poured into a mold for a hot press machine, heated at 200°C for 15 minutes, and then stirred; the mold is placed on the hot press machine set to 80°C; a cylinder heated to 80°C is put in the mold; the mixture is pressed at 15 MPa when a surface temperature of the mold reaches 140°C; the mixture is removed from the mold and molded into a sheet shape by pressing at a pressure of 1 MPa or less by the hot press machine set to 200°C; the specific gravity of the obtained sheet-shaped molded body is measured; and the residual void ratio of the hollow particles is calculated by the following formula (D).

$$\text{Residual void ratio (\%)} = \{(c-a)/(c-b)\} \times 100 \quad \text{Formula (D)}$$

Symbols in the formula (D) mean the following.

a: The specific gravity of the sheet-shaped molded body after the press molding
b: The specific gravity (a calculated value) of the molded body with the premise that the voids were maintained
c: The specific gravity (a calculated value) of the molded body with the premise that all the hollow particles collapsed

The specific gravity of the molded body after the press molding is measured by an underwater replacement method in accordance with JIS K 7112.
The molded body with the premise that the voids were maintained, means a molded body with the premise that the hollow particles mixed with the polypropylene resin do not collapse even in the molded body after the hot pressing step and keep the void ratio before mixing. The specific gravity b of the molded body with the premise that the voids were maintained, is calculated by the following formula (E) where $P_A$ is the amount of the added hollow particles; $P_G$ is the specific gravity of the hollow particles; $R_A$ is the amount of the added base material elastomer; and $R_G$ is the specific gravity of the base material elastomer.

$$b = 1/\{(P_A/P_G)+(R_A/R_G)\} \quad \text{Formula (E)}$$

The specific gravity c of the molded body with the premise that all the hollow particles collapsed, is calculated by the following formula (F) where $R_A$ is the amount of the added base material elastomer; $R_G$ is the specific gravity of the base material elastomer; $D_0$ is the true density of the hollow particles; $P_A$ is the amount of the added hollow particles; and $P_V$ is the void ratio (%) of the hollow particles.

$$c = [R_G \times R_A + \{D_0 \times P_A \times (1-P_V/100)\}]/\{R_A+P_A \times (1-P_V/100)\} \quad \text{Formula}$$

$$(F)$$

As the polypropylene resin used in the press test, such polypropylene resin can be used, that the melt flow rate (MFR) at 230°C is from 10 g/min to 30 g/min, preferably from 15 g/min to 25 g/min. Commercially-available products of such polypropylene resin include, for example, NOVATEC-PP (product name, grade: MA1B, manufactured by: Japan Polypropylene Corporation, MFR at 230°C: 21 g/min).
As the residual void ratio gets larger, the hollow particles get less likely to collapse in the process of producing the hollow particle-containing elastomer composition and in the process of producing the elastomer molded body using the hollow particle-containing elastomer composition; the effects imparted by the hollow particles are not reduced and are maintained; and the dimensional stability at the time of molding is also high. When the hollow particles do not collapse at all, the residual void ratio is 100%.
The hollow particles used in the present disclosure can achieve a residual void ratio of 80% or more, which is calculated by the above test method, and they can also achieve a residual void ratio of 100%.
As for the volume average particle diameter of the hollow particles used in the present disclosure, the lower limit is preferably 5.0 μm or more, more preferably 6.0 μm or more, and still more preferably 7.0 μm or more. On the other hand, the upper limit is preferably 40.0 μm or less, more preferably 30.0 μm or less, and still more preferably 20.0 μm or less. When the volume average particle diameter of the hollow particles is equal to or more than the above-described lower limit, both a high void ratio and excellent pressure resistance are easily obtained; the aggregability of the hollow particles decreases; and the hollow particles exert excellent dispersibility, accordingly. When the volume average particle diameter of the hollow particles is equal to or less than the above-described upper limit, the uniformity of the shell is easily improved, and the hollow particles excellent in pressure resistance are easily obtained, accordingly.
The particle diameter of the hollow particles of the present disclosure can be controlled by, for example, the content of the dispersion stabilizer with respect to the total mass of the polymerizable monomer and the hydrophobic solvent.

The thickness of the shell of the hollow particles used in the present disclosure is not particularly limited. From the viewpoint of improving the pressure resistance, the shell thickness is preferably 0.30 $\mu$m or more, more preferably 0.40 $\mu$m or more, still more preferably 0.50 $\mu$m or more, and even more preferably 0.60 $\mu$m or more. From the viewpoint of increasing the void ratio, it is preferably 3.00 $\mu$m or less, more preferably 2.00 $\mu$m or less, and still more preferably 1.50 $\mu$m or less.

In the present disclosure, the thickness of the shell of the hollow particles is a value calculated as follows. The inner diameter r of the hollow particles is calculated by the following formula (1) using the volume average particle diameter R and void ratio of the hollow particles, and the thickness of the shell is calculated by the following formula (2) using the inner diameter r and the volume average particle diameter R.

$$4/3\pi \times (R/2)^3 \times (\text{Void ratio}/100) = 4/3\pi \times (r/2)^3 \quad \text{Formula (1)}$$

$$\text{Shell thickness} = (R-r)/2 \quad \text{Formula (2)}$$

The void ratio in the formula (1) is a numerical value expressed in percentage.

The particle size distribution (volume average particle diameter (Dv)/number average particle diameter (Dn)) of the hollow particles used in the present disclosure may be 1.1 or more and 2.5 or less, for example. When the particle size distribution is 2.5 or less, hollow particles with less dispersion in compressive strength and heat resistance can be obtained. Also, when the particle size distribution is 2.5 or less, a product having uniform thickness can be produced in the case of producing, for example, a sheet-shaped molded body mixed with the hollow particles of the present disclosure.

The volume average particle diameter (Dv) and number average particle diameter (Dn) of the hollow particles can be found as follows, for example. The particle diameter of each of the hollow particles is measured with a particle size distribution measuring apparatus; the number average and volume average of the particle diameters are calculated; and the obtained values can be used as the number average particle diameter (Dn) and volume average particle diameter (Dv) of the hollow particles. The particle size distribution is determined by dividing the volume average particle diameter by the number average particle diameter.

The shape of the hollow particles used in the present disclosure is not particularly limited, as long as the hollow portion is formed in the interior. As the shape, examples include, but are not limited to, a spherical shape, a spheroidal shape and an irregular shape. Among them, a spherical shape is preferable in terms of ease of production, pressure resistance and so on.

The hollow particles used in the present disclosure may have one or two or more hollow portions. From the viewpoint of maintaining good balance between the high void ratio and the mechanical strength, the hollow particles preferably have only one or two hollow portions, and more preferably only one hollow portion. In the hollow particles used in the present disclosure, the percentage of the particles having only one hollow portion is preferably 90% or more, more preferably 95% or more, and still more preferably more than 95%.

The shell of the hollow particles and, when the hollow particles have two or more hollow portions, a partition separating the adjacent hollow portions from each other may be porous. From the viewpoint of improving the pressure resistance, the shell and the partition are preferably solid.

The average circularity of the hollow particles used in the present disclosure may be from 0.950 to 0.995.

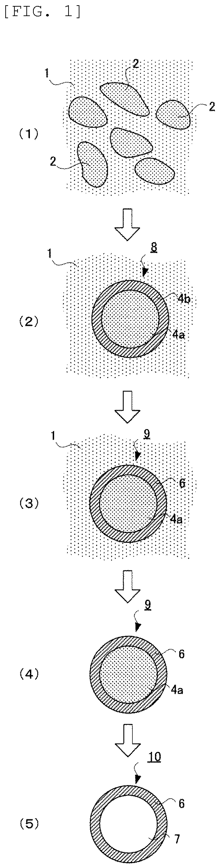

An example of the image of the shape of the hollow particles of the present disclosure, is a bag made of a thin film and inflated with gas. A cross-section of thereof is like the hollow particle 10 shown in the diagram (5) of FIG. 1. In this example, one thin film is provided on the outside, and the interior is filled with gas.

The shape of the particles can be determined by SEM or TEM, for example.

The thermal decomposition initiation temperature of the hollow particles of the present disclosure is preferably from 150°C to 400°C, and more preferably from 200°C to 350°C. When the thermal decomposition initiation temperature is in the above-described range, the hollow particles are excellent in heat resistance.

The thermal decomposition initiation temperature of the hollow particles means a temperature at which 5% by mass reduction occurs, and it can be measured by a TG-DTA device in an air atmosphere, in the conditions of an air flow rate of 230 mL/min and a temperature increase rate of 10°C/min.

The content of the hollow particles in the elastomer composition is not particularly limited. It is generally from 5 parts by mass to 80 parts by mass, with respect to 100 parts by mass of the base material elastomer.

Hereinafter, an example of the method for producing the hollow particles used in the present disclosure will be described in detail.

For example, the hollow particles can be obtained by a production method comprising:

preparing a mixture liquid containing a polymerizable monomer, a hydrophobic solvent, a polymerization initiator, a dispersion stabilizer and an aqueous medium,

suspending the mixture liquid to prepare a suspension in which droplets of a monomer composition containing the polymerizable monomer, the hydrophobic solvent and the polymerization initiator are dispersed in the aqueous medium, and

subjecting the suspension to a polymerization reaction to prepare a precursor composition containing precursor particles which have a hollow portion surrounded by a shell containing a resin and which include the hydrophobic solvent in the hollow portion.

The production method follows the following basic technique: by carrying out the suspension treatment of the mixture liquid containing the polymerizable monomer, the hydrophobic solvent, the polymerization initiator, the dispersion stabilizer and the aqueous medium, phase separation occurs between the polymerizable monomer and the hydrophobic solvent. Accordingly, the suspension in which droplets are dispersed in the aqueous medium, the droplets having a distribution structure such that the polymerizable monomer is distributed on the surface side and the hydrophobic solvent is distributed in the center, is prepared. By subjecting the suspension to a polymerization reaction, the surface of the droplets is cured to form the hollow particles having the hollow portion filled with the hydrophobic solvent.

It is presumed that by controlling the composition of the polymerizable monomer, the type of the hydrophobic solvent, and so on in the basic technique, the following is achieved: sufficient phase separation between the polymerizable monomer and hydrophobic solvent in the droplets of the monomer composition dispersed in the suspension occurs, and the polymerization reaction of the polymerizable monomer uniformly proceeds when the suspension is subjected to a polymerization reaction, thereby forming the shell that is excellent in the uniformity of composition, thickness, etc.

The method for producing the hollow particles includes the steps of preparing the mixture liquid, preparing the suspension, and subjecting the suspension to a polymerization reaction. The method may further include other steps. As far as technically possible, two or more of the above steps and other additional steps may be simultaneously carried out as one step, or their order may be changed and then they may be carried out in that order. For example, the preparation and suspension of the mixture liquid may be simultaneously carried out in one step (e.g., the mixture liquid may be suspended while adding the materials for the mixture liquid).

A preferred embodiment of the method for producing the hollow particles may be a production method including the following steps.

(1) Mixture liquid preparation step

This step includes preparing the mixture liquid containing the polymerizable monomer, the hydrophobic solvent, the polymerization initiator, the dispersion stabilizer and the aqueous medium.

(2) Suspension step

This step includes suspending the mixture liquid to prepare the suspension in which the droplets of the monomer composition containing the polymerizable monomer, the hydrophobic solvent and the polymerization initiator are dispersed in the aqueous medium.

(3) Polymerization step

This step includes subjecting the suspension to a polymerization reaction to prepare the precursor composition containing the precursor particles which have the hollow portion surrounded by the shell containing the resin and which include the hydrophobic solvent in the hollow portion.

(4) Solid-liquid separation step

This step includes performing solid-liquid separation of the precursor composition to obtain the precursor particles including the hydrophobic solvent in the hollow portion.

(5) Solvent removal step

This step includes removing the hydrophobic solvent from the precursor particles obtained by the solid-liquid separation step to obtain the hollow particles.

In the present disclosure, the hollow particles having the hollow portion filled with the hydrophobic solvent, may be considered as the intermediate of the hollow particles in which the hollow portion is filled with gas, and they may be referred to as the "precursor particles". Also in the present disclosure, the "precursor composition" means a composition containing the precursor particles.

FIG. 1 is a schematic diagram showing an example of the method for producing the hollow particles of the present disclosure. The diagrams (1) to (5) in FIG. 1 correspond to the steps (1) to (5) described above, respectively. White arrows between the diagrams indicate the order of the steps. FIG. 1 is merely a schematic diagram for description, and the production method of the present disclosure is not limited to the method shown in FIG. 1. Further, the structures, dimensions and shapes of materials used for the production method of the present disclosure are not limited to the structures, dimensions and shapes of various materials shown in these diagrams.

The diagram (1) of FIG. 1 is a schematic cross-sectional view showing an embodiment of the mixture liquid in the mixture liquid preparation step. As shown in the diagram, the mixture liquid contains an aqueous medium 1 and a low polarity material 2 dispersed in the aqueous medium 1. Here, the low polarity material 2 means a material that has low polarity and is less likely to mix with the aqueous medium 1. In the present disclosure, the low polarity material 2 includes the polymerizable monomer, the hydrophobic solvent and the polymerization initiator.

The diagram (2) of FIG. 1 is a schematic cross-sectional view showing an embodiment of the suspension in the suspension step. The suspension contains the aqueous medium 1 and droplets 8 of the monomer composition dispersed in the aqueous medium 1. The droplets 8 of the monomer composition contain the polymerizable monomer, the hydrophobic solvent and the polymerization initiator, and their distribution in the droplets is not uniform. The droplets 8 of the monomer composition have the following structure: phase separation occurs between a hydrophobic solvent 4a and a material 4b which may include the polymerizable monomer and any materials other than the hydrophobic solvent; the hydrophobic solvent 4a is distributed in the center; the material 4b other than the hydrophobic solvent is distributed on the surface side; and the dispersion stabilizer (not shown) is on the surface.

The diagram (3) of FIG. 1 is a schematic cross-sectional view showing an embodiment of the precursor composition obtained by the polymerization step, which contains the precursor particles which include the hydrophobic solvent in the hollow portion. The precursor composition contains the aqueous medium 1 and precursor particles 9 which include the hydrophobic solvent 4a in the hollow portion and which are dispersed in the aqueous medium 1. A shell 6 forming the outer surface of the precursor particles 9 is formed by polymerization of the polymerizable monomer contained in the droplets 8 of the monomer composition. The shell 6 contain, as the resin, the polymer of the polymerizable monomer.

The diagram (4) of FIG. 1 is a schematic cross-sectional view showing an embodiment of the precursor particles after the solid-liquid separation step. The diagram (4) of FIG. 1 shows a state where the aqueous medium 1 has been removed from the state shown in the diagram (3) of FIG. 1.

The diagram (5) of FIG. 1 is a schematic cross-sectional view showing an embodiment of the hollow particles after the solvent removal step. The diagram (5) of FIG. 1 shows a state where the hydrophobic solvent 4a has been removed from the state shown in the diagram (4) of FIG. 1. By the removal of the hydrophobic solvent from the precursor particles, hollow particles 10 having a gas-filled hollow portion 7 in the interior of the shell 6, are obtained.

Hereinbelow, the five steps described above and other steps are described in order.

(1) Mixture liquid preparation step

This step includes preparing the mixture liquid containing the polymerizable monomer, the hydrophobic solvent, the polymerization initiator, the dispersion stabilizer and the aqueous medium. The mixture liquid may further contain other materials to the extent that does not impair the effects of the present disclosure.

The materials for the mixture liquid will be described in the following order: (A) the polymerizable monomer, (B) the hydrophobic solvent, (C) the polymerization initiator, (D) the dispersion stabilizer and (E) the aqueous medium.

(A) polymerizable monomer

As the polymerizable monomer, a known polymerizable monomer conventionally used for the formation of hollow particles can be used, without particular limitation. At least a part of the polymerizable monomer contains a crosslinkable monomer. When the polymerizable monomer contains a crosslinkable monomer, the crosslinking density of the shell can be improved. Accordingly, the shell excellent in strength is easily formed; the thus-obtained hollow particles easily become spherical; and the hollow portion that is clearly distinguished from the shell is easily formed in the interior of the particles.

From the point of view that the polymerization reaction is easily stabilized, a polymerizable monomer in which the polymerizable functional group is a (meth)acryloyl group or a vinyl group is preferable, and an acrylic monomer which contains a (meth)acryloyl group as the polymerizable functional group is more preferable. In the present disclosure, "the polymerization reaction is stabilized" means that the reactivity of the polymerization reaction is good, and the polymerization reaction uniformly proceeds.

The polymerizable monomer particularly preferably contains an acrylic monomer and a hydrocarbon monomer, from the point of view that the polymerization reaction is easily stabilized and the pressure resistance of the hollow particles can be improved. It is presumed that since the reactivity of the hydrocarbon monomer is improved by copolymerizing an acrylic monomer and a hydrocarbon monomer, the reactivity of the whole polymerizable monomer is improved and, as a result, the polymerization reaction is easily stabilized. It is also presumed that when the polymerizable monomer contains an acrylic monomer and a hydrocarbon monomer, the compatibility with the hydrophobic solvent becomes appropriate, and thereby, when the suspension is subjected to a polymerization reaction, the polymerization reaction of the polymerizable monomer easily proceeds uniformly, the thus-formed shell easily becomes a shell that is excellent in the uniformity of composition, thickness and so on, and accordingly, the pressure resistance of the hollow particles is improved.

From the point of view that the polymerization reaction is easily stabilized, a hydrocarbon monomer in which the polymerizable functional group is a vinyl group is preferable.

In the present disclosure, a polymerizable monomer containing a (meth)acryloyl group as a polymerizable functional group is referred to as "acrylic monomer"; a crosslinkable monomer containing a (meth)acryloyl group as a polymerizable functional group is referred to as "crosslinkable acrylic monomer"; and a non-crosslinkable monomer containing a (meth)acryloyl group as a polymerizable functional group is referred to as "non-crosslinkable acrylic monomer". In the crosslinkable acrylic monomer, at least one polymerizable functional group is only required to be a (meth)acryloyl group, and all polymerizable functional groups are preferably (meth)acryloyl groups.

Also in the present disclosure, a polymerizable monomer composed of carbon and hydrogen is referred to as "hydrocarbon monomer"; a crosslinkable monomer composed of carbon and hydrogen is referred to as "crosslinkable hydrocarbon monomer"; and a non-crosslinkable monomer composed of carbon and hydrogen is referred to as "non-crosslinkable hydrocarbon monomer".

The crosslinkable monomer used in the production method of the present disclosure is preferably a crosslinkable acrylic monomer or a crosslinkable hydrocarbon monomer.

As the crosslinkable acrylic monomer, examples include, but are not limited to, a difunctional crosslinkable acrylic monomer such as allyl (meth)acrylate, vinyl (meth)acrylate, ethylene glycol di(meth)acrylate, diethylene glycol di(meth)acrylate, pentaerythritol di(meth)acrylate and 2-hydroxy-3-(meth)acrylpropyl (meth)acrylate, and a trifunctional or higher-functional crosslinkable acrylic monomer such as trimethylolpropane tri(meth)acrylate, ditrimethylolpropane tetra(meth)acrylate, pentaerythritol tri(meth)acrylate, pentaerythritol tetra(meth)acrylate, dipentaerythritol hexa(meth)acrylate, dipentaerythritol poly(meth)acrylate and ethoxylates thereof.

As the crosslinkable hydrocarbon monomer, examples include, but are not limited to, a difunctional crosslinkable hydrocarbon monomer such as divinylbenzene, divinyldiphenyl and divinylnaphthalene.

In addition, as the crosslinkable monomer, examples include, but are not limited to, a crosslinkable allyl monomer such as diallyl phthalate.

These crosslinkable monomers may be used alone or in combination of two or more.

From the viewpoint of improving the strength of the shell and obtaining the hollow particles excellent in pressure resistance, the crosslinkable monomer preferably contains a trifunctional or higher-functional crosslinkable monomer having three or more polymerizable functional groups.

Preferred as the trifunctional or higher-functional crosslinkable monomer are the above-described trifunctional or higher-functional crosslinkable acrylic monomers. Of them, pentaerythritol tetra(meth)acrylate, trimethylolpropane tri(meth)acrylate, ethoxylated trimethylolpropane tri(meth)acrylate, ethoxylated pentaerythritol tetra(meth)acrylate, pentaerythritol tri(meth)acrylate and dipentaerythritol poly(meth)acrylate are preferred, and pentaerythritol tetra(meth)acrylate and trimethylolpropane tri(meth)acrylate are more preferred.

From the viewpoint of improving the strength of the shell and obtaining the hollow particles excellent in pressure resistance, the crosslinkable monomer more preferably contains a difunctional crosslinkable monomer having only two polymerizable functional groups and a trifunctional or higher-functional crosslinkable monomer having three or more polymerizable functional groups.

The difunctional crosslinkable monomer is preferably at least one selected from the group consisting of the difunctional crosslinkable acrylic monomer and the difunctional crosslinkable hydrocarbon monomer.

Preferred as the difunctional crosslinkable acrylic monomer are ethylene glycol di(meth)acrylate and pentaerythritol di(meth)acrylate, and ethylene glycol di(meth)acrylate is more preferred.

The difunctional crosslinkable hydrocarbon monomer is particularly preferably divinylbenzene.

From the viewpoint of improving the pressure resistance of the hollow particles, in 100 parts by mass of the polymerizable monomer, the content of the crosslinkable monomer is 50 parts by mass or more, more preferably 60 parts by mass or more, still more preferably 70 parts by mass or more, and even more preferably 80 parts by mass or more. When the content of the crosslinkable monomer is equal to or more than the above-described lower limit, the hollow portion is likely to be formed in the interior of the particles; the particles are likely to be spherical; and since the crosslinking density of the shell can be improved, there is an advantage that the solvent resistance, strength, heat resistance and so on of the hollow particles can be improved. On the other hand, the polymerizable monomer may contain a non-crosslinkable monomer to the extent that does not impair the effects of the present disclosure. In this case, in 100 parts by mass of the polymerizable monomer, the content of the crosslinkable monomer may be 95 parts by mass or less, or it may be 90 parts by mass or less, for example.

The content of the crosslinkable monomer is the total content of the difunctional crosslinkable monomer and the trifunctional or higher-functional crosslinkable monomer.

When the crosslinkable monomer contains the trifunctional or higher-functional crosslinkable monomer, from the viewpoint of improving the pressure resistance of the hollow particles, in 100 parts by mass of the polymerizable monomer, the lower limit of the content of the trifunctional or higher-functional crosslinkable monomer is preferably 10 parts by mass or more, and more preferably 20 parts by mass or more. The upper limit is preferably 50 parts by mass or less, more preferably 40 parts by mass or less, and still more preferably 30 parts by mass or less.

When the crosslinkable monomer contains the difunctional crosslinkable monomer and the trifunctional or higher-functional crosslinkable monomer, from the viewpoint of improving the pressure resistance of the hollow particles, with respect to the total mass (100 parts by mass) of the difunctional crosslinkable monomer and the trifunctional or higher-functional crosslinkable monomer, the lower limit of the content of the trifunctional crosslinkable monomer is preferably 5 parts by mass or more, more preferably 10 parts by mass or more, and still more preferably 20 parts by mass or more. On the other hand, the upper limit is preferably 50 parts by mass or less, and more preferably 40 parts by mass or less.

The polymerizable monomer may contain a non-crosslinkable monomer, to the extent that does not impair the effects of the present disclosure. As the non-crosslinkable monomer, examples include, but are not limited to, a non-crosslinkable acrylic monomer such as (meth)acrylic acid alkyl ester (e.g., methyl (meth)acrylate, ethyl (meth)acrylate, butyl (meth)acrylate, 2-ethylhexyl (meth)acrylate, lauryl (meth)acrylate), glycidyl (meth)acrylate, 2-hydroxyethyl (meth) acrylate, (meth)acrylic acid, (meth)acrylamide, N-methylol (meth)acrylamide and N-butoxymethyl (meth)acrylamide; a non-crosslinkable hydrocarbon monomer such as an aromatic vinyl monomer (e.g., styrene, vinyl toluene, $\alpha$-methyl-styrene, p-methylstyrene, ethylvinylbenzene, ethylvinylbiphenyl and ethylvinylnaphthalene), a monoolefin monomer (e.g., ethylene, propylene and butylene) and a diene monomer (e.g., butadiene and isoprene); a carboxylic acid vinyl ester monomer such as vinyl acetate; a halogenated aromatic vinyl monomer such as halogenated styrene; a vinyl halide monomer such as vinyl chloride; a vinylidene halide monomer such as vinylidene chloride; and a vinylpyridine monomer. These non-crosslinkable monomers may be used alone or in combination of two or more.

As the non-crosslinkable monomer, a (meth)acrylic acid alkyl ester and an aromatic vinyl monomer are preferred, and an aromatic vinyl monomer is more preferred, from the point of view that the polymerization reaction is easily stabilized, and a decrease in the pressure resistance of the hollow particles is suppressed. As the (meth)acrylic acid alkyl ester, butyl acrylate and methyl methacrylate are particularly preferred. As the aromatic vinyl monomer, ethylvinylbenzene is particularly preferred.

From the viewpoint of improving the stability of the polymerization reaction, in 100 parts by mass of the polymerizable monomer, the content of the acrylic monomer is preferably 10 parts by mass or more, and more preferably 20 parts by mass or more.

From the viewpoint of improving the stability of the polymerization reaction and improving the pressure resistance of the hollow particles, in 100 parts by mass of the polymerizable monomer, the content of the acrylic monomer and the hydrocarbon monomer is preferably 80 parts by mass or more, more preferably 90 parts by mass or more, still more preferably 98 parts by mass or more, and even more preferably 99 parts by mass or more.

When the polymerizable monomer contains the acrylic monomer and the hydrocarbon monomer, from the viewpoint of improving the pressure resistance of the hollow particles, with respect to a total 100 parts by mass of the acrylic monomer and the hydrocarbon monomer, the lower limit of the content of the hydrocarbon monomer is preferably 10 parts by mass or more, more preferably 20 parts by mass or more, and still more preferably 30 parts by mass or more. The upper limit is preferably 90 parts by mass or less, and more preferably 80 parts by mass or less.

The content of the polymerizable monomer in the mixture liquid is not particularly limited. From the viewpoint of the balance of the void ratio, particle diameter and mechanical strength of the hollow particles, with respect to the total mass (100% by mass) of the components (except for the aqueous medium) in the mixture liquid, the lower limit of the content of the polymerizable monomer is preferably 30% by mass or more, and more preferably 40% by mass or more. The upper limit is preferably 60% by mass or less, and more preferably 50% by mass or less.

From the viewpoint of the mechanical strength of the hollow particles, the content of the polymerizable monomer is preferably 95% by mass or more, and more preferably 97% by mass or more, with respect to the total mass (100% by mass) of solid components which are materials to be made into the oil phase with proviso that the hydrophobic solvent is excluded.

In the present disclosure, the solid component includes all components excluding solvent, and a liquid polymerizable monomer and the like are included in the solid component.

(B) Hydrophobic solvent

The hydrophobic solvent used in the production method of the present disclosure is a non-polymerizable, sparingly water-soluble (or, slightly water-soluble) organic solvent.

The hydrophobic solvent serves as a spacer material for forming the hollow portion in the interior of the particles. In the suspension step described later, the suspension in which the droplets of the monomer composition containing the hydrophobic solvent are dispersed in the aqueous medium, is obtained. In the suspension step, phase separation occurs in the droplets of the monomer composition. As a result, the hydrophobic solvent with low polarity is likely to collect in the interior of the droplets of the monomer composition, hence in the droplets of the monomer composition, the hydrophobic solvent is distributed to the interior of the droplets, and the materials other than the hydrophobic solvent is distributed to the periphery of the droplets according to their respective polarities.

Then, in the polymerization step described later, an aqueous dispersion containing the precursor particles including the hydrophobic solvent, is obtained. That is, since the hydrophobic solvent collects in the interior of the particles, the hollow portion filled with the hydrophobic solvent is formed in the interior of the obtained precursor particles.

The hydrophobic solvent can be appropriately selected from known hydrophobic solvents, without particular limitation. As the hydrophobic solvent, examples include an ester such as ethyl acetate and butyl acetate; an ether ester such as propylene glycol monomethyl ether acetate and propylene glycol monoethyl ether acetate; and a hydrocarbon solvent. Of them, a hydrocarbon solvent is preferably used.

As the hydrocarbon solvent, examples include aliphatic hydrocarbons including a chain hydrocarbon solvent such as pentane, hexane, heptane, octane, 2-methylbutane and 2-methylpentane, and a cyclic hydrocarbon solvent such as cyclohexane, methylcyclohexane and cycloheptane; and an aromatic hydrocarbon solvent such as benzene, toluene and xylene.

These hydrophobic solvents may be used alone or in combination of two or more.

From the point of view that phase separation easily occurs between the polymerizable monomer and hydrophobic solvent in the droplets of the monomer composition during the suspension step, such an organic solvent is preferably selected as the hydrophobic solvent, that the water solubility is smaller than the crosslinkable monomer contained in the polymerizable monomer.

When the polymerizable monomer contains the acrylic monomer and the hydrocarbon monomer, a chain hydrocarbon solvent is preferably used as the hydrophobic solvent. Among them, a chain hydrocarbon solvent containing 5 to 8 carbon atoms is preferable, and at least one chain hydrocarbon solvent selected from the group consisting of pentane, hexane, heptane and octane is more preferable.

When the polymerizable monomer contains the acrylic monomer and does not contain the hydrocarbon monomer, a hydrocarbon solvent containing 4 to 7 carbon atoms is preferably used, and a hydrocarbon solvent containing 5 to 7 carbon atoms is more preferably used as the hydrophobic solvent. The hydrocarbon solvent may be an aromatic or aliphatic hydrocarbon. Among them, an aliphatic hydrocarbon is preferable, a cyclic hydrocarbon solvent is more preferable, and at least one selected from the group consisting of cyclohexane, cycloheptane and methylcyclohexane is still more preferable.

The above-described combination of the polymerizable monomer and the hydrophobic solvent is preferably used, since the pressure resistance of the hollow particles is easily improved. The combination use of the polymerizable monomer containing the acrylic monomer and the hydrocarbon monomer and the preferred hydrophobic solvent described above, is particularly preferred, since the uniformity of the shell is improved, and the pressure resistance of the hollow particles is improved, accordingly.

Though the hydrophobic solvent is not particularly limited for its boiling point of, from the viewpoint of ease of removal in the solvent removal step described later, the boiling point of the hydrophobic solvent is preferably 130°C or less, and more preferably 100°C or less. On the other hand, the boiling point of the hydrophobic solvent is preferably 50°C or more, and more preferably 60°C or more, from the point of view that the hydrophobic solvent can be easily included in the precursor particles.

When the hydrophobic solvent is a mixed solvent containing several kinds of hydrophobic solvents and it has several boiling points, the boiling point of the solvent having the highest boiling point among the solvents contained in the mixed solvent, is preferably equal to or less than the above-described upper limit value, and the boiling point of the solvent having the lowest boiling point among the solvents contained in the mixed solvent, is preferably equal to or more than the above-described lower limit value.

The relative permittivity at 20°C of the hydrophobic solvent used in the production method of the present disclosure, is preferably 2.0 or less. The relative permittivity is one of the indices of the level of the polarity of a compound. In the case where the relative permittivity of the hydrophobic solvent is sufficiently small to the extent of 2.0 or less, it is considered that phase separation progresses rapidly in the droplets of the monomer composition and the hollow portion is easily formed.

Examples of hydrophobic solvents having a relative permittivity at 20°C of 2.0 or less, are as follows. The inside of the parentheses is the value of relative permittivity.

Pentane (1.8), hexane (1.9), heptane (1.9), octane (1.9), cyclohexane (2.0).

For the relative permittivity at 20°C, values written in known literatures (for example, the Chemical Society of Japan, as editor, "Kagaku Binran, Kiso Hen, revised 4th edition", pp. II-498 to II-503, published by Maruzen Publishing Co., Ltd. on September 30, 1993) and other technical information may be used as reference. Examples of the method of measuring the relative permittivity at 20°C include a relative permittivity test that is in conformity with 23 of JIS C 2101:1999 and is performed with the measuring temperature set to 20°C.

The void ratio of the hollow particles can be controlled by changing the amount of the hydrophobic solvent in the mixture liquid. In the polymerization step described later, the polymerization reaction progresses in a state that oil droplets containing the polymerizable monomer and so on include the hydrophobic solvent. Accordingly, as the content of the hydrophobic solvent gets larger, the void ratio of the obtained hollow particles tends to increase.

In the present disclosure, with respect to 100 parts by mass of the polymerizable monomer, the content of the hydrophobic solvent in the mixture liquid is preferably 50 parts by mass or more and 500 parts by mass or less, from the following viewpoints: the particle diameter of the hollow particles is easily controlled; the void ratio is easily increased while maintaining the strength of the hollow particles; and the amount of the residual hydrophobic solvent in the hollow particles is easily reduced. The content of the hydrophobic solvent in the mixture liquid is more preferably 70 parts by mass or more and 300 parts by mass or less, and still more preferably 90 parts by mass or more and 200 parts by mass or less, with respect to 100 parts by mass of the polymerizable monomer.

(C) Polymerization initiator

In the production method of the present disclosure, the mixture liquid preferably contains an oil-soluble polymerization initiator as the polymerization initiator. As the method for polymerizing the droplets of the monomer composition after suspending the mixture liquid, examples include an emulsion polymerization method using a water-soluble polymerization initiator and a suspension polymerization method using an oil-soluble polymerization initiator. By using the oil-soluble polymerization initiator, suspension polymerization can be performed.

The oil-soluble polymerization initiator is not particularly limited, as long as it is a lipophilic one having a solubility in water of 0.2% by mass or less. As the oil-soluble polymerization initiator, examples include, but are not limited to, an organic peroxide such as benzoyl peroxide, lauroyl peroxide, t-butyl peroxy-2-ethylhexanoate, t-butylperoxy diethylacetate and t-butylperoxy pivalate, and an azo compound such as 2,2'-azobis(2,4-dimethylvaleronitrile), azobis(isobutyronitrile) and 2,2'-azobis(4-methoxy-2,4-dimethylvaleronitrile).

With respect to 100 parts by mass of the polymerizable monomer in the mixture liquid, the content of the polymerization initiator is preferably from 0.1 parts by mass to 10 parts by mass, more preferably from 0.5 parts by mass to 7 parts by mass, and still more preferably from 1 part by mass to 5 parts by mass. When the content of the polymerization initiator is equal to or more than the above-described lower limit value, a polymerization reaction can progress sufficiently. When the content of the polymerization initiator is equal to or less than the above-described upper limit value, the oil-soluble polymerization initiator is less likely to remain after the end of the polymerization reaction, and an unexpected side reaction is less likely to progress.

(D) Dispersion stabilizer

The dispersion stabilizer is an agent for dispersing the droplets of the monomer composition in the aqueous medium in the suspension step. In the present disclosure, an inorganic dispersion stabilizer is preferably used as the dispersion stabilizer, from the point of view that the particle diameter of the droplets can be easily controlled in the suspension, and the particle size distribution of the obtained hollow particles can be sharp, and that an excessive decrease in the shell thickness is suppressed, and a decrease in the strength of the hollow particles is suppressed.

As the inorganic dispersion stabilizer, examples include, but are not limited to, inorganic compounds including a sulfate such as barium sulfate and calcium sulfate; a carbonate such as barium carbonate, calcium carbonate and magnesium carbonate; a phosphate such as calcium phosphate; a metal oxide such as aluminum oxide and titanium oxide; a metal hydroxide such as aluminum hydroxide, magnesium hydroxide, calcium hydroxide, barium hydroxide and iron(II)hydroxide. These inorganic dispersion stabilizers may be used alone or in combination of two or more.

Of these inorganic dispersion stabilizers, a sparingly water-soluble metal salt such as the above-mentioned sulfate, carbonate, phosphate and metal hydroxide is preferred; a metal hydroxide is more preferred; and magnesium hydroxide is still more preferred.

In the present disclosure, "sparingly water-soluble" is preferably such that the solubility in 100 g of water is 0.5 g or less.

In the present disclosure, the sparingly water-soluble inorganic dispersion stabilizer is particularly preferably used in the form of colloidal particles being dispersed in the aqueous medium, that is, in the form of a colloidal dispersion containing the sparingly water-soluble, inorganic dispersion stabilizer colloidal particles. Accordingly, the particle size distribution of the droplets of the monomer composition can be sharp; moreover, the amount of the residual inorganic dispersion stabilizer in the obtained hollow particles can be easily reduced by washing.

The colloidal dispersion containing the sparingly water-soluble inorganic dispersion stabilizer colloidal particles can be prepared by, for example, reacting at least one selected from the group consisting of alkali metal hydroxide salts and alkaline earth metal hydroxide salts with a water-soluble multivalent metal salt, which is not an alkaline earth metal hydroxide salt, in the aqueous medium.

As the alkali metal hydroxide salts, examples include, but are not limited to, lithium hydroxide, sodium hydroxide and potassium hydroxide. As the alkaline earth metal hydroxide salts, examples include, but are not limited to, barium hydroxide and calcium hydroxide.

The water-soluble multivalent metal salt is only required to be a water-soluble multivalent metal salt other than compounds corresponding to the above-mentioned alkaline earth metal hydroxide salts. As the multivalent metal salt, examples include, but are not limited to, magnesium metal salts such as magnesium chloride, magnesium phosphate and magnesium sulfate; calcium metal salts such as calcium chloride, calcium nitrate, calcium acetate and calcium sulfate; aluminum metal salts such as aluminum chloride and aluminum sulfate; barium salts such as barium chloride, barium nitrate and barium acetate; and zinc salts such as zinc chloride, zinc nitrate and zinc acetate. Among them, magnesium metal salts, calcium metal salts and aluminum metal salts are preferred; magnesium metal salts are more preferred; and magnesium chloride is particularly preferred. The water-soluble multivalent metal salts may be used alone or in combination of two or more.

The method for reacting the water-soluble multivalent metal salt with the at least one selected from the group consisting of alkali metal hydroxide salts and alkaline earth metal hydroxide salts in the aqueous medium, is not particularly limited. As the method, examples include, but are not limited to, mixing an aqueous solution of the water-soluble multivalent metal salt and an aqueous solution of the at least one selected from the group consisting of alkali metal hydroxide salts and alkaline earth metal hydroxide salts.

The content of the dispersion stabilizer is not particularly limited. With respect to the total mass (100 parts by mass) of the polymerizable monomer and the hydrophobic solvent, the content of the dispersion stabilizer is preferably from 0.5 parts by mass to 15 parts by mass, and more preferably from 1 part by mass to 10 parts by mass. When the content of the dispersion stabilizer is equal to or more than the above-described lower limit value, the droplets of the monomer composition can be sufficiently dispersed in the suspension so that they do not join together. On the other hand, when the content of the dispersion stabilizer is equal to or less than the above-described upper limit value, an increase in the viscosity of the suspension is prevented in the formation of the droplets, and a problem such that a droplet forming machine is clogged with the suspension, can be avoided.

With respect to 100 parts by mass of the aqueous medium, the content of the dispersion stabilizer is preferably from 0.5 parts by mass to 15 parts by mass, and more preferably from 0.5 parts by mass to 10 parts by mass.

(E) Aqueous medium

In the present disclosure, the term "aqueous medium" means a medium selected from the group consisting of water, a hydrophilic solvent and a mixture thereof.

When a mixture of water and a hydrophilic solvent is used, from the viewpoint of forming the droplets of the monomer composition, it is important that the polarity of the entire mixture is not too low. In this case, for example, the mass ratio between water and the hydrophilic solvent (water : hydrophilic solvent) may be set to 99:1 to 50:50.

In the present disclosure, the hydrophilic solvent is not particularly limited, as long as it is one that mixes with water sufficiently and does not develop phase separation. As the hydrophilic solvent, examples include, but are not limited to, alcohols such as methanol and ethanol; tetrahydrofuran (THF); and dimethyl sulfoxide (DMSO).

The content of the aqueous medium is not particularly limited. From the viewpoint of controlling the particle diameter and void ratio of the hollow particles in the preferred ranges described below, with respect to 100 parts by mass of the polymerizable monomer contained in the mixture liquid, the lower limit of the content of the aqueous medium is preferably 200 parts by mass or more, more preferably 400 parts by mass or more, and still more preferably 600 parts by mass or more. The upper limit is preferably 1000 parts by mass or less, and more preferably 800 parts by mass or less.

The mixture liquid may further contain other materials that are different from the above-mentioned materials (A) to (E), to the extent that does not impair the effects of the present disclosure.

The mixture liquid is obtained by mixing the above-mentioned materials and other materials as needed, appropriately stirring the mixture, etc. In the mixture liquid, an oil phase containing lipophilic materials such as (A) the polymerizable monomer, (B) the hydrophobic solvent and (C) the polymerization initiator is dispersed with a size of a particle diameter of approximately several millimeters in an aqueous phase containing (D) the dispersion stabilizer, (E) the aqueous medium, etc. The dispersion state of these materials in the mixture liquid can be observed with the naked eye, depending on the types of the materials.

In the mixture liquid preparation step, the mixture liquid may be obtained by simply mixing the above-mentioned materials and other materials as needed, appropriately stirring the mixture, etc. From the point of view that the shell can be easily uniform, it is preferable to prepare the mixture liquid by separately preparing the oil phase, which contains the polymerizable monomer, the hydrophobic solvent and the polymerization initiator, and the aqueous phase, which contains the dispersion stabilizer and the aqueous medium, in advance, and then mixing the phases together. In the present disclosure, a colloidal dispersion in which a sparingly water-soluble inorganic dispersion stabilizer is dispersed in the form of colloidal particles in the aqueous medium, can be preferably used as the aqueous phase.

As just described, by separately preparing the oil phase and the aqueous phase in advance and then mixing them, hollow particles such that the composition of the shell portion is uniform, can be produced. Also, the particle diameter of the hollow particles can be easily controlled.

(2) Suspension step

The suspension step includes suspending the mixture liquid to prepare the suspension in which the droplets of the monomer composition containing the hydrophobic solvent are dispersed in the aqueous medium.

The suspension method for forming the droplets of the monomer composition is not particularly limited, and a known suspension method can be employed. A disperser is used to prepare the suspension, and it may be a commercially-available mixer. As the mixer, examples include, but are not limited to, a horizontal or vertical in-line disperser such as MILDER (product name, manufactured by Pacific Machinery & Engineering Co., Ltd.), CAVITRON (product name, manufactured by EUROTEC, Ltd.) and an in-line disperser manufactured by IKA (e.g., DISPAX-REACTOR (registered trademark) DRS (product name)), and an emulsifying disperser such as HOMOMIXER MARK II series manufactured by PRIMIX Corporation.

In the suspension prepared in the suspension step, the droplets of the monomer composition containing the lipophilic materials mentioned above and having a particle diameter of approximately from 5 $\mu$m to 40 $\mu$m, are dispersed uniformly in the aqueous medium. Such droplets of the monomer composition are difficult to observe with the naked eye and can be observed with a known observation instrument such as an optical microscope.

In the suspension step, since phase separation occurs in the droplets of the monomer composition, the hydrophobic solvent with low polarity is likely to collect in the interior of the droplets. As a result, in the obtained droplets, the hydrophobic solvent is distributed in the interior thereof, and the material other than the hydrophobic solvent is distributed at the periphery thereof.

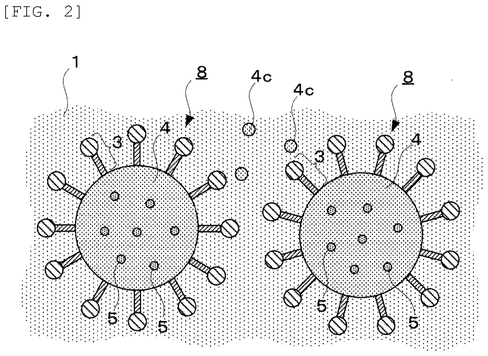

FIG. 2 is a schematic diagram showing an embodiment of the suspension in the suspension step. Each droplet 8 of the monomer composition in FIG. 2 schematically shows a cross section thereof. FIG. 2 is merely a schematic diagram, and the suspension in the present disclosure is not limited to that shown in FIG. 2. A part of FIG. 2 corresponds to the diagram (2) of FIG. 1 described above.

FIG. 2 shows a state where the droplets 8 of the monomer composition and the polymerizable monomer 4c are dispersed in the aqueous medium 1. Each droplet 8 is formed by surrounding the periphery of the oil-soluble monomer composition 4 with a dispersion stabilizer 3.

The monomer composition contains the oil-soluble polymerization initiator 5, the polymerizable monomer and the hydrophobic solvent (the polymerizable monomer and the hydrophobic solvent are not illustrated).

Each droplet 8 is a minute oil droplet which contains the monomer composition 4, and the oil-soluble polymerization initiator 5 generates polymerization initiating radicals in the interior of the minute oil droplet. Therefore, the precursor particles with a target particle diameter can be produced without excessively growing the minute oil droplet.

In such a suspension polymerization method using the oil-soluble polymerization initiator, there is no opportunity for the polymerization initiator to come into contact with the polymerizable monomer 4c dispersed in the aqueous medium 1. Thus, the generation of the other resin particles as by-products (e.g., solid particles having a relatively small particle diameter) in addition to the target resin particles having the hollow portion, can be suppressed by using the oil-soluble polymerization initiator.

(3) Polymerization step

The polymerization step includes subjecting the suspension obtained by the above-described suspension step to a polymerization reaction to prepare a precursor composition containing precursor particles which have a hollow portion surrounded by a shell containing a resin and which include the hydrophobic solvent in the hollow portion. The precursor particles are formed by polymerization of the polymerizable monomer contained in the droplets of the monomer composition, and the shell of the precursor particles contains the polymer of the polymerizable monomer as the resin.

The polymerization system is not particularly limited. For example, a batch system, a semicontinuous system or a continuous system may be employed.

The polymerization temperature is preferably from 40°C to 90°C, and more preferably from 50°C to 80°C.

The polymerization reaction time is preferably from 1 hour to 48 hours, and more preferably from 4 hours to 36 hours.

Also, in the polymerization step of the production method of the present disclosure, during the polymerization reaction of the polymerizable monomer in the suspension, a polymerizable monomer may be further added to further continue the polymerization reaction. By carrying out the polymerization reaction in two stages in the polymerization step, the pressure resistance of the hollow particles may be improved.

In the polymerization step, the droplets of the monomer composition include the hydrophobic solvent in the interior and the shell portion of the droplets polymerizes. Accordingly, as described above, the hollow portion filled with the hydrophobic solvent is formed in the interior of the obtained precursor particles.

(4) Solid-liquid separation step

The solid-liquid separation step includes performing solid-liquid separation of the precursor composition which is obtained by the above-described polymerization step and contains the precursor particles, to obtain a solid component containing the precursor particles.

The method of performing the solid-liquid separation of the precursor composition is not particularly limited, and a known method may be used. Examples of the solid-liquid separation method include a centrifugation method, a filtration method, and still-standing separation. Among them, a centrifugation method or a filtration method may be employed, and from the viewpoint of simplicity of the operation, a centrifugation method may be employed.

Any step such as a preliminary drying step may be performed at a time after the solid-liquid separation step and before performing the solvent removal step described later. Examples of the preliminary drying step include drying the solid component obtained after the solid-liquid separation step, by use of a drying apparatus such as a dryer and a drying appliance such as a hand dryer.

(5) Solvent removal step

The solvent removal step includes removing the hydrophobic solvent from the precursor particles obtained by the solid-liquid separation step.

For example, by removing the hydrophobic solvent from the precursor particles in a gaseous atmosphere, the hydrophobic solvent in the interior of the precursor particles is substituted with air, and the hollow particles filled with gas are obtained.

In this step, the term "in a gaseous atmosphere" includes "in an environment where no liquid component exists in the outside of the precursor particles" and "in an environment where only a very small amount of liquid component at a level that does not influence the removal of the hydrophobic solvent, exists in the outside of the precursor particles" in a strict sense. The term "in a gaseous atmosphere" can be reworded as a state where the precursor particles do not exist in a slurry, or it can be reworded as a state where the precursor particles exist in a dry powder. That is, in this step, it is important to remove the hydrophobic solvent in an environment where the precursor particles come into direct contact with the outside gas.

The method of removing the hydrophobic solvent from the precursor particles in a gaseous atmosphere, is not particularly limited, and a known method may be employed. Examples of the method include a reduced pressure drying method, a heat drying method, a flash drying method, and the combination of these methods.

Especially, in the case of using the heat drying method, the heating temperature needs to be set to more than or equal to the boiling point of the hydrophobic solvent and less than or equal to the highest temperature at which the shell structure of the precursor particles does not collapse. Depending on the composition of the shell and the type of the hydrophobic solvent in the precursor particles, the heating temperature may be from 50°C to 200°C, may be from 70°C to 200°C, or may be from 100°C to 200°C, for example.

The hydrophobic solvent in the interior of the precursor particles is substituted with the outside gas by the drying operation in the gaseous atmosphere. As a result, the hollow particles in which the hollow portion is occupied by gas, are obtained.

The drying atmosphere is not particularly limited and may be appropriately selected depending on the intended application of the hollow particles. Possible examples of the drying atmosphere include air, oxygen, nitrogen and argon. Further, by filling the interior of the hollow particles with gas once and then performing reduced pressure drying, hollow particles in which the interior is vacuum are also temporarily obtained.

As another method, the hydrophobic solvent may be removed as follows: the precursor composition obtained in the polymerization step, which is in the form of slurry, is not subjected to solid-liquid separation and, instead, the included hydrophobic solvent may be removed from the precursor particles in the slurry containing the precursor particles and the aqueous medium.

In this method, at a temperature equal to or more than the temperature obtained by subtracting 35°C from the boiling point of the hydrophobic solvent, an inert gas is bubbled into the precursor composition. Accordingly, the hydrophobic solvent can be removed from the precursor particles.

When the hydrophobic solvent is a mixed solvent containing several types of hydrophobic solvents and it has several boiling points, the boiling point of the hydrophobic solvent in the solvent removal step is determined as the boiling point of the solvent having the highest boiling point among the solvents contained in the mixed solvent, that is, the highest boiling point of the several boiling points.

The temperature at the time of bubbling the inert gas into the precursor composition, is preferably a temperature equal to or more than the temperature obtained by subtracting 30°C from the boiling point of the hydrophobic solvent, and more preferably a temperature equal to or more than the temperature obtained by subtracting 20°C from the boiling point of the hydrophobic solvent, from the viewpoint of reducing the amount of the residual hydrophobic solvent in the hollow particles. The temperature at the time of bubbling is generally set to a temperature equal to or more than the polymerization temperature of the polymerization step. The temperature at the time of bubbling is not particularly limited, and it may be 50°C or more and 100°C or less.

The inert gas used for the bubbling is not particularly limited. As the inert gas, examples include, but are not limited to, nitrogen and argon.

Depending on the type and amount of the hydrophobic solvent, the bubbling condition is appropriately controlled so that the hydrophobic solvent can be removed from the precursor particles. The bubbling condition is not particularly limited. For example, the inert gas may be bubbled in an amount of 1 L/min to 3 L/min for 1 hour to 10 hours.

By this method, a slurry of the hollow particles containing the aqueous medium is obtained. The slurry is subjected to solid-liquid separation to obtain hollow particles, and the aqueous medium contained in the hollow particles is removed from the hollow particles, thereby obtaining the hollow particles in which the hollow portion is occupied by gas.

As the method for obtaining the hollow particles, in which the hollow portion is filled with gas, by subjecting the precursor composition in the form of slurry to solid-liquid separation and then removing the hydrophobic solvent from the precursor particles in the gaseous atmosphere, is compared to the method for obtaining the hollow particles in which, the hollow portion is filled with gas, by removing, in the slurry containing the precursor particles and the aqueous medium, the included hydrophobic solvent from the precursor particles, subjecting the slurry to solid-liquid separation, and then removing the contained aqueous medium from the hollow particles in the gaseous atmosphere, the former method is advantageous in that the hollow particles are less likely to collapse in the hydrophobic solvent removal step, and the latter method is advantageous in that the amount of the residual hydrophobic solvent is decreased by bubbling the inert gas.

Also, the hydrophobic organic solvent included in the precursor particles may be removed therefrom after the polymerization step and before the solid-liquid separation step, without the solid-liquid separation of the slurry precursor composition obtained in the polymerization step, by use of the following method, for example: evaporating the hydrophobic organic solvent included in the precursor particles from the precursor composition at a predetermined pressure (a high, normal or reduced pressure), or evaporating the hydrophobic organic solvent included in the precursor particles from the precursor composition by introducing water vapor or inert gas such as nitrogen, argon and helium to the precursor composition at a predetermined pressure (a high, normal or reduced pressure) .

(6) Others

In addition to the steps (1) to (5) mentioned above, the following washing step (6-a) and the following hollow portion re-substitution step (6-b) may be added, for example.

(6-a) Washing step

The washing step includes carrying out washing by adding acid or alkali, for removal of the dispersion stabilizer remaining in the precursor composition containing the precursor particles before the solvent removal step. When the dispersion stabilizer used is an acid-soluble inorganic dispersion stabilizer, washing is preferably carried out by adding acid to the precursor composition containing the precursor particles. When the dispersion stabilizer used is an alkali-soluble inorganic compound, washing is preferably carried out by adding alkali to the precursor composition containing the precursor particles.

When the acid-soluble inorganic dispersion stabilizer is used as the dispersion stabilizer, the pH of the precursor composition is preferably adjusted to 6.5 or less, and more preferably 6 or less, by adding acid to the precursor composition containing the precursor particles. As the added acid, an inorganic acid such as sulfuric acid, hydrochloric acid and nitric acid or an organic acid such as formic acid and acetic acid may be used. Of them, sulfuric acid is particularly preferred, due to its high dispersion stabilizer removal efficiency and small influence on production equipment.

(6-b) Hollow portion re-substitution step

The hollow portion re-substitution step includes substituting the gas or liquid in the interior of the hollow particles with another gas or liquid. By such substitution, the environment of the interior of the hollow particles can be changed; molecules can be selectively encapsulated in the interior of the hollow particles; or the chemical structure of the interior of the hollow particles can be modified in accordance with the intended application.

The hollow particles used in the present disclosure contain the polymer of the above-described polymerizable monomer as the main component of the shell, and the polymer forms the skeleton of the shell of the hollow particles.

In the hollow particles of the present disclosure, from the viewpoint of improving the pressure resistance, the polymer contained in the shell contains a crosslinkable monomer unit. In 100 parts by mass of all the monomer units of the polymer, the content of the crosslinkable monomer unit is 50 parts by mass or more, preferably 60 parts by mass or more, more preferably 70 parts by mass or more, and still more preferably 80 parts by mass or more. On the other hand, the polymer may contain a non-crosslinkable monomer unit to the extent that does not impair the effects of the present disclosure. In this case, in 100 parts by mass of all the monomer units of the polymer, the content of the crosslinkable monomer unit may be 95 parts by mass or less, or it may be 90 parts by mass or less, for example.

In the hollow particles used in the present disclosure, from the viewpoint of improving the pressure resistance, the polymer contained in the shell preferably contains a trifunctional or higher-functional crosslinkable monomer unit. In 100 parts by mass of all the monomer units of the polymer, the lower limit of the content of the trifunctional or higher-functional crosslinkable monomer unit is preferably 10 parts by mass or more, and more preferably 20 parts by mass or more. The upper limit is preferably 50 parts by mass or less, more preferably 40 parts by mass or less, and still more preferably 30 parts by mass or less.

In the hollow particles used in the present disclosure, from the viewpoint of improving the pressure resistance, the polymer contained in the shell preferably contains a difunctional crosslinkable monomer unit and a trifunctional or higher-functional crosslinkable monomer unit. When the polymer contains a difunctional crosslinkable monomer unit and a trifunctional or higher-functional crosslinkable monomer unit, in a total 100 parts by mass of the difunctional crosslinkable monomer unit and the trifunctional or higher-functional crosslinkable monomer unit, the content of the trifunctional or higher-functional crosslinkable monomer unit is preferably 5 parts by mass or more, more preferably 10 parts by mass or more, and still more preferably 20 parts by mass or more. On the other hand, it is preferably 50 parts by mass or less, and more preferably 40 parts by mass or less.

In the present disclosure, the crosslinkable monomer unit derived from the difunctional crosslinkable monomer may be referred to as "difunctional crosslinkable monomer unit", and the crosslinkable monomer unit derived from the trifunctional or higher-functional crosslinkable monomer may be referred to as "trifunctional or higher-functional crosslinkable monomer unit".

Also, in the hollow particles used in the present disclosure, from the point of view that the uniformity of the shell is easily improved, the polymer contained in the shell preferably contains an acrylic monomer unit. The content of the acrylic monomer unit is not particularly limited. In 100% by mass of all the monomer units, the content of the acrylic monomer unit is preferably 10 parts by mass or more, and more preferably 20 parts by mass or more.

Also, in the hollow particles used in the present disclosure, from the point of view that the shell uniformity is easily improved and the pressure resistance is improved, the polymer contained in the shell preferably contains an acrylic monomer unit and a hydrocarbon monomer unit.

In 100 parts by mass of all the monomer units of the polymer, the total content of the acrylic monomer unit and the hydrocarbon monomer unit is preferably 80 parts by mass or more, more preferably 90 parts by mass or more, still more preferably 98 parts by mass or more, and even more preferably 99 parts by mass or more.

When the polymer contained in the shell contains the acrylic monomer unit and the hydrocarbon monomer unit, from the viewpoint of improving the pressure resistance of the hollow particles, in a total 100 parts by mass of the acrylic monomer unit and the hydrocarbon monomer unit, the lower limit of the content of the hydrocarbon monomer unit is preferably 10 parts by mass or more, more preferably 20 parts by mass or more, and still more preferably 30 parts by mass or more. The upper limit is preferably 90 parts by mass or less, and more preferably 80 parts by mass or less.

In the total solid content (100% by mass) of the shell, the content of the polymer synthesized from the polymerizable monomer is preferably 96% by mass or more, and more preferably 97% by mass or more. By adjusting the content of the polymer to equal to or more than the above-described lower limit value, a decrease in the pressure resistance of the hollow particles can be suppressed. That is, from the viewpoint of suppressing a decrease in the pressure resistance of the hollow particles, in the total solid content (100% by mass) of the shell, the content of the components other than the polymer is preferably 4% by mass or less, and more preferably 3% by mass or less.

As the components other than the polymer contained in the hollow particles used in the present disclosure, examples include, but are not limited to, residual polymerizable monomers which is still unreacted, polymers different from the polymer of the polymerizable monomer, the decomposition product of the polymerization initiator, and low-molecular compounds contained as impurities in the raw materials for the polymerizable monomer. When the components have a low boiling point (e.g., a boiling point of 200°C or less), they are generally removed in the process of producing the hollow particles. However, when the components have a high boiling point (e.g., a boiling point of 250°C or more), there is a possibility that they are not removed and remain.

[Plasticizer]

To adjust the storage elastic modulus G' of the hollow particle-containing elastomer composition measured in the predetermined condition to the certain value or less, a plasticizer is added to the hollow particle-containing elastomer composition of the present disclosure, as needed. As the plasticizer, a plasticizer that is generally used in in-vehicle material applications, general plastic or rubber product applications and so on, or a plasticizer that is configured to impart flexibility, can be used.

For example, the following plasticizers can be used as the plasticizer: a petroleum-based softening agent such as process oil, lubricating oil, paraffin, liquid paraffin, petroleum asphalt and petrolatum; a coal tar-based softening agent such as coal tar and coal-tar pitch; a fatty oil-based softening agent such as castor oil, linseed oil, canola oil and palm oil; tall oil; a wax such as beeswax, carnauba wax and lanolin; a fatty acid or fatty acid salt such as ricinoleic acid, palmitic acid, barium stearate, calcium stearate and zinc laurate; a synthetic polymer substance such as petroleum resin, atactic polypropylene and coumarone-indene resin; an ester-based plasticizer such as dioctyl phthalate, dioctyl adipate and dioctyl sebacate; a carbonate ester-based plasticizer such as diisododecyl carbonate; and others such as microcrystalline wax, a rubber substitute (factice), liquid polybutadiene, modified liquid polybutadiene, liquid Thiokol and hydrocarbon-based synthetic lubricating oil. These plasticizers can be used alone or in combination of two or more.

From the viewpoint of preventing the plasticizer from bleeding from the molded body produced by use of the hollow particle-containing elastomer composition of the present disclosure, as the plasticizer, a plasticizer selected from polymers having a reaction active site that can bind to the base material elastomer and having a weight average molecular weight of 1000 or more and 100000 or less (hereinafter, it may be referred to as "reaction active site-containing plasticizer") is preferably contained.

The reaction active site-containing plasticizer functions as a plasticizer when melt-kneading the elastomer composition and the raw material mixture thereof. In addition, the reaction active site-containing plasticizer binds to the base material elastomer molecules, and the plasticizer itself integrates with the matrix of the elastomer composition and the raw material mixture thereof when melt-kneading the elastomer composition and the raw material mixture thereof or in the production of the molded body using the elastomer composition. Accordingly, the bleeding of the plasticizer can be prevented.

Especially in the case of using a large amount of the plasticizer, the plasticizer is likely to bleed. Accordingly, when a large amount of the plasticizer is required to be added for the purpose of sufficiently decreasing the storage elastic modulus G' at the time of melt-kneading the elastomer composition and the raw material mixture thereof, the reaction active site-containing plasticizer is preferably used.

The polymer framework which is the main part of the molecular structure of the reaction active site-containing plasticizer may include any chemical structure, as long as it has appropriate compatibility and flexibility or flowability and can function as the plasticizer when melt-kneading the elastomer composition and the raw material mixture thereof. As the polymer framework, examples include, but are not limited to, a framework including a hydrocarbon polymer structure in which a heteroatom such as oxygen, nitrogen and silicon may be included in the main or side chain.

The reaction active site that can bind to the base material elastomer means a chemical structure having an ability to form a chemical, physical or physicochemical bond to the reaction active site present on the base material elastomer. When the reaction active site-containing plasticizer has two or more reaction active sites that can bind to the base material elastomer per molecule, the reaction active site-containing plasticizer forms a crosslinking structure between two base material elastomer molecules via the plasticizer, and the plasticizer is highly integrated with the matrix. Accordingly, the effect of preventing the bleeding of the plasticizer is high.

When the reaction active site-containing plasticizer has two or more reaction active sites per molecule and the reaction active sites can bind to the hollow particles, the reaction active site-containing plasticizer not only forms a crosslinking structure between two base material elastomer molecules, but also it forms a crosslinking structure between base material elastomer molecules and hollow particles and between two hollow particles. Accordingly, the effect of preventing the bleeding of the plasticizer is further increased.

When the number of the reaction active sites per molecule of the reaction active site-containing plasticizer is too large, the matrix of the elastomer composition and the raw material mixture thereof is excessively networked, and melt fluidity is deteriorated. Accordingly, from the viewpoint of adjusting the storage elastic modulus G' of the hollow particle-containing elastomer composition of the present disclosure and the raw material mixture thereof, which is measured in the predetermined condition, to the certain value or less, the number of the reaction active sites per molecule of the reaction active site-containing plasticizer is preferably from 2 to 10000.

From the viewpoint of imparting sufficient plasticity, the reaction active site-containing plasticizer is preferably in a liquid state at a temperature which is at least one point in an ordinary temperature range (20°C ± 15°C); it is more preferably in a liquid state at a temperature which is at least one point in a range of from 10°C to 30°C; and it is still more preferably in a liquid state at a temperature which is at least one point in a range of from 20°C to 25°C.

From the same viewpoint of imparting sufficient plasticity, the glass transition temperature of the reaction active site-containing plasticizer is preferably -10°C or less, and it is more preferably in a range of from -120°C to -20°C.

When the base material elastomer has an ethylenic double bond as with butadiene rubber and styrene-butadiene rubber, the ethylenic double bond on the base material elastomer can be available as a reaction active site. Accordingly, the ethylenic double bond can be used as the reaction active site that can bind to the base material elastomer.

When the shell of the hollow particles is synthesized from a monomer having an ethylenic double bond or a crosslinkable monomer and an unreacted ethylenic double bond remains on the shell, the ethylenic double bond on the shell can be available as a reaction active site. Accordingly, the ethylenic double bond can be used as a reaction active site that can bind to the hollow particles.

Due to the above reasons, in the case of using an elastomer selected from the group consisting of butadiene rubber and styrene-butadiene rubber as the base material elastomer, a polymer having an ethylenic double bond can be used as the reaction active site-containing plasticizer.

As the reaction active site-containing plasticizer selected from the group consisting of polymers having an ethylenic double bond and having a weight average molecular weight of 1000 or more and 100000 or less, diene rubber which is in a liquid state at ordinary temperature is preferably used.

As the diene rubber which is in a liquid state at ordinary temperature, examples include, but are not limited to, unmodified liquid polybutadiene rubber; modified liquid polybutadiene rubber such as acrylate-modified liquid polybutadiene; liquid styrene-butadiene rubber; unmodified liquid polyisoprene rubber; and modified liquid polyisoprene rubber such as hydroxyl-terminated liquid polyisoprene rubber. Of them, unmodified liquid polybutadiene rubber and modified liquid polybutadiene rubber are preferred.

Also, as the reaction active site-containing plasticizer selected from the group consisting of polymers having an ethylenic double bond and having a weight average molecular weight of 1000 or more and 100000 or less, a polyolefin having a terminal double bond is preferably used. As the polyolefin having a terminal double bond, examples include, but are not limited to, a polypropylene having a terminal double bond.

The content of the plasticizer in the elastomer composition is not particularly limited. It is generally from 35 parts by mass to 100 parts by mass, and preferably from 45 parts by mass to 90 parts by mass, with respect to 100 parts by mass of the base material elastomer.

In the case of using the reaction active site-containing plasticizer, it sufficiently functions as the plasticizer and prevents bleeding as long as the content of the reaction active site-containing plasticizer is in an appropriate range, since the plasticity imparting effect dominates an increase of the elasticity which is caused by the formation of a linkage structure in the composition. However, when the content of the reaction active site-containing plasticizer is too small, an increase in the elasticity of the composition due to the formation of a linkage structure dominates, thus the plasticity imparting effect is inhibited. When the content of the reaction active site-containing plasticizer is too much, the plasticity imparting effects is increased; however, the formation of a linkage structure is saturated, thus the plasticizer being in the free state is likely to bleed.

Due to the above reasons, when the reaction active site-containing plasticizer is used alone, the content of the reaction active site-containing plasticizer is preferably from 65 parts by mass to 90 parts by mass, more preferably from 70 parts by mass to 85 parts by mass, and still more preferably from 70 parts by mass to 80 parts by mass, with respect to 100 parts by mass of the base material elastomer.

When the reaction active site-containing plasticizer is used in combination with a plasticizer not having a reaction active site, the amount of the reaction active site-containing plasticizer is preferably from 5% by mass to 35% by mass, and more preferably from 10% by mass to 30% by mass, with respect to the total amount of the plasticizer.

[Vulcanizing/crosslinking agent]

To crosslink the base material elastomer, as needed, a vulcanizing/crosslinking agent is added to the hollow particle-containing elastomer composition. As the vulcanizing/crosslinking agent, examples include, but are not limited to, sulfur such as powdered sulfur, precipitated sulfur, colloidal sulfur and insoluble sulfur; an inorganic vulcanizing agent such as sulfur chloride, selenium and tellurium; a sulfur-containing organic compound such as morpholine disulfide, an alkylphenol disulfide, a thiuram disulfide and dithiocarbamate; and an organic peroxide such as 1,1-di-t-butylperoxy-3,3,5-trimethylcyclohexane, di-t-butylperoxide, dicumyl peroxide, t-butyl cumyl peroxide, 2,5-dimethyl-2,5-di(t-butylperoxy)hexane and 1,3-bis-(t-butylperoxy-isopropyl)benzene. These vulcanizing/crosslinking agents can be used alone or in combination of two or more kinds. The amount of the vulcanizing/crosslinking agent used is appropriately determined depending on the type of the agent. It is generally in a range of from 0.1 parts by mass to 10 parts by mass, and preferably in a range of from 0.5 parts by mass to 5 parts by mass, with respect to 100 parts by mass of the base material elastomer. As needed, a vulcanization accelerator and an auxiliary vulcanization accelerator can be used in combination.

[Other components]

As needed, to the extent that does not impair the effects of the present disclosure, the hollow particle-containing elastomer composition of the present disclosure may contain a conventionally-known additive such as a reinforcing agent, a filler, an auxiliary vulcanization accelerator, a softening agent, a processing aid, an antioxidant, a UV absorber, a foaming agent, an auxiliary foaming agent, a lubricant, a pigment, a colorant, a dispersant and a flame retardant.

The reinforcing agent is effective in improving mechanical properties such as the tensile strength, tearing strength, abrasion resistance and so on of elastomers. As such a reinforcing agent, examples include, but are not limited to, a carbon black such as SRF, GPF, FEF, HAF, ISAF, SAF, FT and MT, these carbon blacks surface-treated with a silane coupling agent or the like, silicic acid powder and silica. These reinforcing agents can be used alone or in combination of two or more. The amount of the reinforcing agent used is not particularly limited, and it is generally 230 parts by mass or less, with respect to 100 parts by mass of the base material elastomer.

As the filler, examples include, but are not limited to, an inorganic filler such as calcium carbonate, light calcium carbonate, heavy calcium carbonate, magnesium carbonate, talc, clay, glass beads and glass balloons, and an organic filler such as high-styrene resin, coumarone-indene resin, phenolic resin, lignin, modified melamine resin and petroleum resin. Of them, an inorganic filler is particularly preferably used. These fillers can be used alone or in combination of two or more. The amount of the filler used is not particularly limited, and it is generally from 30 parts by mass to 200 parts by mass, with respect to 100 parts by mass of the base material elastomer.

As the vulcanization accelerator, examples include, but are not limited to, an aldehyde ammonia such as hexamethylenetetramine; a guanidine such as diphenyl guanidine, di(o-tolyl)guanidine and o-tolyl-biguanide; a thiourea such as thiocarbanilide, di(o-tolyl)thiourea, N,N'-diethylthiourea and dilauryl thiourea; a thiazole such as mercaptobenzothiazole, dibenzothiazole disulfide and N,N'-di(ethylthiocarbamoylthio)benzothiazole; a sulfenamide such as N-t-butyl-2-benzothiazyl sulfenamide; a thiuram such as tetramethylthiuram disulfide, tetraethylthiuram disulfide and tetrabutylthiuram disulfide; a carbamate such as zinc dimethylthiocarbamate, sodium dimethyldithiocarbamate, copper dimethyldithiocarbamate, tellurium dimethylthiocarbamate and iron dimethylthiocarbamate; and a xanthate such as zinc butylthioxanthate.

These vulcanization accelerators can be used alone or in combination of two or more. The amount of the vulcanization accelerator used is generally in a range of from 0.1 parts by mass to 20 parts by mass, and preferably in a range of from 0.2 parts by mass to 10 parts by mass, with respect to 100 parts by mass of the base material elastomer. As the auxiliary vulcanization accelerator, examples include, but are not limited to, a metal oxide such as magnesium oxide and zinc oxide, and an organic acid (salt) such as stearic acid, oleic acid and zinc stearate. Of them, zinc oxide or stearic acid is preferably used. These auxiliary vulcanization accelerators can be used alone or in combination of two or more. The amount of the auxiliary vulcanization accelerator used is generally in a range of from 0.5 parts by mass to 20 parts by mass, with respect to 100 parts by mass of the base material elastomer.

As the softening agent, examples include, but are not limited to, a petroleum-based softening agent such as process oil, lubricating oil, paraffin, liquid paraffin, petroleum asphalt and petrolatum; a coal tar-based softening agent such as coal tar and coal-tar pitch; a fatty oil-based softening agent such as castor oil, linseed oil, canola oil and palm oil; tall oil; a rubber substitute; a wax such as beeswax, carnauba wax and lanolin; a fatty acid or fatty acid salt such as ricinoleic acid, palmitic acid, barium stearate, calcium stearate and zinc laurate; a synthetic polymer substance such as petroleum resin, atactic polypropylene and coumarone-indene resin; an ester-based plasticizer such as dioctyl phthalate, dioctyl adipate and dioctyl sebacate; a carbonate ester-based plasticizer such as diisododecyl carbonate; and others such as microcrystalline wax, a rubber substitute (factice), liquid polybutadiene, modified liquid polybutadiene, liquid Thiokol and hydrocarbon-based synthetic lubricating oil. Of them, a petroleum-based softening agent is preferred, and process oil is particularly preferred. The amount of the softening agent used is not particularly limited, and it is generally from 10 parts by mass to 200 parts by mass, with respect to 100 parts by mass of the base material elastomer.

As the processing aid, examples include, but are not limited to, a higher fatty acid such as ricinoleic acid, stearic acid, palmitic acid and lauric acid; a salt of a higher fatty acid, such as barium stearate, zinc stearate and calcium stearate; and an ester of a higher fatty acid such as ricinolate acid, stearate, palmitate and laurate. As the antioxidant, examples include, but are not limited to, an amine-based antioxidant, a hindered phenol-based antioxidant and a sulfur-based antioxidant.

As the lubricant, examples include, but are not limited to, a hydrocarbon-based compound such as liquid paraffin, fatty acid-based compound such as stearic acid, fatty acid amide-based compound such as stearyl amide, ester-based compound such as butyl stearate, alcohol-based compound such as stearyl alcohol, mixtures thereof, and metallic soap.

As the pigment, examples include, but are not limited to, an inorganic pigment such as titanium dioxide, zinc oxide, ultramarine blue, red iron oxide, lithopone, lead, cadmium, iron, cobalt, aluminum, hydrochloride and nitrate, and an organic pigment such as an azo pigment, a phthalocyanine pigment, a quinacridone pigment, a quinacridonequinone pigment, a dioxazine pigment, an anthrapyrimidine pigment, an anthanthrone pigment, an indanthrone pigment, a flavanthrone pigment, a perylene pigment, a perinon pigment, a diketopyrrolopyrrole pigment, a quinophthalone pigment, an anthraquinone pigment, a thioindigo pigment, a benzimidazolone pigment, an isoindoline pigment and a carbon black.

[method for producing the hollow particle-containing elastomer composition]

The method for producing the hollow particle-containing elastomer composition according to the present disclosure is not particularly limited. In general, the raw material mixture containing the base material elastomer, the hollow particles and, as needed, other components such as a plasticizer and a vulcanizing/crosslinking agent, is preliminary kneaded at a temperature at which the base material elastomer is softened, thereby homogenizing the blended components; moreover, the blended components are further homogenized and fined by finishing kneading for applying high shear force, such as roll kneading, thereby obtaining the hollow particle-containing elastomer composition. To prevent the raw material mixture from being crosslinked by the vulcanizing/crosslinking agent during the preliminary kneading, the vulcanizing/crosslinking agent may be added during the finishing kneading step after the preliminary kneading. In addition, the hollow particles may be added in the finishing kneading step.

To reduce the collapse of the hollow particles at the stage of kneading the raw material mixture of the hollow particle-containing elastomer composition, the production method of the present disclosure preferably comprises the following steps:

preparing a raw material mixture containing at least a base material elastomer and hollow particles and having a storage elastic modulus G' at 60°C of 2.5 MPa or less, the hollow particles having a shell and a hollow portion surrounded by the shell, the shell comprising a resin which is a polymer containing 50 parts by mass or more of a crosslinkable monomer unit in 100 parts by mass of all monomer units, and the storage elastic modulus being obtained by dynamic viscoelasticity measurement that is carried out after a homogenization treatment of blended components, preliminarily kneading the raw material mixture by a closed-type kneader at a temperature at which the storage elastic modulus G', which is obtained by the dynamic viscoelasticity measurement carried out after the homogenization treatment, becomes 2.5 MPa or less, and

kneading the raw material mixture at a temperature at which the storage elastic modulus G', which is obtained by the dynamic viscoelasticity measurement carried out after the homogenization treatment, becomes 2.5 MPa or less, just after the preliminarily kneading or after the raw material mixture is preliminarily heated at a temperature at which the storage elastic modulus G', which is obtained by the dynamic viscoelasticity measurement carried out after the homogenization treatment, becomes 2.5 MPa or less.

To homogeneously mix the components, the kneading step (the finishing kneading step) is preferably carried out by roll kneading.

In the above production method, "(be) kneaded at a kneading temperature of 60°C or more" means that the temperature of a kneading apparatus is set to 60°C or more. Similarly, "(be) kneaded at a temperature of A°C", "(be) set to a kneading temperature of A°C", "(be) preliminarily kneaded at a temperature of A°C" or "(be) set to a molding temperature of A°C" means that the temperature of an apparatus such as a kneading apparatus, a heating apparatus and a molding apparatus is set to the value (A).

In the above production method, such hollow particles are used, that the strength is increased by the shell that is made of the resin containing the polymer having a high content of the crosslinkable monomer unit, and the strength is not decreased even in a high temperature environment by virtue of the crosslinking structure; the storage elastic modulus G' at 60°C of the raw material mixture containing the base material elastomer and the hollow particles, is adjusted to 2.5 MPa or less; and the preliminarily kneading and the finishing kneading are carried out at a temperature at which the storage elastic modulus G' of the raw material mixture becomes 2.5 MPa or less. Accordingly, the load applied to the hollow particles in the interior of the raw material mixture during the finishing kneading, such as internal pressure and shear force, is kept low.

Accordingly, by the production method of the present disclosure, the hollow particle-containing elastomer composition having excellent properties or functions is obtained, since the hollow particles are less likely to collapse in the kneading step; the residual void ratio is stable; and the properties or functions imparted by the hollow particles are less likely to deteriorate.

Also, according to the above production method, even when the raw material mixture is repeatedly kneaded, the hollow particles present in the interior of the raw material mixture can retain the original void ratio thereof, and the effects of the hollow particles are less likely to be lost. Accordingly, insofar as the elastomer composition is still in a state before being subjected to crosslinking (vulcanizing), the elastomer composition recovered from the molding apparatus is reusable as the raw material mixture.

To implement the above method, the formulation of the raw material mixture that gives a storage elastic modulus G' at 60°C of 2.5 MPa or less, which is obtained by the dynamic viscoelasticity measurement of the raw material mixture, is preliminarily determined.

The dynamic viscoelasticity measurement of the raw material mixture may be carried out by the same method as the dynamic viscoelasticity measurement of the hollow particle-containing elastomer composition. However, since the raw material mixture is a composition before subjected to kneading and the homogeneity of the blended components is not sufficient, if the dynamic viscoelasticity measurement is carried out on the raw material mixture in such a state, measured values vary greatly or are unmeasurable. Accordingly, it is necessary that the dynamic viscoelasticity measurement of the raw material mixture should be carried out after stable measured values are made available by the homogenization treatment for evening the distribution of the blended components contained in the raw material mixture. The condition of the homogenization treatment is not particularly limited. For example, the homogenization treatment may be carried out in the following condition.

[Homogenization treatment]

The mixture containing at least the base material elastomer and the hollow particles is kneaded by a closed-type kneader at a kneading temperature of 100°C and a kneading member rotational frequency of 50 rpm, thereby homogenizing the mixture.

When the dynamic viscoelasticity measurement is carried out for determining the raw material mixture having a storage elastic modulus at 60°C of 2.5 MPa or less, as long as the collapse resistance of the hollow particles at the stage of producing the hollow particle-containing elastomer composition can be appropriately evaluated, simplified dynamic viscoelasticity measurement may be carried out using a quasi-raw material mixture that does not contain a part of the components contained in the hollow particle-containing elastomer composition, to the extent that gives a small influence on the variation of the storage elastic modulus at 60°C.

For example, the vulcanizing/crosslinking agent of the hollow particle-containing elastomer composition generally has a small influence on the variation of the storage elastic modulus at 60°C, when the amount of the vulcanizing/crosslinking agent used is within a common range of usage. Accordingly, a quasi-mixture that does not contain the vulcanizing/crosslinking agent can be used as a sample for the dynamic viscoelasticity measurement.

In general, to homogeneously knead the composition containing the base material elastomer, the hollow particles and, as needed, other components such as the plasticizer and the vulcanizing/crosslinking agent, high shear force is preferably applied, such as roll kneading. However, due to the high shear force, the hollow particles are likely to collapse.

In the present disclosure, the raw material mixture specified above is preliminarily kneaded by a closed-type kneader at a temperature at which the storage elastic modulus G', which is obtained by the dynamic viscoelasticity measurement carried out after the homogenization treatment, becomes 2.5 MPa or less, and just after the preliminarily kneading or after the raw material mixture is preliminarily kneaded and then preliminarily heated further at a temperature at which the storage elastic modulus G', which is obtained by the dynamic viscoelasticity measurement carried out after the homogenization treatment, becomes 2.5 MPa or less, finishing kneading of the raw material mixture is carried out at a temperature at which the storage elastic modulus G', which is obtained by the dynamic viscoelasticity measurement carried out after the homogenization treatment, becomes 2.5 MPa or less. As a result, even when the kneading that gives high shear force, such as roll kneading, is carried out, the load applied to the hollow particles is not overload. Accordingly, the homogeneously mixed elastomer composition can be produced while avoiding the collapse of the hollow particles.

The closed-type kneader used in the preliminary kneading of the present disclosure and the homogenization treatment described above is a kneader having the following mechanism: a chamber for containing a rubber material (a processing object) is disposed in the center; two rotors (stirring members) are disposed in the chamber; and rubber is fed between the two rotors and kneaded so that it is ground. Each of the rotors is a rotation axis in the form of a roller, which is equipped with blades for homogeneously mixing throughout the whole material. Thus, the rubber material is mixed while receiving the shear force of the rotors in the chamber.

As the closed-type kneader, a kneader or a banbury mixer can be used. As the kneader, examples include PLASTI-CORDER LAB-STATION (product name, manufactured by Brabender) and MS TYPE PRESSURIZING KNEADER (product name, manufactured by Moriyama Co., Ltd.) As the banbury mixer, examples include MIXTRON BB MIXER (product name, manufactured by Kobe Steel, Ltd.)

As the kneader used for finishing kneading, for example, two mixing roll kneader can be used. As the two mixing roll kneader, examples include MIXING ROLL DY6-15 (product name, manufactured by Daihan, Co., Ltd.)

The closed-type kneader used for the preliminary kneading and the closed-type kneader used for the homogenization treatment do not need to be apparatuses having the same configuration. However, from the viewpoint of predicting the viscoelasticity behavior of the raw material mixture at the stage of preliminarily mixing the raw material mixture as accurately as possible, based on the viscoelasticity of the raw material mixture which is measured at the stage of determining the formulaion of the raw material mixture, closed-type kneaders having the same device configuration are preferably used at the stage of the preliminary kneading and the stage of the homogenization treatment.

For example, the kneading can be carried out by the following method. First, using a closed-type kneader having weaker shear force than roll kneading, such as a kneader and a banbury mixer, the kneading temperature is set to 100°C.

After the temperature of the closed-type kneader becomes stable, the base material elastomer is fed into the closed-type kneader. Then, while rotating the rotors of the closed-type kneader at a rotational frequency of from 30 rpm to 100 rpm, the components such as the hollow particles, the plasticizer and the vulcanizing/crosslinking agent are added in a desired order, thereby preliminarily kneading the mixture.

Next, the kneading temperature of the roll kneader is set to 60°C or more. After the temperature of the roll kneader becomes stable, the preliminary kneaded raw material mixture is immediately fed into the roll kneader and subjected to roll kneading, thereby obtaining the hollow particle-containing elastomer composition of the present disclosure. By immediately feeding the preliminary kneaded raw material mixture from the closed-type kneader into the roll kneader, a decrease in the temperature of the raw material mixture during the transfer of the raw material mixture from the preliminary kneading step to the finishing kneading step, a decrease in the melt fluidity thereof, and thus an increase in the collapse of the hollow particles in the finishing kneading can be prevented.

The word "immediately" in "immediately feeding the preliminary kneaded raw material mixture from the closed-type kneader into the roll kneader" means that the time required to transfer the raw material mixture from the preliminary kneading step to the finishing kneading step is such a short time, that the degree of increase in the collapse of the hollow particles in the finishing kneading can be kept in a practically negligible range.

More specifically, the difference (%) between the void ratio of the elastomer molded body produced by use of the preliminary kneaded raw material mixture, which is measured by the below-described method for measuring the residual void ratio of the hollow particle-containing elastomer molded body, and the void ratio of the elastomer molded body produced by use of the finally-obtained hollow particle-containing elastomer composition, which is measured by the same method, is preferably 10% or less, and more preferably 5% or less.

The specific time required to start the finishing kneading immediately after the preliminary kneading without the preliminarily heating is as follows: the finishing kneading of the raw material mixture is preferably started within 10 minutes after the preliminary kneading, and more preferably within 5 minutes after the preliminary kneading.

If, due to process-related problems, the temperature of the raw material mixture decreases lower than 60°C when the raw material mixture is removed from the preliminary kneading apparatus and transferred to the finishing kneading apparatus, to keep the temperature of the raw material mixture at the temperature at which the storage elastic modulus G' of the raw material mixture becomes 2.5 MPa or less, the raw material mixture is preferably treated as follows: the raw material mixture is preliminarily heated in a heating apparatus (e.g., an oven) at a preliminary heating temperature of 60°C or more for an appropriate length of time (e.g., about one hour); the preliminarily heated raw material mixture is fed into the finishing kneading apparatus; and then the kneading of the raw material mixture is started.

To prevent the raw material mixture from being crosslinked by the vulcanizing/crosslinking agent during the preliminary kneading, the vulcanizing/crosslinking agent may be added during the roll kneading step after the preliminary kneading. In addition, the hollow particles may be added during the roll kneading step.

In both the preliminary kneading and the roll kneading, to prevent the raw material mixture from being crosslinked by the vulcanizing/crosslinking agent, the kneading is preferably carried out at a kneading temperature of 100°C or less.

The thus-obtained hollow particle-containing elastomer composition can be formed into a molding material product in a desired form. For example, the hollow particle-containing elastomer composition in a melted state may be molded into a form such as a long sheet form, a block form and a filler form, or it may be fabricated into a form such as a roll form (obtained by rolling up a long sheet) and a strip form (obtained by cutting a long sheet into a strip of predetermined length).

[Method for producing the hollow particle-containing elastomer molded body]

The method for producing the molded body using the hollow particle-containing elastomer composition of the present disclosure, is not particularly limited. The method preferably includes a step of kneading the hollow particle-containing elastomer composition at a molding temperature of 60°C or more.

In general, in the case of producing an elastomer molded body using a molding elastomer composition, the elastomer composition is brought into a homogeneously melted state by kneading, and then a desired molding method such as extrusion molding, compression molding and extrusion lamination is implemented. By molding the hollow particle-containing elastomer composition of the present disclosure at a molding temperature of 60°C or more, the storage elastic modulus G' of the hollow particle-containing elastomer composition at the time of molding can be set to 2.5 MPa or less, and the load applied to the hollow particles, such as external pressure and shear force, is not overload. Accordingly, the elastomer molded body can be produced while avoiding the collapse of the hollow particles.

The residual void ratio of the hollow particle-containing elastomer molded body obtained in the present disclosure, which is measured by the following test method, can be set to 80% or more, preferably 90% or more, more preferably 95% or more, and still more preferably 100%.

[Method for measuring the residual void ratio of the hollow particle-containing elastomer molded body]

A sheet-shaped, hollow particle-containing elastomer molded body is produced by press-molding the hollow particle-containing elastomer composition at a pressure of 1 MPa or less by a hot press machine at 120°C; the specific gravity of the obtained elastomer molded body is measured; and the residual void ratio of the hollow particles in the elastomer molded body is calculated by the following formula (D).

The following formula (D) is the same as the residual void ratio calculation formula (D) in the above-described press test that is carried out for evaluating the collapsibility of the hollow particles.

$$\text{Residual void ratio (\%)} = \{(c-a)/(c-b)\} \times 100 \quad \text{Formula (D)}$$

a: The specific gravity of the molded body after the pressing
b: The specific gravity (a calculated value) of the molded body with the premise that the voids were maintained
c: The specific gravity (a calculated value) of the molded body with the premise that all the hollow particles collapsed

Examples

Hereinbelow, the present disclosure is described more specifically using examples and comparative examples. However, the present disclosure is not limited to these examples. Also, "part (s) " and "%" are on a mass basis unless otherwise specified.

[Preparation of hollow particles]

[Production Example 1 (hollow particles A)]

(1) Mixture liquid preparation step

First, the following materials were mixed to produce an oil phase.

Crosslinkable monomer: Ethylene glycol dimethacrylate 25 parts
Crosslinkable monomer: Trimethylolpropane trimethacrylate 30 parts
Crosslinkable monomer: Divinylbenzene 45 parts
Oil-soluble polymerization initiator: 2,2'-Azobis(2,4-dimethylvaleronitrile) 3 parts
Hydrophobic solvent: Hexane 160 parts

Meanwhile, in a stirring tank, at room temperature, an aqueous solution in which 12.1 parts of sodium hydroxide (an alkali metal hydroxide) was dissolved in 121 parts of deionized water, was gradually added under stirring to an aqueous solution in which 17.1 parts of magnesium chloride (a water-soluble multivalent metal salt) was dissolved in 494 parts of deionized water, thereby preparing a magnesium hydroxide (sparingly water-soluble metal hydroxide) colloidal dispersion (magnesium hydroxide: 4 parts). The dispersion was used as an aqueous phase.

The obtained aqueous phase and oil phase were mixed, thereby preparing a mixture liquid.

(2) Suspension step

The mixture liquid obtained in the mixture liquid preparation step was suspended by stirring with a disperser (product name: HOMOMIXER, manufactured by: PRIMIX Corporation) at a rotational frequency of 4,000 rpm for one minute, thereby preparing a suspension in which droplets of a monomer composition including the hydrophobic solvent were dispersed in water.

(3) Polymerization step

A polymerization reaction was carried out by stirring the suspension obtained in the suspension step for one and half hours at a temperature of 65°C in a nitrogen atmosphere, thereby obtaining a precursor composition that contained precursor particles including the hydrophobic solvent.

(4) Washing step and solid-liquid separation step

The precursor composition was washed with dilute sulfuric acid (25°C, 10 minutes) to bring the pH of the composition to 5.5 or less. Next, water was separated therefrom by filtration. Then, 200 parts of deionized water was added to reslurry the resultant, and a water washing treatment (washing, filtration and dehydration) was repeatedly performed several times at room temperature (25°C). The resultant was separated by filtration, thereby obtaining a solid component. The obtained solid component was dried with a dryer at a temperature of 40°C, thereby obtaining the precursor particles including the hydrophobic solvent.

(5) Solvent removal step

The precursor particles obtained in the solid-liquid separation step were subjected to heating treatment for 12 hours with a vacuum dryer in a nitrogen atmosphere at 200°C, thereby removing the included hydrophobic solvent from the particles. Accordingly, hollow particles A were obtained. From the scanning electron microscopy observation result and void ratio of the particles, the obtained hollow particles were confirmed to be spherical and to have a hollow portion.

[Production Example 2 (hollow particles B)]

The hollow particles (hollow particles B) of Production Example 2 were obtained in the same manner as Production Example 1, except that in "(1) Mixture liquid preparation step", the formulaion of the oil phase was changed as follows.

Crosslinkable monomer: Ethylene glycol dimethacrylate 70 parts
Crosslinkable monomer: Trimethylolpropane trimethacrylate 30 parts
Oil-soluble polymerization initiator: 2,2'-Azobis(2,4-dimethylvaleronitrile) 3 parts
Hydrophobic solvent: Cyclohexane 48 parts
Hydrophobic solvent: Toluene 112 parts

From the scanning electron microscopy observation result and void ratio of the particles, the obtained hollow particles were confirmed to be spherical and to have a hollow portion.

[Evaluation of the properties of the hollow particles]

The hollow particles obtained in the production examples were evaluated for the following properties.

1. Volume average particle diameter of the hollow particles

The volume average particle diameter of the hollow particles was measured with a particle size distribution measuring device (product name: MULTISIZER 4e, manufactured by: Beckman Coulter, Inc.) The measurement condition is as follows.

Aperture diameter: 50 $\mu$m
Dispersion medium: ISOTON II (product name)
Concentration: 10%
Number of the measured hollow particles: 100,000 particles

More specifically, 0.2 g of the sample hollow particles were put in a beaker. As a dispersant, a surfactant aqueous solution (product name: DRIWEL, manufactured by: Fujifilm Corporation) was added thereto. In addition, 2 mL of the dispersion medium was added to wet the hollow particles. Then, 10 mL of the dispersion medium was added thereto. The mixture was dispersed for one minute with an ultrasonic disperser. Then, the measurement with the above-described particle size measuring device was carried out.

2. Density and void ratio of the hollow particles

2-1. Measurement of the apparent density of the hollow particles

First, approximately 30 cm$^3$ of the hollow particles were introduced into a measuring flask with a volume of 100 cm$^3$, and the mass of the introduced hollow particles was precisely weighed. Next, the measuring flask in which the hollow particles were introduced, was precisely filled with isopropanol up to the marked line while care was taken so that air bubbles did not get in. The mass of the isopropanol added to the measuring flask was precisely weighed, and the apparent density $D_1$ (g/cm$^3$) of the hollow particles was calculated by the formula (I) described above.

2-2. Measurement of the true density of the hollow particles

The hollow particles were pulverized in advance; approximately 10 g of the pulverized hollow particles were introduced into a measuring flask with a volume of 100 cm$^3$; and the mass of the introduced pulverized particles was precisely weighed.

Then, similarly to the measurement of the apparent density mentioned above, isopropanol was added to the measuring flask; the mass of the isopropanol was precisely weighed; and the true density $D_0$ (g/cm$^3$) of the hollow particles was calculated by the formula (II) described above.

2-3. Calculation of void ratio

The void ratio of the hollow particles was calculated by the above-described formula (III) from the apparent density $D_1$ and the true density $D_0$.

3. Residual void ratio of the hollow particles

The residual void ratio of the hollow particles was measured by the following press test method.

[Press test]

A mixture of a polypropylene resin (product name: NOVATEC PP, grade: MA1B, manufactured by: Japan Polypropylene Corporation) and the hollow particles at a mass ratio of 90:10 (polypropylene resin : hollow particles) was melted and mixed at 200°C; the mixture was poured into a mold for a hot press machine, heated at 200°C for 15 minutes, and then stirred with a spatula; the mold was placed on the hot press machine set to 80°C; a cylinder heated to 80°C was put in the mold; the mixture was pressed at 15 MPa when a surface temperature of the mold reaches 140°C; the mixture was removed from the mold and molded into a sheet-shaped molded body having a thickness of 0.3 mm by pressing at a pressure of 1 MPa or less by the hot press machine set to 200°C; the specific gravity of the obtained sheet-shaped molded body was measured; and the residual void ratio of the hollow particles was calculated by the following formula (D).

$$\text{Residual void ratio (\%)} = \{(c-a)/(c-b)\} \times 100 \quad \text{Formula (D)}$$

Symbols in the formula (D) mean the following.

a: The specific gravity of the sheet-shaped molded body after the press molding
b: The specific gravity (a calculated value) of the molded body with the premise that the voids were maintained
c: The specific gravity (a calculated value) of the molded body with the premise that all the hollow particles collapsed

Table 1 shows the amounts (parts by mass) of the materials and evaluation results for the hollow particles obtained in the production examples.

Each of the residual void ratios obtained in the press test shown in Table 1, is the average value of the sample number 10 (n=10).

[Table 1]

Table 1

| Composition (parts by mass) | | | Production Example 1 (Hollow particles A) | Production Example 2 (Hollow particles B) |
|---|---|---|---|---|
| Polymerizable monomer | Crosslinkable monomer | Ethylene glycol dimethacrylate | 25 | 70 |
| | | Trimethylolpropane trimethacrylate | 30 | 30 |
| | | Divinylbenzene | 45 | |
| Oil-soluble polymerization initiator | | | 3 | 3 |
| Hydrophobic solvent | | Hexane | 160 | |
| | | Cyclohexane | | 48 |
| | | Toluene | | 112 |
| Dispersion stabilizer | | Magnesium hydroxide | 4 | 4 |
| Deionized water | | | 615 | 615 |
| Properties of hollow particles | | Volume average particle diameter ($\mu$m) | 11.8 | 21.2 |
| | | Apparent density $D_1$ (g/cm$^3$) | 0.30 | 0.30 |
| | | True density $D_0$ (g/cm$^3$) | 1.20 | 1.20 |
| | | Void ratio (%) | 75.00 | 75.00 |
| | | Residual void ratio (%) in press test | 100 | 100 |

[Elastomer composition production and elastomer molded body production]

[Example 1]

First, 100 parts by mass of an ethylene-propylene-dien ter-polymer (EPDM) (Mooney viscosity at 100°C (JIS K6300), i.e., ML(1+4)100°C: 25, product name: Nordel IP 4725, manufactured by: Dow Chemical Company) was fed into a kneader (product name: PLASTI-CORDER LAB-STATION, manufactured by: Brabender). Kneading of the polymer was started at a kneading temperature of 100°C and a rotational frequency of 50 rpm, and the polymer was preliminary kneaded while feeding the following: 25 parts by mass of the hollow particles A obtained in Production Example 1, 45 parts by mass of a carbon (product name: SEAST S, manufactured by: Tokai Carbon Co., Ltd.), 29 parts by mass of a silica (product name: NIPSIL VN-3, manufactured by: Tosoh Silica Corporation) and 75 parts by mass of a process oil (hydrogenated high-viscosity oil, product name: DIANA PROCESS OIL PW-300, manufactured by: Idemitsu Kosan Co., Ltd.) as a plasticizer.

Before roll kneading, the preliminary kneaded mixture was placed and preliminarily heated in an oven at 60°C for one hour to keep the temperature of the mixture at 60°C.

The mixture preliminarily heated to 60°C was fed into a two-mixing roll kneader (model: DY6-15, roller diameter: 6 inches, clearance between rollers: 0.5 mm, manufactured by: Daihan, Co., Ltd.) in which the roll kneading temperature was set to 80°C. Then, while feeding 1.5 parts of sulfur as a vulcanizing agent and 2 parts of tetramethylthiuram monosulfide (reagent grade) as a vulcanization accelerator, roll kneading was carried out (rotational frequency: 24 rpm (front roller) and 21 rpm (rear roller), kneading time: 15 minutes).

After the roll kneading, the mixture in a melted state was dried by heating at 80°C for 6 hours, thereby obtaining the hollow particle-containing elastomer composition of Example 1.

A sheet-shaped molded body (a hollow particle-containing elastomer molded body) having a thickness of 0.3 mm was produced by press-molding the obtained hollow particle-containing elastomer composition at a pressure of 1 MPa or less by a hot press machine at 120°C.

[Example 2]

The hollow particle-containing elastomer composition of Example 2 was obtained in the same manner as Example 1, except that the preliminary heating temperature was changed from 60°C to 80°C.

The obtained hollow particle-containing elastomer composition was press-molded in the same molding condition as Example 1, thereby obtaining the hollow particle-containing elastomer molded body of Example 2.

[Example 3]

The hollow particle-containing elastomer composition of Example 3 was obtained in the same manner as Example 1, except that 25 parts by mass of the hollow particles B obtained in Production Example 2 were used in place of 25 parts by mass of the hollow particles A obtained in Production Example 1.

The obtained hollow particle-containing elastomer composition was press-molded in the same molding condition as Example 1, thereby obtaining the hollow particle-containing elastomer molded body of Example 3.

[Example 4]

A non-oil-extended styrene-butadiene rubber was used in Example 4, which means a styrene-butadiene rubber free of an oily component serving as a plasticizer.

First, 100 parts by mass of a non-oil-extended styrene-butadiene rubber (Mooney viscosity at 100°C (JIS K6300), i.e., ML(1+4)100°C: 52.0, styrene unit content: 23.5% by mass, product name: Nipol (registered trademark) 1502, manufactured by: ZEON Corporation) was fed into a kneader (product name: PLASTI-CORDER LAB-STATION, manufactured by: Brabender). Kneading of the rubber was started at a kneading temperature of 100°C and a rotational frequency of 50 rpm, and the rubber was preliminary kneaded while feeding the following: 25 parts by mass of the hollow particles A obtained in Production Example 1, 25 parts by mass of a carbon (product name: SEAST S, manufactured by: Tokai Carbon Co., Ltd.), 29 parts by mass of a silica (product name: NIPSIL VN-3, manufactured by: Tosoh Silica Corporation), 65 parts by mass of a process oil (hydrogenated high-viscosity oil, product name: DIANA PROCESS OIL PW-300, manufactured by: Idemitsu Kosan Co., Ltd.) as a plasticizer, and 10 parts by mass of a liquid polybutadiene (weight average molecular weight: 2100, product name: LIQUID POLYBUTADIENE B-2000, manufactured by: Nippon Soda Co., Ltd.) as an ethylenic double bond-containing plasticizer.

Before roll kneading, the preliminary kneaded mixture was placed and preliminarily heated in an oven at 60°C for over one hour to keep the temperature of the mixture at 60°C.

The mixture preliminarily heated to 60°C was fed into a two-mixing roll kneader (model: DY6-15, roller diameter: 6 inches, clearance between rollers: 0.5 mm, manufactured by: Daihan, Co., Ltd.) in which the roll kneading temperature was set to 80°C. Then, while feeding 1.5 parts of sulfur as a vulcanizing agent and 2 parts of tetramethylthiuram monosulfide (reagent grade) as a vulcanization accelerator, roll kneading was carried out (rotational frequency: 24 rpm (front roller) and 21 rpm (rear roller), kneading time: 15 minutes).

After the roll kneading, the mixture in a melted state was dried by heating at 80°C for 6 hours, thereby obtaining the hollow particle-containing elastomer composition of Example 4.

A sheet-shaped molded body (a hollow particle-containing elastomer molded body) having a thickness of 0.3 mm was produced by press-molding the obtained hollow particle-containing elastomer composition at a pressure of 1 MPa or less by a hot press machine at 120°C.

[Example 5]

The hollow particle-containing elastomer composition of Example 5 was obtained in the same manner as Example 4, except for the following: the amount of the carbon was changed from 25 parts by mass to 45 parts by mass; the amount of the process oil (a plasticizer) was changed from 65 parts by mass to 55 parts by mass; and the amount of the liquid polybutadiene (an ethylenic double bond-containing plasticizer) was changed from 10 parts by mass to 20 parts by mass.

The obtained hollow particle-containing elastomer composition was press-molded in the same molding condition as Example 4, thereby obtaining the hollow particle-containing elastomer molded body of Example 5.

[Example 6]

The hollow particle-containing elastomer composition of Example 6 was obtained in the same manner as Example 4, except for the following: the amount of the carbon was changed from 25 parts by mass to 45 parts by mass; the amount of the process oil (a plasticizer) was changed from 65 parts by mass to 0 part by mass; and the amount of the liquid polybutadiene (an ethylenic double bond-containing plasticizer) was changed from 10 parts by mass to 60 parts by mass.

The obtained hollow particle-containing elastomer composition was press-molded in the same molding condition as Example 4, thereby obtaining the hollow particle-containing elastomer molded body of Example 6.

[Example 7]

The hollow particle-containing elastomer composition of Example 7 was obtained in the same manner as Example 4, except for the following: the amount of the carbon was changed from 25 parts by mass to 45 parts by mass; the amount of the process oil (a plasticizer) was changed from 65 parts by mass to 0 part by mass; the amount of the liquid polybutadiene (an ethylenic double bond-containing plasticizer) was changed from 10 parts by mass to 75 parts by mass; and the preliminary heating temperature of the heating condition was changed from 60°C to 80°C.

The obtained hollow particle-containing elastomer composition was press-molded in the same molding condition as Example 4, thereby obtaining the hollow particle-containing elastomer molded body of Example 7.

[Example 8]

The hollow particle-containing elastomer composition of Example 8 was obtained in the same manner as Example 4, except for the following: the amount of the carbon was changed from 25 parts by mass to 45 parts by mass; the amount of the process oil (a plasticizer) was changed from 65 parts by mass to 0 part by mass; and the amount of the liquid polybutadiene (an ethylenic double bond-containing plasticizer) was changed from 10 parts by mass to 80 parts by mass.

The obtained hollow particle-containing elastomer composition was press-molded in the same molding condition as Example 4, thereby obtaining the hollow particle-containing elastomer molded body of Example 8.

[Example 9]

An oil-extended styrene-butadiene rubber was used in Example 9, which means a styrene-butadiene rubber mixed with several percent by mass of an oily component serving as a plasticizer.

First, 100 parts by mass of an oil-extended styrene-butadiene rubber (Mooney viscosity at 100°C (JIS K6300), i.e., ML(1+4)100°C: 49.0, styrene unit content: 40.0% by mass, product name: Nipol (registered trademark) 1739, manufactured by: ZEON Corporation) was fed into a kneader (product name: PLASTI-CORDER LAB-STATION, manufactured by: Brabender). Kneading of the rubber was started at a kneading temperature of 100°C and a rotational frequency of 50 rpm, and the rubber was preliminary kneaded while feeding the following: 25 parts by mass of the hollow particles A obtained in Production Example 1, 45 parts by mass of a carbon (product name: SEAST S, manufactured by: Tokai Carbon Co., Ltd.), 29 parts by mass of a silica (product name: NIPSIL VN-3, manufactured by: Tosoh Silica Corporation), and 60 parts by mass of a liquid polybutadiene (weight average molecular weight: 2100, product name: LIQUID POLYBUTADIENE B-2000, manufactured by: Nippon Soda Co., Ltd.) as an ethylenic double bond-containing plasticizer.

Before roll kneading, the preliminary kneaded mixture was placed and preliminarily heated in an oven at 60°C for over one hour to keep the temperature of the mixture at 60°C.

The mixture preliminarily heated to 60°C was fed into a two-mixing roll kneader (model: DY6-15, roller diameter: 6 inches, clearance between rollers: 0.5 mm, manufactured by: Daihan, Co., Ltd.) in which the roll kneading temperature was set to 80°C. Then, while feeding 1.5 parts of sulfur as a vulcanizing agent and 2 parts of tetramethylthiuram monosulfide (reagent grade) as a vulcanization accelerator, roll kneading was carried out (rotational frequency: 24 rpm (front roller) and 21 rpm (rear roller), kneading time: 15 minutes).

After the roll kneading, the mixture in a melted state was dried by heating at 80°C for 6 hours, thereby obtaining the hollow particle-containing elastomer composition of Example 9.

A sheet-shaped molded body (a hollow particle-containing elastomer molded body) having a thickness of 0.3 mm was produced by press-molding the obtained hollow particle-containing elastomer composition at a pressure of 1 MPa or less by a hot press machine at 120°C.

[Example 10]

The hollow particle-containing elastomer composition of Example 10 was obtained in the same manner as Example 9, except that the amount of the liquid polybutadiene (an ethylenic double bond-containing plasticizer) was changed from 60 parts by mass to 75 parts by mass, and the preliminary heating temperature of the heating condition was changed from 60°C to 80°C.

The obtained hollow particle-containing elastomer composition was press-molded in the same molding condition as Example 9, thereby obtaining the hollow particle-containing elastomer molded body of Example 10.

[Example 11]

The hollow particle-containing elastomer composition of Example 11 was obtained in the same manner as Example 9, except that the amount of the liquid polybutadiene (an ethylenic double bond-containing plasticizer) was changed from 60 parts by mass to 80 parts by mass.

The obtained hollow particle-containing elastomer composition was press-molded in the same molding condition as Example 9, thereby obtaining the hollow particle-containing elastomer molded body of Example 11.

[Example 12]

First, 100 parts by mass of a butadiene rubber (Mooney viscosity at 100°C (JIS K6300), i.e., ML(1+4)100°C: 44.0, styrene unit content: 0% by mass, product name: Nipol (registered trademark) BR1220, manufactured by: ZEON Corporation) was fed into a kneader (product name: PLASTI-CORDER LAB-STATION, manufactured by: Brabender). Kneading of the rubber was started at a kneading temperature of 100°C and a rotational frequency of 50 rpm, and the rubber was preliminary kneaded while feeding the following: 25 parts by mass of the hollow particles A obtained in Production Example 1, 45 parts by mass of a carbon (product name: SEAST S, manufactured by: Tokai Carbon Co., Ltd.), 29 parts by mass of a silica (product name: NIPSIL VN-3, manufactured by: Tosoh Silica Corporation), and 60 parts by mass of a liquid polybutadiene (weight average molecular weight: 2100, product name: LIQUID POLYBUTADIENE B-2000, manufactured by: Nippon Soda Co., Ltd.) as an ethylenic double bond-containing plasticizer.

Before roll kneading, the preliminary kneaded mixture was placed and preliminarily heated in an oven at 60°C for over one hour to keep the temperature of the mixture at 60°C.

The mixture preliminarily heated to 60°C was fed into a two-mixing roll kneader (model: DY6-15, roller diameter: 6 inches, clearance between rollers: 0.5 mm, manufactured by: Daihan, Co., Ltd.) in which the roll kneading temperature was set to 80°C. Then, while feeding 1.5 parts of sulfur as a vulcanizing agent and 2 parts of tetramethylthiuram monosulfide (reagent grade) as a vulcanization accelerator, roll kneading was carried out (rotational frequency: 24 rpm (front roller) and 21 rpm (rear roller), kneading time: 15 minutes).

After the roll kneading, the mixture in a melted state was dried by heating at 80°C for 6 hours, thereby obtaining the hollow particle-containing elastomer composition of Example 12.

A sheet-shaped molded body (a hollow particle-containing elastomer molded body) having a thickness of 0.3 mm was produced by press-molding the obtained hollow particle-containing elastomer composition at a pressure of 1 MPa or less by a hot press machine at 120°C.

[Example 13]

The hollow particle-containing elastomer composition of Example 13 was obtained in the same manner as Example 12, except that the amount of the liquid polybutadiene (an ethylenic double bond-containing plasticizer) was changed from 60 parts by mass to 75 parts by mass, and the preliminary heating temperature of the heating condition was changed from 60°C to 80°C.

The obtained hollow particle-containing elastomer composition was press-molded in the same molding condition as Example 12, thereby obtaining the hollow particle-containing elastomer molded body of Example 13.

[Example 14]

The hollow particle-containing elastomer composition of Example 14 was obtained in the same manner as Example 12, except that the amount of the liquid polybutadiene (an ethylenic double bond-containing plasticizer) was changed from 60 parts by mass to 80 parts by mass.

The obtained hollow particle-containing elastomer composition was press-molded in the same molding condition as Example 12, thereby obtaining the hollow particle-containing elastomer molded body of Example 14.

[Comparative Example 1]

The hollow particle-containing elastomer composition of Comparative Example 1 was obtained in the same manner as Example 1, except that preliminarily heating was not carried out.

The obtained hollow particle-containing elastomer composition was press-molded in the same molding condition as Example 1, thereby obtaining the hollow particle-containing elastomer molded body of Comparative Example 1.

[Comparative Example 2]

The hollow particle-containing elastomer composition of Comparative Example 2 was obtained in the same manner as Example 1, except that preliminarily heating was not carried out, and roll kneading was carried out without heating.

The obtained hollow particle-containing elastomer composition was press-molded in the same molding condition as Example 1, thereby obtaining the hollow particle-containing elastomer molded body of Comparative Example 2.

[Comparative Example 3]

The hollow particle-containing elastomer composition of Comparative Example 3 was obtained in the same manner as Example 1, except that the amount of the plasticizer was changed to 30 parts by mass.

The obtained hollow particle-containing elastomer composition was press-molded in the same molding condition as Example 1, thereby obtaining the hollow particle-containing elastomer molded body of Comparative Example 3.

[Evaluation of the properties of the hollow particle-containing elastomer composition and the elastomer molded body]

1. Measurement of storage elastic modulus G'

Dynamic viscoelasticity measurement of the hollow particle-containing elastomer compositions and the raw material mixtures at the stage of the preliminary kneading step, which were obtained in Examples and Comparative Examples, was carried out by the following method. The raw material mixtures at the stage of the preliminary kneading step were quasi-raw material mixtures having a formulation that did not include a vulcanizing agent and a vulcanization accelerator. If 1.5 parts of sulfur (a vulcanizing agent) and 2 parts of tetramethylthiuram monosulfide (a vulcanization accelerator) are added to each raw material mixture at the stage of the preliminary kneading step in the above Examples and Comparative Examples, the formulation of each raw material mixture becomes the same as a final formulation of the raw material mixture and the hollow particle-containing elastomer composition.

From the measurement results, the storage elastic modulus G' at 60°C of the elastomer composition, the storage elastic modulus G' at 60°C of the raw material mixture, the storage elastic modulus G' of the raw material mixture at the roll kneading starting temperature (the preliminary heating temperature) and the storage elastic modulus G' of the raw material mixture at the roll kneading temperature were determined.

[Dynamic viscoelasticity measurement method]

The dynamic viscoelastic measurement was carried out using HAAKE MARS III (product name, manufactured by Thermo Fisher Scientific). A test piece was produced as follows: using the hollow particle-containing elastomer composition and the raw material mixture, a 2 mm thick sheet was produced by a press machine at 160°C, and the sheet was cut into the form of a 20 mm φ circle, thereby producing the test piece. The test piece (2 mm thick) was fused to a 20 mm φ parallel plate set to a temperature of 170°C. Then, the test piece was placed in the dynamic viscoelasticity measuring apparatus. While decreasing the temperature from 170°C to room temperature at 5°C/min, the storage elastic modulus G' (unit: MPa) of the test piece at from 150°C to room temperature was measured.

<Measurement condition>

Frequency: 1 Hz
Geometry: Parallel plate (20 mm φ)
Strain: 0.001
Gap: 1.5 mm

2. Measurement of the residual void ratio of the hollow particle-containing elastomer molded body

The specific gravity of the sheet-shaped elastomer molded body obtained in each of the examples and the comparative examples was measured, and the residual void ratio of the hollow particles in the elastomer molded body was calculated by the following formula (D).

$$\text{Residual void ratio (\%)} = \{(c-a)/(c-b)\} \times 100 \quad \text{Formula (D)}$$

a: The specific gravity of the sheet-shaped molded body obtained by press molding
b: The specific gravity (a calculated value) of the molded body with the premise that the voids were maintained
c: The specific gravity (a calculated value) of the molded body with the premise that all the hollow particles collapsed

For the elastomer compositions and elastomer molded bodies obtained in the examples and the comparative examples, Table 2 shows the amounts (parts by mass) of the added materials, the kneading condition, and the property evaluation results.

In Table 2, the residual void ratio of the elastomer molded body after the press molding is the average for a sample number of 10 (n=10).

The kneading condition of the examples and the comparative examples are generally as follows.

<Preliminary kneading>

Apparatus: PLASTI-CORDER LAB-STATION (manufactured by Brabender)
Mixer: W 250E
Blade: Roller type blade
Rotational frequency: 50 rpm
Kneading temperature: 100°C

<Roll kneading condition>

Apparatus: Two-mixing roll kneader DY6-15 (manufactured by: Daihan, Co., Ltd.)
Roller diameter: 6 inches
Rotational frequency: 24 rpm (front roller) and 21 rpm (rear roller)
clearance between rollers: 0.5 mm
Set temperature: 25°C to 80°C
Kneading time: 15 minutes

[Table 2-1]

| Table 2 | | | | | | | |
|---|---|---|---|---|---|---|---|
| Composition (parts by mass) | | | Example 1 | Example 2 | Example 3 | Example 4 | Example 5 |
| Elastomer composition | EPDM | | 100 | 100 | 100 | | |
| | Non-oil-extended styrene-butadiene rubber (Mooney viscosity: 52.0, Styrene amount: 23.5%) | | | | | 100 | 100 |
| | Oil-extended styrene-butadiene rubber (Mooney viscosity: 49.0, Styrene amount: 40.0%) | | | | | | |
| | Butadiene rubber (Mooney viscosity: 44.0, Styrene amount: 0%) | | | | | | |
| | Hollow particles A (Production Example 1) | | 25 | 25 | | 25 | 25 |
| | Hollow particles B (Production Example 2) | | | | 25 | | |
| | Carbon | | 45 | 45 | 45 | 25 | 45 |
| | Silica | | 29 | 29 | 29 | 29 | 29 |
| | Plasticizer (Process oil) | | 75 | 75 | 75 | 65 | 55 |
| | Plasticizer (Liquid polybutadiene) | | | | | 10 | 20 |

(continued)

| Table 2 | | | | | | | |
|---|---|---|---|---|---|---|---|
| Composition (parts by mass) | | | Example 1 | Example 2 | Example 3 | Example 4 | Example 5 |
| | | Vulcanizing agent | 1.5 | 1.5 | 1.5 | 1.5 | 1.5 |
| | | Vulcanization accelerator | 2 | 2 | 2 | 2 | 2 |
| Kneading temperature condition | | Preliminary kneading (kneader) temperature (°C) | 100 | 100 | 100 | 100 | 100 |
| | | Preliminary heating temperature (°C) | 60 | 80 | 60 | 60 | 60 |
| | | Roll kneading temperature (°C) | 80 | 80 | 80 | 80 | 80 |
| Properties | | Storage elastic modulus (MPa) at 60°C of the elastomer composition | 1.7 | 1.7 | 1.6 | 1.7 | 1.7 |
| | | Storage elastic modulus (MPa) at 60°C of the raw material mixture at the preliminary kneading stage | 1.7 | 1.7 | 1.6 | 1.7 | 1.6 |
| | | Storage elastic modulus (MPa) at the roll kneading starting temperature (preliminary heating temperature) of the raw material mixture itself | 1.7 | 1.2 | 1.6 | 1.7 | 1.7 |
| | | Storage elastic modulus (MPa) at the roll kneading temperature of the raw material mixture | 1.2 | 1.2 | 1.1 | 1.1 | 1.2 |
| | | Residual void ratio (%) of the hollow particles in the elastomer molded body | 100 | 100 | 100 | 100 | 100 |

Table 2-continued (1)

| Composition (parts by mass) | | | Example 6 | Example 7 | Example 8 | Example 9 | Example 10 | Example 11 |
|---|---|---|---|---|---|---|---|---|
| | | EPDM | | | | | | |
| | | Non-oil-extended styrene-butadiene rubber (Mooney viscosity: 52.0, Styrene amount: 23.5%) | 100 | 100 | 100 | | | |
| | | Oil-extended styrene-butadiene rubber (Mooney viscosity: 49.0, Styrene amount: 40.0%) | | | | 100 | 100 | 100 |
| | | Butadiene rubber (Mooney viscosity: 44.0, Styrene amount: 0%) | | | | | | |

(continued)

| Composition (parts by mass) | | Example 6 | Example 7 | Example 8 | Example 9 | Example 10 | Example 11 |
|---|---|---|---|---|---|---|---|
| Elastomer composition | Hollow particles A (Production Example 1) | 25 | 25 | 25 | 25 | 25 | 25 |
| | Hollow particles B (Production Example 2) | | | | | | |
| | Carbon | 45 | 45 | 45 | 45 | 45 | 45 |
| | Silica | 29 | 29 | 29 | 29 | 29 | 29 |
| | Plasticizer (Process oil) | | | | | | |
| | Plasticizer (Liquid polybutadiene) | 60 | 75 | 80 | 60 | 75 | 80 |
| | Vulcanizing agent | 1.5 | 1.5 | 1.5 | 1.5 | 1.5 | 1.5 |
| | Vulcanization accelerator | 2 | 2 | 2 | 2 | 2 | 2 |
| Kneading temperature condition | Preliminary kneading (kneader) temperature (°C) | 100 | 100 | 100 | 100 | 100 | 100 |
| | Preliminary heating temperature (°C) | 60 | 60 | 60 | 60 | 60 | 60 |
| | Roll kneading temperature (°C) | 80 | 80 | 80 | 80 | 80 | 80 |
| Properties | Storage elastic modulus (MPa) at 60°C of the elastomer composition | 2.1 | 1.9 | 1.6 | 2.2 | 1.9 | 1.6 |
| | Storage elastic modulus (MPa) at 60°C of the raw material mixture at the preliminary kneading stage | 1.7 | 1.7 | 1.7 | 1.6 | 1.7 | 1.7 |
| | Storage elastic modulus (MPa) at the roll kneading starting temperature (preliminary heating temperature) of the raw material mixture itself | 1.6 | 1.6 | 1.7 | 1.7 | 1.6 | 1.7 |
| | Storage elastic modulus (MPa) at the roll kneading temperature of the raw material mixture | 1.2 | 1.2 | 1.1 | 1.2 | 1.2 | 1.2 |
| | Residual void ratio (%) of the hollow particles in the elastomer molded body | 85 | 90 | 100 | 87 | 90 | 100 |

[Table 2-2]

| Table 2-continued (2) | | | | | | | |
|---|---|---|---|---|---|---|---|
| Composition (parts by mass) | | Example 12 | Example 13 | Example 14 | Comparative Example 1 | Comparative Example 2 | Comparative Example 3 |
| Elastomer composition | EPDM | | | | 100 | 100 | 100 |
| | Non-oil-extended styrene-butadiene rubber (Mooney viscosity: 52.0, Styrene amount: 23.5%) | | | | | | |
| | Oil-extended styrene-butadiene rubber (Mooney viscosity: 49.0, Styrene amount: 40.0%) | | | | | | |
| | Butadiene rubber (Mooney viscosity: 44.0, Styrene amount: 0%) | 100 | 100 | 100 | | | |
| | Hollow particles A (Production Example 1) | 25 | 25 | 25 | 25 | 25 | 25 |
| | Hollow particles B (Production Example 2) | | | | | | |
| | Carbon | 45 | 45 | 45 | 45 | 45 | 45 |
| | Silica | 29 | 29 | 29 | 29 | 29 | 29 |
| | Plasticizer (Process oil) | | | | 75 | 75 | 30 |
| | Plasticizer (Liquid polybutadiene) | 60 | 75 | 80 | | | |
| | Vulcanizing agent | 1.5 | 1.5 | 1.5 | 1.5 | 1.5 | 1.5 |
| | Vulcanization accelerator | 2 | 2 | 2 | 2 | 2 | 2 |

(continued)

| Table 2-continued (2) | | | | | | | |
|---|---|---|---|---|---|---|---|
| Composition (parts by mass) | | Example 12 | Example 13 | Example 14 | Comparative Example 1 | Comparative Example 2 | Comparative Example 3 |
| Kneading temperature condition | Preliminary kneading (kneader) temperature (°C) | 100 | 100 | 100 | 100 | 100 | 100 |
| | Preliminary heating temperature (°C) | 60 | 60 | 60 | 25 | 25 | 60 |
| | Roll kneading temperature (°C) | 80 | 80 | 80 | 80 | 25 | 80 |
| Properties | Storage elastic modulus (MPa) at 60°C of the elastomer composition | 2.5 | 2.3 | 2.2 | 1.7 | 1.7 | 3.2 |
| | Storage elastic modulus (MPa) at 60°C of the raw material mixture at the preliminary kneading stage | 1.7 | 1.7 | 1.6 | 1.7 | 1.7 | 3.2 |
| | Storage elastic modulus (MPa) at the roll kneading starting temperature (preliminary heating temperature) of the raw material mixture itself | 1.6 | 1.7 | 1.7 | 4.6 | 4.6 | 3.2 |
| | Storage elastic modulus (MPa) at the roll kneading temperature of the raw material mixture | 1.2 | 1.2 | 1.2 | 1.2 | 4.6 | 2.2 |
| | Residual void ratio (%) of the hollow particles in the elastomer molded body | 85 | 90 | 100 | 75 | 14 | 45 |

[Consideration]

In Examples 1 and 3, the elastomer composition was produced as follows: using the raw material mixture containing the base material elastomer and the hollow particles in which the resin forming the shell is a polymer containing 50 parts by mass or more of a crosslinkable monomer unit in 100 parts by mass of all monomer units, the steps from the preliminary kneading step to the roll kneading step were carried out at a preliminarily kneading temperature of 100°C, a preliminary kneading rotational frequency of 50 rpm, a preliminary heating temperature of 60°C and a roll kneading temperature of 80°C, thereby producing the elastomer composition.

As a result, in Example 1, the storage elastic modulus at 60°C of the elastomer composition and the storage elastic modulus at 60°C of the raw material mixture after the homogenization treatment were 1.7 MPa. In Example 3, the storage elastic modulus at 60°C of the elastomer composition and the storage elastic modulus at 60°C of the raw material mixture after the homogenization treatment were 1.6 MPa. Accordingly, in both Examples 1 and 3, the storage elastic modulus at 60°C of the elastomer composition and the storage elastic modulus at 60°C of the raw material mixture after the homogenization treatment were 2.5 MPa or less.

The formulation of the raw material mixture at the preliminary kneading stage differs from that of the finallyobtained elastomer composition in not containing a vulcanizing agent and a vulcanization accelerator. However, the storage elastic modulus at 60°C was not greatly varied by this level of compositional difference.

Also, each of the elastomer compositions obtained in Examples 1 and 3 was press-molded, thereby producing a sheet-shaped molded body. The residual void ratio of the hollow particles present in the molded body was 100%. Accordingly, it was confirmed that the molded body in which the hollow particles were less likely to collapse during the molding step and the residual void ratio was high, was obtained.

In Example 1, the storage elastic modulus of the raw material mixture at the roll kneading starting temperature (equivalent to the preliminary heating temperature), that is, the storage elastic modulus at 60°C was 1.7 MPa, and it was 2.5 MPa or less. In addition, the storage elastic modulus of the raw material mixture at the roll kneading temperature, that is, the storage elastic modulus at 80°C was 1.2 MPa, and it was lower than the storage elastic modulus at the time of starting the roll kneading. Accordingly, it is thought that the load applied by the roll kneading was suppressed, and the hollow particles were less likely to collapse.

In Example 3, the storage elastic modulus of the raw material mixture at the roll kneading starting temperature (equivalent to the preliminary heating temperature), that is, the storage elastic modulus at 60°C was 1.6 MPa, and it was 2.5 MPa or less. In addition, the storage elastic modulus of the raw material mixture at the roll kneading temperature, that is, the storage elastic modulus at 80°C was 1.1 MPa, and it was lower than the storage elastic modulus at the time of starting the roll kneading. Accordingly, it is thought that the load applied by the roll kneading was suppressed, and the hollow particles were less likely to collapse.

In Example 2, the elastomer composition was produced as follows: using the same raw material mixture as Example 1, the steps from the preliminary kneading step to the roll kneading step were carried out at a preliminarily kneading temperature of 100°C, a preliminary kneading rotational frequency of 50 rpm, a preliminary heating temperature of 80°C and a roll kneading temperature of 80°C, thereby producing the elastomer composition. Since the raw material mixture used in Example 2 and the obtained elastomer composition are the same as those of Example 1, their storage elastic moduli at 60°C were 2.5 MPa or less. Also, the elastomer composition obtained in Example 2 was press-molded, thereby producing a sheet-shaped molded body. The residual void ratio of the hollow particles present in the molded body was 100%. Accordingly, it was confirmed that the molded body in which the hollow particles were less likely to collapse during the molding step and the residual void ratio was high, was obtained.

Examples 1 and 2 used the raw material mixtures having the same composition. However, the roll kneading starting temperatures (equivalent to the preliminary heating temperature) of the raw material mixtures were different. That is, the roll kneading starting temperature of Example 1 was 60°C, and the roll kneading starting temperature of Example 2 was 80°C. Although there is such a difference in process temperature, the residual void ratio of the hollow particles in the elastomer molded body of Example 1 and that of Example 2 are both 100%, and a difference in the collapse resistance of the hollow particles cannot be found between them insofar as viewing the residual void ratio results. Nevertheless, in Example 2, the roll kneading starting temperature and roll kneading temperature of the raw material mixture are both 80°C, and the storage elastic modulus of the raw material mixture at the process temperature, that is, the storage elastic modulus at 80°C was 1.2 MPa from the initial stage to the final stage of the roll kneading, thus the load applied by the roll kneading was suppressed in comparison with Example 1. Accordingly, it is thought that Example 2 realized the kneading condition in which the hollow particles were much less likely to collapse compared to Example 1.

Comparative Examples 1 and 2 used the same raw material mixture as Example 1. Since the composition of the raw material mixture used in Comparative Examples 1 and 2 and that of the obtained elastomer composition were the same as those of Example 1, their storage elastic modulus at 60°C were 2.5 MPa or less.

In Comparative Example 1, however, due to the lack of preliminarily heating, the roll kneading starting temperature was room temperature (25°C) and low. The elastomer composition obtained in Comparative Example 1 was press-molded, thereby producing a sheet-shaped molded body. The residual void ratio of the hollow particles present in the molded body was 75%. Comparative Example 1 used the raw material mixture having the same composition as Example 1. However, the storage elastic modulus of the raw material mixture at the roll kneading starting temperature, that is, at 25°C was 4.6 MPa, and it was more than 2.5 MPa. Accordingly, it is thought that the load applied by the roll kneading at the initial stage of the roll kneading increased in comparison with Example 1, and many of the hollow particles collapsed.

In Comparative Example 2, the raw material mixture was left at room temperature without preliminarily heating, and the roll kneading step was also carried out at room temperature. Accordingly, the roll kneading was carried out at room temperature (25°C) from the initial stage to the final stage. The elastomer composition obtained in Comparative Example 2 was press-molded, thereby producing a sheet-shaped molded body. The residual void ratio of the hollow particles present in the molded body was 14%.

Comparative Example 2 used the raw material mixture having the same composition as Example 1 and Comparative Example 1. However, from the initial stage to the final stage of the roll kneading, the storage elastic modulus of the raw material mixture at the process temperature, that is, at 25°C was 4.6 MPa, and it was more than 2.5 MPa. Accordingly, it is thought that from the initial stage to the final stage of the roll kneading, the load applied by the roll kneading increased in comparison with Example 1 and Comparative Example 1, and many of the hollow particles collapsed.

In Comparative Example 3, the content of the plasticizer in the raw material mixture of Example 1 was decreased to 30 parts by mass. As a result, the storage elastic modulus at 60°C of the elastomer composition and the storage elastic modulus at 60°C of the raw material mixture after the homogenization treatment were both 3.2 MPa, and they were more than 2.5 MPa. The elastomer composition thus obtained was press-molded, thereby producing a sheet-shaped molded body. The residual void ratio of the hollow particles present in the molded body was 45%, and the void ratio that the hollow particles initially had could not be retained.

In Comparative Example 3, the storage elastic modulus of the raw material mixture at the roll kneading starting temperature (equivalent to the preliminary heating temperature), that is, the storage elastic modulus at 60°C was 3.2 MPa; the storage elastic modulus of the raw material mixture at the roll kneading temperature, that is, the storage elastic modulus at 80°C was 2.2 MPa; thus the storage elastic modulus of the raw material mixture at the process temperature, that is, the storage elastic modulus at 60°C to 80°C was more than 2.5 MPa from the initial stage to the final stage of the roll kneading. Accordingly, it is thought that from the initial stage to the final stage of the roll kneading, the load applied by the roll kneading increased in comparison with Example 1, and many of the hollow particles collapsed.

Examples 4 and 5 are such examples as, in the raw material mixture of Example 1, the base material elastomer was changed from EPDM to non-oil-extended styrene-butadiene rubber, and a part of the plasticizer not having a reaction active site was replaced with the reaction active site-containing plasticizer.

The raw material mixture of Example 4 is the same raw material mixture as Example 1, except for the following: the base material elastomer was changed from EPDM to non-oil-extended styrene-butadiene rubber; the content of the carbon was changed from 45 parts by mass to 25 parts by mass; the content of the plasticizer (process oil) was decreased from 75 parts by mass to 65 parts by mass; 10 parts by mass of a reaction active site-containing plasticizer (liquid polybutadiene) was added; and the total amount of the plasticizer and the reaction active site-containing plasticizer was the same as the content of the plasticizer in Example 1, that is, 75 parts by mass. The kneading condition was the same as Example 1. The steps from the preliminary kneading step to the roll kneading step were carried out at a preliminarily kneading temperature of 100°C, a preliminary kneading rotational frequency of 50 rpm, a preliminary heating temperature of 60°C and a roll kneading temperature of 80°C, thereby producing an elastomer composition.

As a result, the storage elastic modulus at 60°C of the elastomer composition obtained in Example 4 and the storage elastic modulus at 60°C of the raw material mixture after the homogenization treatment were 1.7 MPa. That is, they were 2.5 MPa or less.

The raw material mixture of Example 5 is the same raw material mixture as Example 1, except for the following: the base material elastomer was changed from EPDM to non-oil-extended styrene-butadiene rubber; the content of the plasticizer (process oil) was decreased from 75 parts by mass to 55 parts by mass; 20 parts by mass of a reaction active site-containing plasticizer (liquid polybutadiene) was added; and the total amount of the plasticizer and the reaction active site-containing plasticizer was the same as the content of the plasticizer in Example 1, that is, 75 parts by mass. The kneading condition was the same as Example 1. The steps from the preliminary kneading step to the roll kneading step were carried out at a preliminarily kneading temperature of 100°C, a preliminary kneading rotational frequency of 50 rpm, a preliminary heating temperature of 60°C and a roll kneading temperature of 80°C, thereby producing an elastomer composition.

As a result, the storage elastic modulus at 60°C of the elastomer composition obtained in Example 5 was 1.7 MPa, and the storage elastic modulus at 60°C of the raw material mixture after the homogenization treatment was 1.6 MPa. That is, they were both 2.5 MPa or less.

In Examples 4 and 5, since a part of the plasticizer not having a reaction active site was replaced with the reaction active site-containing plasticizer, there is a possibility that a crosslinking structure was formed between the molecules of the base material elastomer via the reaction active site-containing plasticizer. However, since the amount of the reaction active site-containing plasticizer used was small, large variation was not found between the storage elastic modulus at 60°C of the raw material mixture at the preliminary kneading stage and the storage elastic modulus at 60°C of the obtained elastomer composition.

Also, each of the elastomer compositions obtained in Examples 4 and 5 was press-molded, thereby producing a sheet-shaped molded body. The residual void ratio of the hollow particles present in the molded body was 100%. Accordingly, it was confirmed that the molded body in which the hollow particles were less likely to collapse during the molding step and the residual void ratio was high, was obtained.

In Example 4, the storage elastic modulus of the raw material mixture at the roll kneading starting temperature (equivalent to the preliminary heating temperature), that is, the storage elastic modulus at 60°C was 1.7 MPa, and it was 2.5 MPa or less. In addition, the storage elastic modulus of the raw material mixture at the roll kneading temperature, that is, the storage elastic modulus at 80°C was 1.1 MPa, and it was lower than the storage elastic modulus at the time of starting the roll kneading. Accordingly, it is thought that the load applied by the roll kneading was suppressed, and the hollow particles were less likely to collapse.

In Example 5, the storage elastic modulus of the raw material mixture at the roll kneading starting temperature (equivalent to the preliminary heating temperature), that is, the storage elastic modulus at 60°C was 1.7 MPa, and it was 2.5 MPa or less. In addition, the storage elastic modulus of the raw material mixture at the roll kneading temperature, that is, the storage elastic modulus at 80°C was 1.2 MPa, and it was lower than the storage elastic modulus at the time of starting the roll kneading. Accordingly, it is thought that the load applied by the roll kneading was suppressed, and the hollow particles were less likely to collapse.

Examples 6 to 8 are such examples as, in the raw material mixture of Example 1, the base material elastomer was changed from EPDM to non-oil-extended styrene-butadiene rubber, and the plasticizer not having a reaction active site was changed to the reaction active site-containing plasticizer.

The raw material mixture of Example 6 is the same raw material mixture as Example 1, except for the following: the base material elastomer was changed from EPDM to non-oil-extended styrene-butadiene rubber, and 60 parts by mass of a reaction active site-containing plasticizer (liquid polybutadiene) was used instead of the use of 75 parts by mass of the plasticizer (process oil). The kneading condition was the same as Example 1. The steps from the preliminary kneading step to the roll kneading step were carried out at a preliminarily kneading temperature of 100°C, a preliminary kneading rotational frequency of 50 rpm, a preliminary heating temperature of 60°C and a roll kneading temperature of 80°C, thereby producing an elastomer composition.

As a result, the storage elastic modulus at 60°C of the elastomer composition obtained in Example 6 was 2.1 MPa, and the storage elastic modulus at 60°C of the raw material mixture after the homogenization treatment was 1.7 MPa. That is, they were both 2.5 MPa or less.

In Example 6, it is thought that since a crosslinking structure was formed between the molecules of the base material elastomer via the reaction active site-containing plasticizer, the storage elastic modulus at 60°C of the obtained elastomer composition increased in comparison with the storage elastic modulus at 60°C of the raw material mixture at the preliminary kneading stage.

Also, the elastomer composition obtained in Example 6 was press-molded, thereby producing a sheet-shaped molded body. The residual void ratio of the hollow particles present in the molded body was 85%. Accordingly, it was confirmed that the molded body in which the hollow particles were less likely to collapse during the molding step and the residual void ratio was high, was obtained.

In Example 6, the storage elastic modulus of the raw material mixture at the roll kneading starting temperature (equivalent to the preliminary heating temperature), that is, the storage elastic modulus at 60°C was 1.6 MPa, and it was 2.5 MPa or less. In addition, the storage elastic modulus of the raw material mixture at the roll kneading temperature, that is, the storage elastic modulus at 80°C was 1.2 MPa, and it was lower than the storage elastic modulus at the time of starting the roll kneading. Accordingly, it is thought that the load applied by the roll kneading was suppressed, and the hollow particles were less likely to collapse.

The raw material mixture of Example 7 is the same raw material mixture as Example 1, except for the following: the base material elastomer was changed from EPDM to non-oil-extended styrene-butadiene rubber, and 75 parts by mass of a reaction active site-containing plasticizer (liquid polybutadiene) was used instead of the use of 75 parts by mass of the plasticizer (process oil). The kneading condition was the same as Example 1. The steps from the preliminary kneading step to the roll kneading step were carried out at a preliminarily kneading temperature of 100°C, a preliminary kneading rotational frequency of 50 rpm, a preliminary heating temperature of 60°C and a roll kneading temperature of 80°C, thereby producing an elastomer composition.

As a result, the storage elastic modulus at 60°C of the elastomer composition obtained in Example 7 was 1.9 MPa, and the storage elastic modulus at 60°C of the raw material mixture after the homogenization treatment was 1.7 MPa. That is, they were both 2.5 MPa or less.

In Example 7, though the storage elastic modulus at 60°C of the elastomer composition increased than the storage elastic modulus at 60°C of the raw material mixture at the preliminary kneading stage, a difference in the increase in the storage elastic modulus is small in comparison with Example 6. The reason is thought that the amount of the reaction active site-containing plasticizer used in Example 7 was larger than that of the reaction active site-containing plasticizer used in Example 6. More specifically, the reason is thought as follows: in the elastomer composition of Example 7, the effect of increase in the plasticity by increasing the used amount of the reaction active site-containing plasticizer competed against the effect of increase in the storage elastic modulus by forming a crosslinking structure between the molecules of the base material elastomer via the reaction active site-containing plasticizer, thus, the difference in the increase in the storage elastic modulus decreased in comparison with Example 6.

Also, the elastomer composition obtained in Example 7 was press-molded, thereby producing a sheet-shaped molded body. The residual void ratio of the hollow particles present in the molded body was 90%. Accordingly, it was confirmed that the molded body in which the hollow particles were less likely to collapse during the molding step and the residual void ratio was high, was obtained.

In Example 7, the storage elastic modulus of the raw material mixture at the roll kneading starting temperature (equivalent to the preliminary heating temperature), that is, the storage elastic modulus at 60°C was 1.6 MPa, and it was 2.5 MPa or less. In addition, the storage elastic modulus of the raw material mixture at the roll kneading temperature, that is, the storage elastic modulus at 80°C was 1.2 MPa, and it was lower than the storage elastic modulus at the time of starting the roll kneading. Accordingly, it is thought that the load applied by the roll kneading was suppressed, and the hollow particles were less likely to collapse.

Though the storage elastic modulus of the raw material mixture of Example 7 at the roll kneading starting temperature (60°C) and the storage elastic modulus of the raw material mixture thereof at the roll kneading temperature (80°C) were the same as those of Example 6, the residual void ratio of the molded body of Example 7 was 90%, and it was higher than the residual void ratio (85%) of the molded body of Example 6. The reason is thought as follows: in the elastomer composition of Example 7, the effect of increase in the plasticity by increasing the used amount of the reaction active site-containing plasticizer competed against the effect of increase in the storage elastic modulus by forming a crosslinking structure between the molecules of the base material elastomer via the reaction active site-containing plasticizer. That is, owing to the competitive effect of increase in the plasticity, the storage elastic modulus of the raw material mixture decreased rapidly in the process raising the roll kneading temperature of the raw material mixture from 60°C to 80°C, thus, the load applied by the roll kneading was suppressed in comparison with Example 6, and the hollow particles were less likely to collapse.

The raw material mixture of Example 8 is the same raw material mixture as Example 1, except for the following: the base material elastomer was changed from EPDM to non-oil-extended styrene-butadiene rubber, and 80 parts by mass of a reaction active site-containing plasticizer (liquid polybutadiene) was used instead of the use of 75 parts by mass of the plasticizer (process oil). The kneading condition was the same as Example 1. The steps from the preliminary kneading step to the roll kneading step were carried out at a preliminarily kneading temperature of 100°C, a preliminary kneading rotational frequency of 50 rpm, a preliminary heating temperature of 60°C and a roll kneading temperature of 80°C, thereby producing an elastomer composition.

As a result, the storage elastic modulus at 60°C of the elastomer composition obtained in Example 8 was 1.6 MPa, and the storage elastic modulus at 60°C of the raw material mixture after the homogenization treatment was 1.7 MPa. That is, they were both 2.5 MPa or less.

In Example 8, although the amount of the reaction active site-containing plasticizer used was larger than Example 7, the storage elastic modulus at 60°C of the obtained elastomer composition was a low value that is comparable to those of Examples 4 and 5 in which the amount of the reaction active site-containing plasticizer used was small. The reason is thought as follows: the reaction of forming a crosslinking structure between the molecules of the base material elastomer via the reaction active site-containing plasticizer became saturated, and the effect of increase in the storage elastic modulus reached the upper limit; to the contrary, the content of the reaction active site-containing plasticizer in the free state, that is, the content of the reaction active site-containing plasticizer not bound to the base material elastomer increased, and the effect of increase in the plasticity dominated.

Also, the elastomer composition obtained in Example 8 was press-molded, thereby producing a sheet-shaped molded body. The residual void ratio of the hollow particles present in the molded body was 100%. Accordingly, it was confirmed that the molded body in which the hollow particles were less likely to collapse during the molding step and the residual void ratio was high, was obtained.

In Example 8, the storage elastic modulus of the raw material mixture at the roll kneading starting temperature (equivalent to the preliminary heating temperature), that is, the storage elastic modulus at 60°C was 1.7 MPa, and it was 2.5 MPa or less. In addition, the storage elastic modulus of the raw material mixture at the roll kneading temperature, that is, the storage elastic modulus at 80°C was 1.1 MPa, and it was lower than the storage elastic modulus at the time of starting the roll kneading. Accordingly, it is thought that the load applied by the roll kneading was suppressed, and the hollow particles were less likely to collapse.

Though the storage elastic modulus of the raw material mixture of Example 8 at the roll kneading starting temperature (60°C) and the storage elastic modulus of the raw material mixture thereof at the roll kneading temperature (80°C) were almost the same as those of Examples 6 and 7, the residual void ratio of the molded body of Example 8 was 100%, and it was higher than the residual void ratios of the molded bodies of Examples 6 and 7. The reason is thought as follows: in the elastomer composition of Example 8, the effect of increase in the plasticity by increasing the used amount of the reaction active site-containing plasticizer dominated the effect of increase in the storage elastic modulus by forming a crosslinking structure between the molecules of the base material elastomer via the reaction active site-containing plasticizer. That is, since the effect of increase in the plasticity dominated, the storage elastic modulus of the raw material mixture decreased rapidly in the process of raising the roll kneading temperature of the raw material mixture from 60°C to 80°C, thus, the load applied by the roll kneading was suppressed in comparison with Examples 6 and 7, and the hollow particles were less likely to collapse.

Examples 9 to 11 are such examples as, in the raw material mixture of Example 1, the base material elastomer was changed from EPDM to oil-extended styrene-butadiene rubber, and the plasticizer not having a reaction active site was changed to the reaction active site-containing plasticizer.

The raw material mixture of Example 9 is the same raw material mixture as Example 1, except for the following: the base material elastomer was changed from EPDM to oil-extended styrene-butadiene rubber, and 60 parts by mass of a reaction active site-containing plasticizer (liquid polybutadiene) was used instead of the use of 75 parts by mass of the plasticizer (process oil). The kneading condition was the same as Example 1. The steps from the preliminary kneading step to the roll kneading step were carried out at a preliminarily kneading temperature of 100°C, a preliminary kneading rotational frequency of 50 rpm, a preliminary heating temperature of 60°C and a roll kneading temperature of 80°C, thereby producing an elastomer composition.

As a result, the storage elastic modulus at 60°C of the elastomer composition obtained in Example 9 was 2.2 MPa, and the storage elastic modulus at 60°C of the raw material mixture after the homogenization treatment was 1.6 MPa. That is, they were both 2.5 MPa or less.

In Example 9, it is thought that since a crosslinking structure was formed between the molecules of the base material elastomer via the reaction active site-containing plasticizer, the storage elastic modulus at 60°C of the obtained elastomer composition increased in comparison with the storage elastic modulus at 60°C of the raw material mixture at the preliminary kneading stage.

Also, the elastomer composition obtained in Example 9 was press-molded, thereby producing a sheet-shaped molded body. The residual void ratio of the hollow particles present in the molded body was 87%. Accordingly, it was confirmed that the molded body in which the hollow particles were less likely to collapse during the molding step and the residual void ratio was high, was obtained.

In Example 9, the storage elastic modulus of the raw material mixture at the roll kneading starting temperature (equivalent to the preliminary heating temperature), that is, the storage elastic modulus at 60°C was 1.7 MPa, and it was 2.5 MPa or less. In addition, the storage elastic modulus of the raw material mixture at the roll kneading temperature, that is, the storage elastic modulus at 80°C was 1.2 MPa, and it was lower than the storage elastic modulus at the time of starting the roll kneading. Accordingly, it is thought that the load applied by the roll kneading was suppressed, and the hollow particles were less likely to collapse.

The raw material mixture of Example 10 is the same raw material mixture as Example 1, except for the following: the base material elastomer was changed from EPDM to oil-extended styrene-butadiene rubber, and 75 parts by mass of a reaction active site-containing plasticizer (liquid polybutadiene) was used instead of the use of 75 parts by mass of the plasticizer (process oil). The kneading condition was the same as Example 1. The steps from the preliminary kneading step to the roll kneading step were carried out at a preliminarily kneading temperature of 100°C, a preliminary kneading rotational frequency of 50 rpm, a preliminary heating temperature of 60°C and a roll kneading temperature of 80°C, thereby producing an elastomer composition.

As a result, the storage elastic modulus at 60°C of the elastomer composition obtained in Example 10 was 1.9 MPa, and the storage elastic modulus at 60°C of the raw material mixture after the homogenization treatment was 1.7 MPa. That is, they were both 2.5 MPa or less.

In Example 10, though the storage elastic modulus at 60°C of the elastomer composition increased than the storage elastic modulus at 60°C of the raw material mixture at the preliminary kneading stage, a difference in the increase in the storage elastic modulus is small in comparison with Example 9. The reason is thought that the amount of the reaction active site-containing plasticizer used in Example 10 was larger than that of the reaction active site-containing plasticizer used in Example 9. More specifically, the reason is thought as follows: in the elastomer composition of Example 10, the effect of increase in the plasticity by increasing the used amount of the reaction active site-containing plasticizer competed against the effect of increase in the storage elastic modulus by forming a crosslinking structure between the molecules of the base material elastomer via the reaction active site-containing plasticizer, thus, the difference in the increase in the storage elastic modulus decreased in comparison with Example 9.

Also, the elastomer composition obtained in Example 10 was press-molded, thereby producing a sheet-shaped molded body. The residual void ratio of the hollow particles present in the molded body was 90%. Accordingly, it was confirmed that the molded body in which the hollow particles were less likely to collapse during the molding step and the residual void ratio was high, was obtained.

In Example 10, the storage elastic modulus of the raw material mixture at the roll kneading starting temperature (equivalent to the preliminary heating temperature), that is, the storage elastic modulus at 60°C was 1.6 MPa, and it was 2.5 MPa or less. In addition, the storage elastic modulus of the raw material mixture at the roll kneading temperature, that is, the storage elastic modulus at 80°C was 1.2 MPa, and it was lower than the storage elastic modulus at the time of starting the roll kneading. Accordingly, it is thought that the load applied by the roll kneading was suppressed, and the hollow particles were less likely to collapse.

Though the storage elastic modulus of the raw material mixture of Example 10 at the roll kneading starting temperature (60°C) and the storage elastic modulus of the raw material mixture thereof at the roll kneading temperature (80°C) were almost the same as those of Example 9, the residual void ratio of the molded body of Example 10 was 90%, and it was higher than the residual void ratio (87%) of the molded body of Example 9. The reason is thought as follows: in the elastomer composition of Example 10, the effect of increase in the plasticity by increasing the used amount of the reaction active site-containing plasticizer competed against the effect of increase in the storage elastic modulus by forming a crosslinking structure between the molecules of the base material elastomer via the reaction active site-containing plasticizer. That is, owing to the competitive effect of increase in the plasticity, the storage elastic modulus of the raw material mixture decreased rapidly in the process raising the roll kneading temperature of the raw material mixture from 60°C to 80°C, thus, the load applied by the roll kneading was suppressed in comparison with Example 9, and the hollow particles were less likely to collapse.

The raw material mixture of Example 11 is the same raw material mixture as Example 1, except for the following: the base material elastomer was changed from EPDM to oil-extended styrene-butadiene rubber, and 80 parts by mass of a reaction active site-containing plasticizer (liquid polybutadiene) was used instead of the use of 75 parts by mass of the plasticizer (process oil). The kneading condition was the same as Example 1. The steps from the preliminary kneading step to the roll kneading step were carried out at a preliminarily kneading temperature of 100°C, a preliminary kneading rotational frequency of 50 rpm, a preliminary heating temperature of 60°C and a roll kneading temperature of 80°C, thereby producing an elastomer composition.

As a result, the storage elastic modulus at 60°C of the elastomer composition obtained in Example 11 was 1.6 MPa, and the storage elastic modulus at 60°C of the raw material mixture after the homogenization treatment was 1.7 MPa. That is, they were both 2.5 MPa or less.

In Example 11, although the amount of the reaction active site-containing plasticizer used was larger than Example 10, the storage elastic modulus at 60°C of the obtained elastomer composition was a low value in comparison with Example 10. The reason is thought as follows: the reaction of forming a crosslinking structure between the molecules of the base material elastomer via the reaction active site-containing plasticizer became saturated, and the effect of increase in the storage elastic modulus reached the upper limit; to the contrary, the content of the reaction active site-containing plasticizer in the free state, that is, the content of the reaction active site-containing plasticizer not bound to the base material elastomer increased, and the effect of increase in the plasticity dominated.

Also, the elastomer composition obtained in Example 11 was press-molded, thereby producing a sheet-shaped molded body. The residual void ratio of the hollow particles present in the molded body was 100%. Accordingly, it was confirmed that the molded body in which the hollow particles were less likely to collapse during the molding step and the residual void ratio was high, was obtained.

In Example 11, the storage elastic modulus of the raw material mixture at the roll kneading starting temperature (equivalent to the preliminary heating temperature), that is, the storage elastic modulus at 60°C was 1.7 MPa, and it was 2.5 MPa or less. In addition, the storage elastic modulus of the raw material mixture at the roll kneading temperature, that is, the storage elastic modulus at 80°C was 1.2 MPa, and it was lower than the storage elastic modulus at the time of starting the roll kneading. Accordingly, it is thought that the load applied by the roll kneading was suppressed, and the hollow particles were less likely to collapse.

Though the storage elastic modulus of the raw material mixture of Example 11 at the roll kneading starting temperature (60°C) and the storage elastic modulus of the raw material mixture thereof at the roll kneading temperature (80°C) were almost the same as those of Examples 9 and 10, the residual void ratio of the molded body of Example 11 was 100%, and it was higher than the residual void ratios of the molded bodies of Examples 9 and 10. The reason is thought as follows: in the elastomer composition of Example 11, the effect of increase in the plasticity by increasing the used amount of the reaction active site-containing plasticizer dominated the effect of increase in the storage elastic modulus by forming a crosslinking structure between the molecules of the base material elastomer via the reaction active site-containing plasticizer. That is, since the effect of increase in the plasticity dominated, the storage elastic modulus of the raw material mixture decreased rapidly in the process of raising the roll kneading temperature of the raw material mixture from 60°C to 80°C, thus, the load applied by the roll kneading was suppressed in comparison with Examples 9 and 10, and the hollow particles were less likely to collapse.

Examples 12 to 14 are such examples as, in the raw material mixture of Example 1, the base material elastomer was changed from EPDM to butadiene rubber, and the plasticizer not having a reaction active site was changed to the reaction active site-containing plasticizer.

The raw material mixture of Example 12 is the same raw material mixture as Example 1, except for the following: the base material elastomer was changed from EPDM to butadiene rubber, and 60 parts by mass of a reaction active site-containing plasticizer (liquid polybutadiene) was used instead of the use of 75 parts by mass of the plasticizer (process oil).

The kneading condition was the same as Example 1. The steps from the preliminary kneading step to the roll kneading step were carried out at a preliminarily kneading temperature of 100°C, a preliminary kneading rotational frequency of 50 rpm, a preliminary heating temperature of 60°C and a roll kneading temperature of 80°C, thereby producing an elastomer composition.

As a result, the storage elastic modulus at 60°C of the elastomer composition obtained in Example 12 was 2.5 MPa, and the storage elastic modulus at 60°C of the raw material mixture after the homogenization treatment was 1.7 MPa. That is, they were both 2.5 MPa or less.

In Example 12, it is thought that since a crosslinking structure was formed between the molecules of the base material elastomer via the reaction active site-containing plasticizer, the storage elastic modulus at 60°C of the obtained elastomer composition increased in comparison with the storage elastic modulus at 60°C of the raw material mixture at the preliminary kneading stage.

Also, the elastomer composition obtained in Example 12 was press-molded, thereby producing a sheet-shaped molded body. The residual void ratio of the hollow particles present in the molded body was 85%. Accordingly, it was confirmed that the molded body in which the hollow particles were less likely to collapse during the molding step and the residual void ratio was high, was obtained.

In Example 12, the storage elastic modulus of the raw material mixture at the roll kneading starting temperature (equivalent to the preliminary heating temperature), that is, the storage elastic modulus at 60°C was 1.6 MPa, and it was 2.5 MPa or less. In addition, the storage elastic modulus of the raw material mixture at the roll kneading temperature, that is, the storage elastic modulus at 80°C was 1.2 MPa, and it was lower than the storage elastic modulus at the time of starting the roll kneading. Accordingly, it is thought that the load applied by the roll kneading was suppressed, and the hollow particles were less likely to collapse.

The raw material mixture of Example 13 is the same raw material mixture as Example 1, except for the following: the base material elastomer was changed from EPDM to butadiene rubber, and 75 parts by mass of a reaction active site-containing plasticizer (liquid polybutadiene) was used instead of the use of 75 parts by mass of the plasticizer (process oil). The kneading condition was the same as Example 1. The steps from the preliminary kneading step to the roll kneading step were carried out at a preliminarily kneading temperature of 100°C, a preliminary kneading rotational frequency of 50 rpm, a preliminary heating temperature of 60°C and a roll kneading temperature of 80°C, thereby producing an elastomer composition.

As a result, the storage elastic modulus at 60°C of the elastomer composition obtained in Example 13 was 2.3 MPa, and the storage elastic modulus at 60°C of the raw material mixture after the homogenization treatment was 1.7 MPa. That is, they were both 2.5 MPa or less.

In Example 13, though the storage elastic modulus at 60°C of the elastomer composition increased than the storage elastic modulus at 60°C of the raw material mixture at the preliminary kneading stage, a difference in the increase in the storage elastic modulus is small in comparison with Example 12. The reason is thought that the amount of the reaction active site-containing plasticizer used in Example 13 was larger than that of the reaction active site-containing plasticizer used in Example 12. More specifically, the reason is thought as follows: in the elastomer composition of Example 13, the effect of increase in the plasticity by increasing the used amount of the reaction active site-containing plasticizer competed against the effect of increase in the storage elastic modulus by forming a crosslinking structure between the molecules of the base material elastomer via the reaction active site-containing plasticizer, thus, the difference in the increase in the storage elastic modulus decreased compared to Example 12.

Also, the elastomer composition obtained in Example 13 was press-molded, thereby producing a sheet-shaped molded body. The residual void ratio of the hollow particles present in the molded body was 90%. Accordingly, it was confirmed that the molded body in which the hollow particles were less likely to collapse during the molding step and the residual void ratio was high, was obtained.

In Example 13, the storage elastic modulus of the raw material mixture at the roll kneading starting temperature (equivalent to the preliminary heating temperature), that is, the storage elastic modulus at 60°C was 1.7 MPa, and it was 2.5 MPa or less. In addition, the storage elastic modulus of the raw material mixture at the roll kneading temperature, that is, the storage elastic modulus at 80°C was 1.2 MPa, and it was lower than the storage elastic modulus at the time of starting the roll kneading. Accordingly, it is thought that the load applied by the roll kneading was suppressed, and the hollow particles were less likely to collapse.

Though the storage elastic modulus of the raw material mixture of Example 13 at the roll kneading starting temperature (60°C) and the storage elastic modulus of the raw material mixture thereof at the roll kneading temperature (80°C) were almost the same as those of Example 12, the residual void ratio of the molded body of Example 13 was 90%, and it was higher than the residual void ratio (85%) of the molded body of Example 12. The reason is thought as follows: in the elastomer composition of Example 13, the effect of increase in the plasticity by increasing the used amount of the reaction active site-containing plasticizer competed against the effect of increase in the storage elastic modulus by forming a crosslinking structure between the molecules of the base material elastomer via the reaction active site-containing plasticizer. That is, owing to the competitive effect of increase in the plasticity, the storage elastic modulus of the raw material mixture decreased rapidly in the process raising the roll kneading temperature of the raw material mixture from 60°C to 80°C, thus, the load applied by the roll kneading was suppressed in comparison with Example 12, and the hollow particles were less likely to collapse.

The raw material mixture of Example 14 is the same raw material mixture as Example 1, except for the following: the base material elastomer was changed from EPDM to butadiene rubber, and 80 parts by mass of a reaction active site-containing plasticizer (liquid polybutadiene) was used instead of the use of 75 parts by mass of the plasticizer (process oil). The kneading condition was the same as Example 1. The steps from the preliminary kneading step to the roll kneading step were carried out at a preliminarily kneading temperature of 100°C, a preliminary kneading rotational frequency of 50 rpm, a preliminary heating temperature of 60°C and a roll kneading temperature of 80°C, thereby producing an elastomer composition.

As a result, the storage elastic modulus at 60°C of the elastomer composition obtained in Example 14 was 2.2 MPa, and the storage elastic modulus at 60°C of the raw material mixture after the homogenization treatment was 1.6 MPa. That is, they were both 2.5 MPa or less.

In Example 14, although the amount of the reaction active site-containing plasticizer used was larger than Example 13, the storage elastic modulus at 60°C of the obtained elastomer composition was a low value in comparison with Example 13. The reason is thought as follows: the reaction of forming a crosslinking structure between the molecules of the base material elastomer via the reaction active site-containing plasticizer became saturated, and the effect of increase in the storage elastic modulus reached the upper limit; to the contrary, the content of the reaction active site-containing plasticizer in the free state, that is, the content of the reaction active site-containing plasticizer not bound to the base material elastomer increased, and the effect of increase in the plasticity dominated.

Also, the elastomer composition obtained in Example 14 was press-molded, thereby producing a sheet-shaped molded body. The residual void ratio of the hollow particles present in the molded body was 100%. Accordingly, it was confirmed that the molded body in which the hollow particles were less likely to collapse during the molding step and the residual void ratio was high, was obtained.

In Example 14, the storage elastic modulus of the raw material mixture at the roll kneading starting temperature (equivalent to the preliminary heating temperature), that is, the storage elastic modulus at 60°C was 1.7 MPa, and it was 2.5 MPa or less. In addition, the storage elastic modulus of the raw material mixture at the roll kneading temperature, that is, the storage elastic modulus at 80°C was 1.2 MPa, and it was lower than the storage elastic modulus at the time of starting the roll kneading. Accordingly, it is thought that the load applied by the roll kneading was suppressed, and the hollow particles were less likely to collapse.

Though the storage elastic modulus of the raw material mixture of Example 14 at the roll kneading starting temperature (60°C) and the storage elastic modulus of the raw material mixture thereof at the roll kneading temperature (80°C) were almost the same as those of Examples 12 and 13. However, the residual void ratio of the molded body of Example 14 was 100%, and it was higher than the residual void ratios of the molded bodies of Examples 12 and 13. The reason is thought as follows: in the elastomer composition of Example 14, the effect of increase in the plasticity by increasing the used amount of the reaction active site-containing plasticizer dominated the effect of increase in the storage elastic modulus by forming a crosslinking structure between the molecules of the base material elastomer via the reaction active site-containing plasticizer. That is, since the effect of increase in the plasticity dominated, the storage elastic modulus of the raw material mixture decreased rapidly in the process raising the roll kneading temperature of the raw material mixture from 60°C to 80°C, thus, the load applied by the roll kneading was suppressed in comparison with Examples 12 and 13, and the hollow particles were less likely to collapse.

Reference Signs List

1. Aqueous medium
2. Low polarity material
3. Dispersion stabilizer
4. Monomer composition
4a. Hydrophobic solvent
4b. Material other than hydrophobic solvent
4c. Polymerizable monomer dispersed in aqueous medium
5. Oil-soluble polymerization initiator
6. Shell
7. Hollow portion
8. Droplet
9. Precursor particle

10. Hollow particle having a gas-filled hollow portion

**Claims**

1. A hollow particle-containing elastomer composition comprising at least a base material elastomer and hollow particles,

   wherein the hollow particles have a shell and a hollow portion surrounded by the shell, the shell comprising a resin which is a polymer containing 50 parts by mass or more of a crosslinkable monomer unit in 100 parts by mass of all monomer units;
   wherein the hollow particle-containing elastomer composition has a storage elastic modulus G' at 60°C of 2.5 MPa or less, which is obtained by dynamic viscoelasticity measurement; and
   wherein the hollow particle-containing elastomer composition has a residual void ratio of 80% or more, which is obtained by forming a sheet-shaped molded body using the composition and measuring the residual void ratio in accordance with the following method:
   [method for measuring the residual void ratio of the hollow particle-containing elastomer molded body]
   a sheet-shaped, hollow particle-containing elastomer molded body is produced by press-molding the hollow particle-containing elastomer composition at a pressure of 1 MPa or less by a hot press machine at 120°C; a specific gravity of the obtained elastomer molded body is measured; and the residual void ratio of the hollow particles in the elastomer molded body is calculated by the following formula (D):

   $$\text{residual void ratio (\%)} = \{(c-a)/(c-b)\} \times 100 \quad \text{Formula (D)}$$

   a: the specific gravity of the sheet-shaped molded body after the pressing
   b: the specific gravity (a calculated value) of the molded body with the premise that the voids were maintained
   c: the specific gravity (a calculated value) of the molded body with the premise that all the hollow particles collapsed.

2. The hollow particle-containing elastomer composition according to Claim 1, wherein the hollow particles have a residual void ratio of 80% or more, which is measured by the following press test:
   [press test]

   a mixture of a polypropylene resin and the hollow particles at a mass ratio of 90:10 (polypropylene resin : hollow particles) is melted and mixed at 200°C; the mixture is poured into a mold for a hot press machine, heated at 200°C for 15 minutes, and then stirred; the mold is placed on the hot press machine set to 80°C; a cylinder heated to 80°C is put in the mold; the mixture is pressed at 15 MPa when a surface temperature of the mold reaches 140°C; the mixture is removed from the mold and molded into a sheet shape by pressing at a pressure of 1 MPa or less by the hot press machine set to 200°C; a specific gravity of the obtained sheet-shaped molded body is measured; and the residual void ratio of the hollow particles is calculated by the following formula (D):

   $$\text{residual void ratio (\%)} = \{(c-a)/(c-b)\} \times 100 \quad \text{Formula (D)}$$

   symbols in the formula (D) mean the following:

   a: the specific gravity of the sheet-shaped molded body after the press molding
   b: the specific gravity (a calculated value) of the molded body with the premise that the voids were maintained
   c: the specific gravity (a calculated value) of the molded body with the premise that all the hollow particles collapsed.

3. The hollow particle-containing elastomer composition according to Claim 1 or 2, wherein a void ratio of the hollow particles is 50% or more.

4. The hollow particle-containing elastomer composition according to any one of Claims 1 to 3, wherein a volume average particle diameter of the hollow particles is 5.0 $\mu$m or more and 40.0 $\mu$m or less.

5. The hollow particle-containing elastomer composition according to any one of Claims 1 to 4, wherein the polymer contains, as the crosslinkable monomer unit, a trifunctional or higher-functional crosslinkable monomer unit derived from a trifunctional or higher-functional crosslinkable monomer, and a content of the trifunctional or higher-functional crosslinkable monomer unit is 10 parts by mass or more and 50 parts by mass or less in 100 parts by mass of all the monomer units of the polymer.

6. The hollow particle-containing elastomer composition according to any one of Claims 1 to 5, wherein the polymer contains, as the crosslinkable monomer unit, a difunctional crosslinkable monomer unit derived from a difunctional crosslinkable monomer and a trifunctional or higher-functional crosslinkable monomer unit derived from a trifunctional or higher-functional crosslinkable monomer.

7. The hollow particle-containing elastomer composition according to Claim 6, wherein, a content of the trifunctional or higher-functional crosslinkable monomer unit is 5 parts by mass or more and 40 parts by mass or less in a total 100 parts by mass of the difunctional crosslinkable monomer unit and the trifunctional or higher-functional crosslinkable monomer unit.

8. The hollow particle-containing elastomer composition according to any one of Claims 1 to 7, wherein the base material elastomer is at least one selected from the group consisting of ethylene-$\alpha$-olefin-non-conjugated diene copolymer rubber, butadiene rubber, styrene-butadiene rubber, natural rubber, isoprene rubber, nitrile rubber, hydrogenated nitrile rubber, butyl rubber, fluorine rubber, silicone rubber, acrylonitrile-butadiene rubber, chloroprene rubber, acrylic rubber, chloro-sulfonated polyethylene rubber, chlorinated polyethylene rubber, urethane rubber, isobutylene-isoprene rubber, polysulfide rubber, propylene oxide rubber and epichlorohydrin rubber.

9. The hollow particle-containing elastomer composition according to Claim 8, wherein at least a part of the base material elastomer is at least one selected from the group consisting of ethylene-$\alpha$-olefin-non-conjugated diene copolymer rubber, butadiene rubber and styrene-butadiene rubber.

10. The hollow particle-containing elastomer composition according to any one of Claims 1 to 9, wherein the hollow particle-containing elastomer composition contains 35 parts by mass to 100 parts by mass of a plasticizer with respect to 100 parts by mass of the base material elastomer.

11. The hollow particle-containing elastomer composition according to Claim 10, wherein at least a part of the base material elastomer is at least one selected from the group consisting of butadiene rubber and styrene-butadiene rubber, and at least a part of the plasticizer is a polymer having a reaction active site that can bind to the base material elastomer and having a weight average molecular weight of 1000 or more and 100000 or less.

12. The hollow particle-containing elastomer composition according to any one of Claims 1 to 11, wherein a Mooney viscosity (ML(1+4)100°C) of the base material elastomer, which is measured in accordance with JIS K6300, is 20 or more and 75 or less.

13. The hollow particle-containing elastomer composition according to any one of Claims 1 to 12, wherein a content of a styrene monomer unit contained in the base material elastomer is 0% by mass or more and 60% by mass or less.

14. A method for producing a hollow particle-containing elastomer composition comprising at least a base material elastomer and hollow particles,
the method comprising:

preparing a raw material mixture containing at least a base material elastomer and hollow particles and having a storage elastic modulus G' at 60°C of 2.5 MPa or less, the hollow particles having a shell and a hollow portion surrounded by the shell, the shell comprising a resin which is a polymer containing 50 parts by mass or more of a crosslinkable monomer unit in 100 parts by mass of all monomer units, and the storage elastic modulus being obtained by dynamic viscoelasticity measurement that is carried out after a homogenization treatment of blended components,
preliminarily kneading the raw material mixture by a closed-type kneader at a temperature at which the storage elastic modulus G', which is obtained by the dynamic viscoelasticity measurement carried out after the homogenization treatment, becomes 2.5 MPa or less, and
kneading the raw material mixture at a temperature at which the storage elastic modulus G', which is obtained by the dynamic viscoelasticity measurement carried out after the homogenization treatment, becomes 2.5 MPa or less, just after the preliminarily kneading or after the raw material mixture is preliminarily heated at a temperature at which the storage elastic modulus G', which is obtained by the dynamic viscoelasticity measurement carried out after the homogenization treatment, becomes 2.5 MPa or less.

15. The method for producing the hollow particle-containing elastomer composition according to Claim 14, wherein, in the preliminarily kneading, the raw material mixture is preliminarily kneaded by a closed-type kneader at a kneading temperature of 100°C or more.

16. The method for producing the hollow particle-containing elastomer composition according to Claim 14 or 15, wherein, when the preliminary heating is absent, the kneading of the raw material mixture is started within 10 minutes after the preliminary kneading.

17. The method for producing the hollow particle-containing elastomer composition according to any one of Claims 14 to 16, wherein a preliminary heating temperature is 60°C or more.

18. The method for producing the hollow particle-containing elastomer composition according to any one of Claims 14 to 17, wherein a kneading temperature is 60°C or more.

19. The method for producing the hollow particle-containing elastomer composition according to any one of Claims 14 to 18, wherein the kneading is carried out by roll kneading.

20. The method for producing the hollow particle-containing elastomer composition according to any one of Claims 14 to 19, wherein the hollow particles have a residual void ratio of 80% or more, which is measured by the following press test:

    [press test]

    a mixture of a polypropylene resin and the hollow particles at a mass ratio of 90:10 (polypropylene resin : hollow particles) is melted and mixed at 200°C; the mixture is poured into a mold for a hot press machine, heated at 200°C for 15 minutes, and then stirred; the mold is placed on the hot press machine set to 80°C; a cylinder heated to 80°C is put in the mold; the mixture is pressed at 15 MPa when a surface temperature of the mold reaches 140°C; the mixture is removed from the mold and molded into a sheet shape by pressing at a pressure of 1 MPa or less by the hot press machine set to 200°C; a specific gravity of the obtained sheet-shaped molded body is measured; and the residual void ratio of the hollow particles is calculated by the following formula (D):

    $$\text{residual void ratio (\%)} = \{(c-a)/(c-b)\} \times 100 \quad \text{Formula (D)}$$

    symbols in the formula (D) mean the following:

    a: the specific gravity of the sheet-shaped molded body after the press molding
    b: the specific gravity (a calculated value) of the molded body with the premise that the voids were maintained
    c: the specific gravity (a calculated value) of the molded body with the premise that all the hollow particles collapsed.

21. The method for producing the hollow particle-containing elastomer composition according to any one of Claims 14 to 20, wherein a void ratio of the hollow particles is 50% or more.

22. The method for producing the hollow particle-containing elastomer composition according to any one of Claims 14 to 21, wherein a volume average particle diameter of the hollow particles is 5.0 $\mu$m or more and 40.0 $\mu$m or less.

23. The method for producing the hollow particle-containing elastomer composition according to any one of Claims 14 to 22, wherein the polymer contains, as the crosslinkable monomer unit, a trifunctional or higher-functional crosslinkable monomer unit derived from a trifunctional or higher-functional crosslinkable monomer, and a content of the trifunctional or higher-functional crosslinkable monomer unit is 10 parts by mass or more and 50 parts by mass or less in 100 parts by mass of all the monomer units of the polymer.

24. The method for producing the hollow particle-containing elastomer composition according to any one of Claims 14 to 23, wherein the polymer contains, as the crosslinkable monomer unit, a difunctional crosslinkable monomer unit derived from a difunctional crosslinkable monomer and a trifunctional or higher-functional crosslinkable monomer unit derived from a trifunctional or higher-functional crosslinkable monomer.

25. The method for producing the hollow particle-containing elastomer composition according to Claim 24, wherein a content of the trifunctional or higher-functional crosslinkable monomer unit is 5 parts by mass or more and 40 parts by mass or less in a total 100 parts by mass of the difunctional crosslinkable monomer unit and the trifunctional or higher-functional crosslinkable monomer unit.

26. The method for producing the hollow particle-containing elastomer composition according to any one of Claims 14 to 25, wherein the base material elastomer is at least one selected from the group consisting of ethylene-$\alpha$-olefin-non-conjugated diene copolymer rubber, butadiene rubber, styrene-butadiene rubber, natural rubber, isoprene rubber, nitrile rubber, hydrogenated nitrile rubber, butyl rubber, fluorine rubber, silicone rubber, acrylonitrile-butadiene rubber, chloroprene rubber, acrylic rubber, chloro-sulfonated polyethylene rubber, chlorinated polyethylene rubber, urethane rubber, isobutylene-isoprene rubber, polysulfide rubber, propylene oxide rubber and epichlorohydrin rubber.

27. The method for producing the hollow particle-containing elastomer composition according to Claim 26, wherein at least a part of the base material elastomer is at least one selected from the group consisting of ethylene-$\alpha$-olefin-non-conjugated diene copolymer rubber, butadiene rubber and styrene-butadiene rubber.

28. The method for producing the hollow particle-containing elastomer composition according to any one of Claims 14 to 27, wherein the raw material mixture contains 35 parts by mass to 100 parts by mass of a plasticizer with respect to 100 parts by mass of the base material elastomer.

29. The method for producing the hollow particle-containing elastomer composition according to Claim 28, wherein at least a part of the base material elastomer is at least one selected from the group consisting of butadiene rubber and styrene-butadiene rubber, and at least a part of the plasticizer is a polymer having a reaction active site that can bind to the base material elastomer and having a weight average molecular weight of 1000 or more and 100000 or less.

30. The method for producing the hollow particle-containing elastomer composition according to any one of Claims 14 to 29, wherein a Mooney viscosity (ML(1+4)100°C) of the base material elastomer, which is measured in accordance with JIS K6300, is 20 or more and 75 or less.

31. The method for producing the hollow particle-containing elastomer composition according to any one of Claims 14 to 30, wherein a content of a styrene monomer unit contained in the base material elastomer is 0% by mass or more and 60% by mass or less.

[FIG. 1]

[FIG. 2]

## INTERNATIONAL SEARCH REPORT

International application No.

**PCT/JP2023/019464**

| A. | CLASSIFICATION OF SUBJECT MATTER |
| --- | --- |

*C08J 9/32*(2006.01)i; *C08L 21/00*(2006.01)i
FI: C08J9/32 CEQ; C08L21/00

According to International Patent Classification (IPC) or to both national classification and IPC

| B. | FIELDS SEARCHED |
| --- | --- |

Minimum documentation searched (classification system followed by classification symbols)

C08J9/00-9/42; C08L; C08K

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2021/112110 A1 (NIPPON ZEON CO.) 10 June 2021 (2021-06-10)<br>entire text | 1-31 |
| A | WO 2017/014064 A1 (MATSUMOTO YUSHI-SEIYAKU CO., LTD.) 26 January 2017 (2017-01-26)<br>entire text | 1-31 |
| A | JP 10-60151 A (KINYOSHA KK) 03 March 1998 (1998-03-03)<br>entire text | 1-31 |
| A | JP 11-130916 A (MITSUBOSHI BELTING LTD.) 18 May 1999 (1999-05-18)<br>entire text | 1-31 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 August 2023** | **22 August 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/019464**

| Patent document cited in search report | | | Publication date (day/month/year) | Patent family member(s) | | | Publication date (day/month/year) |
|---|---|---|---|---|---|---|---|
| WO | 2021/112110 | A1 | 10 June 2021 | US | 2022/0410111 | A1 | |
| | | | | EP | 4071187 | A1 | |
| | | | | CN | 114729088 | A | |
| | | | | KR | 10-2022-0114530 | A | |
| WO | 2017/014064 | A1 | 26 January 2017 | US | 2018/0208733 | A1 | |
| | | | | CN | 107849286 | A | |
| | | | | KR | 10-2018-0034504 | A | |
| JP | 10-60151 | A | 03 March 1998 | (Family: none) | | | |
| JP | 11-130916 | A | 18 May 1999 | (Family: none) | | | |

Form PCT/ISA/210 (patent family annex) (January 2015)

## REFERENCES CITED IN THE DESCRIPTION

### Patent documents cited in the description

- JP 6116787 B
- WO 2020261926 A
- WO 2021112110 A

### Non-patent literature cited in the description

- Kagaku Binran, Kiso Hen. Maruzen Publishing Co., Ltd., 30 September 1993, II-498-II-503